(19) Europäisches Patentamt
European Patent Office
Office européen des brevets

(11) EP 4 596 624 A1

(12) **EUROPEAN PATENT APPLICATION**
published in accordance with Art. 153(4) EPC

(43) Date of publication:
**06.08.2025 Bulletin 2025/32**

(21) Application number: **23871431.5**

(22) Date of filing: **31.07.2023**

(51) International Patent Classification (IPC):
***C08L 53/02*** (2006.01) ***C08K 5/01*** (2006.01)
***C08L 23/00*** (2006.01) ***C08L 23/06*** (2006.01)
***C08L 23/12*** (2006.01) ***C08L 101/12*** (2006.01)

(52) Cooperative Patent Classification (CPC):
**C08K 5/01; C08L 23/00; C08L 23/06; C08L 23/12; C08L 53/02; C08L 101/12**

(86) International application number:
**PCT/JP2023/027887**

(87) International publication number:
**WO 2024/070188 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 JP 2022159143**

(71) Applicant: **Kuraray Co., Ltd.**
**Kurashiki-shi, Okayama 710-0801 (JP)**

(72) Inventors:
- **KONISHI, Daisuke**
  **Kamisu-shi, Ibaraki 314-0197 (JP)**
- **SASAKI, Hiromitsu**
  **Kamisu-shi, Ibaraki 314-0197 (JP)**
- **KANEKO, Shuhei**
  **Kamisu-shi, Ibaraki 314-0197 (JP)**
- **TOMISHIMA, Yuta**
  **Kamisu-shi, Ibaraki 314-0197 (JP)**
- **SEKIGUCHI, Takahiro**
  **Kamisu-shi, Ibaraki 314-0197 (JP)**

(74) Representative: **Müller-Boré & Partner Patentanwälte PartG mbB**
**Friedenheimer Brücke 21**
**80639 München (DE)**

# (54) RESIN COMPOSITION AND MOLDED ARTICLE

(57) A resin composition containing a material capable of reducing an environmental load and having excellent moldability, and a molded body obtained by using the resin composition are provided. A resin composition including: a block copolymer (I) including a polymer block (a1) containing a structural unit derived from an aromatic vinyl compound and a polymer block (a2) containing a structural unit derived from a conjugated diene compound, and a plasticizer (II) derived from biomass that does not have a carboxy group, in which the plasticizer (II) has a biobased content of 70% by mass or more.



Processed by Luminess, 75001 PARIS (FR)

## Description

### Technical Field

The present invention relates to a resin composition and a molded body, and particularly relates to a resin composition containing a material capable of reducing an environmental load and having excellent moldability, and a molded body obtained by using the resin composition.

### Background Art

Thermoplastic resins are widely used for various packaging materials, home electric appliances, machine parts, automobile parts, industrial parts, and the like because they are lightweight and have excellent moldability, and some of them are also excellent in strength, heat resistance, and the like. In addition, there is an increasing demand for using a biomass-derived raw material for these members due to an increase in environmental consciousness.

A technique has been disclosed in which a plant-derived plasticizer or a vegetable oil (sunflower oil, flaxseed oil) is used as a biomass-derived raw material to impart various physical properties while being aware of reducing the environmental load (see, for example, PTL 1).

### Citation List

### Patent Literature

PTL 1: JP2019-529688A

### Summary of Invention

### Technical Problem

However, in the case of using the plant-derived plasticizer described in PTL 1, the biobased content is low and the reduction of the environmental load is not sufficient, and in the case of using a vegetable oil, mixing with a resin component is difficult and oil bleeding occurs.

Therefore, an object of the present invention is to provide a resin composition containing a material capable of reducing an environmental load and having excellent moldability, and a molded body obtained by using the resin composition.

### Solution to Problem

As a result of intensive studies to solve the above problem, the present inventors arrived at the present invention described below and found that the above problem can be solved.

That is, the present invention is as follows.

[1] A resin composition including: a block copolymer (I) including a polymer block (a1) containing a structural unit derived from an aromatic vinyl compound and a polymer block (a2) containing a structural unit derived from a conjugated diene compound, and a plasticizer (II) derived from biomass that does not have a carboxy group, in which the plasticizer (II) has a biobased content of 70% by mass or more.

[2] The resin composition according to [1], in which the plasticizer (II) has a kinematic viscosity at 40°C of 100.0 cSt or less.

[3] The resin composition according to [1] or [2], in which the plasticizer (II) is at least one of a compound represented by the following general formula (1) and a compound represented by the following general formula (2):

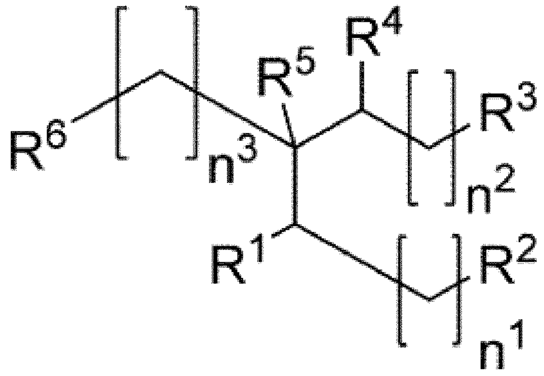

・・・General Formula (1)

in which, in the general formula (1), $n^1$ to $n^3$ are each independently 1 or 3, $R^1$ to $R^6$ are each independently hydrogen atoms or unsubstituted hydrocarbon groups, the total number of carbon atoms of $R^1$ and $R^2$ is 14, the total number of carbon atoms of $R^3$ and $R^4$ is 14, the total number of carbon atoms of $R^5$ and $R^6$ is 14, and $R^1$ to $R^6$ may have a branched structure; and

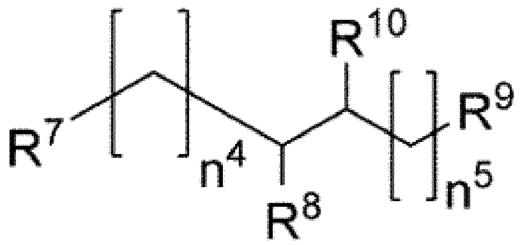

・・・General Formula (2)

in which, in the general formula (2), $n^4$ and $n^5$ are each independently 1 or 3, $R^7$ to $R^{10}$ are each independently hydrogen atoms or unsubstituted hydrocarbon groups, the total number of carbon atoms of $R^7$ and $R^8$ is 14, the total number of carbon atoms of $R^9$ and $R^{10}$ is 14, and $R^7$ to $R^{10}$ may have a branched structure.

[4] The resin composition according to any of [1] to [3], in which the aromatic vinyl compound in the polymer block (a1) in the block copolymer (I) is at least one selected from the group consisting of styrene, α-methylstyrene, and 4-methylstyrene.
[5] The resin composition according to any of [1] to [4], in which a content of the aromatic vinyl compound in the polymer block (a1) in the block copolymer (I) is 1 to 65% by mass.
[6] The resin composition according to any of [1] to [5], in which a weight average molecular weight of the block copolymer (I) determined by gel permeation chromatography in terms of standard polystyrene is 50,000 to 600,000.
[7] The resin composition according to any of [1] to [6], in which a vinyl bonding amount in the polymer block (a2) of the block copolymer (I) is 1.0 to 40.0 mol%.
[8] The resin composition according to any of [1] to [7], in which a hydrogenation rate of a carbon-carbon double bond in a structural unit derived from a conjugated diene compound in the block copolymer (I) is 5.0 mol% or more.
[9] The resin composition according to [8], in which a hydrogenation rate of a carbon-carbon double bond in a structural unit derived from a conjugated diene compound in the block copolymer (I) is 30.0 mol% or more.
[10] The resin composition according to [9], in which a hydrogenation rate of a carbon-carbon double bond in a structural unit derived from a conjugated diene compound in the block copolymer (I) is 70.0 mol% or more.
[11] The resin composition according to any of [1] to [10], including 1 to 1500 parts by mass of the plasticizer (II) with respect to 100 parts by mass of the block copolymer (I).
[12] The resin composition according to any of [1] to [11], in which a polyolefin-based resin (III) is contained in an amount of 1 to 200 parts by mass with respect to 100 parts by mass of the block copolymer (I).
[13] The resin composition according to [12], in which the polyolefin-based resin (III) includes polyethylene and/or polypropylene.
[14] The resin composition according to [12], in which the polyolefin-based resin (III) is polypropylene.

[15] The resin composition according to [12], in which the polyolefin-based resin (III) is polyethylene.
[16] The resin composition according to any of [1] to [15], including 1 to 300 parts by mass of a tackifier (IV) with respect to 100 parts by mass of the block copolymer (I).
[17] The resin composition according to any of [1] to [16], in which the resin composition has a biobased content of 15% by mass or more.
[18] A molded body obtained by using the resin composition according to any of [1] to [17]. Advantageous Effects of Invention

According to the present invention, it is possible to provide a resin composition containing a material capable of reducing an environmental load and having excellent moldability, and a molded body obtained by using the resin composition.

Brief Description of Drawings

Fig. 1 is a diagram for explaining a tensile test (going stress, returning stress, and stress relaxation) of a film as a molded body obtained by using a resin composition of the present invention.

Description of Embodiments

Hereinafter, one example of an embodiment of the present invention is described. However, the embodiment shown below is an example for embodying the technical idea of the present invention, and the present invention is not limited to the following description.
An embodiment obtained by arbitrarily selecting or an embodiment obtained by arbitrarily combining the matter(s) described in the present specification is also included in the present invention.
In the present specification, a preferable definition may be arbitrarily selected, and it may be said that a combination of preferable definitions is more preferable.
In the present specification, the description "XX to YY" means "XX or more and YY or less".
In the present specification, with respect to a preferable numerical range (for example, a range of content or the like), the lower limit value and the upper limit value described in a stepwise manner may be each independently combined. For example, from the description "preferably 10 to 90, more preferably 30 to 60", the "preferable lower limit value (10)" and the "more preferable upper limit value (60)" may be combined to obtain "10 to 60".
Further, in the present specification, the "biobased content" is an indicator showing the content ratio of a bio-derived substance in a target substance, which is measured in accordance with ASTM D6866-21. For example, the "biobased content of the resin composition" means the content ratio of the bio-derived raw material in the resin composition, which is measured according to ASTM D6866-21. The "biobased content of a resin" means the content ratio of the bio-derived raw material in the resin, which is measured in accordance with ASTM D6866-21.

<Resin Composition>

The resin composition of the present embodiment contains a block copolymer (I) and a plasticizer (II), and further contains a polyolefin-based resin (III), a tackifier (IV), and an additive as necessary.

[Block Copolymer (I)]

By containing the block copolymer (I), the resin composition of the present embodiment has good flexibility, is likely to suppress a decrease in physical properties at a low temperature, and can exhibit excellent moldability.
The block copolymer (I) includes a polymer block (a1) containing a structural unit derived from an aromatic vinyl compound, and a polymer block (a2) containing a structural unit derived from a conjugated diene compound (provided that the polymer block (a1) is excluded).
The block copolymer (I) may be used alone or in combination of two or more kinds thereof.

(Polymer Block (a1))

The polymer block (a1) in the block copolymer (I) contains a structural unit derived from an aromatic vinyl compound. Examples of such an aromatic vinyl compound include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl) styrene, 1-vinylnaphthalene, 2-vinylnaphthalene, vinylanthracene, N,N-diethyl-4-aminoethylstyrene, vinylpyridine, 4-methoxystyrene,

monochlorostyrene, dichlorostyrene, and divinylbenzene. These aromatic vinyl compounds may be used alone or in combination of two or more kinds thereof. Among these, styrene, α-methylstyrene, and 4-methylstyrene are preferable, and styrene is more preferable.

The polymer block (a1) may contain a structural unit derived from a monomer other than the aromatic vinyl compound, for example, another monomer such as a monomer constituting the polymer block (a2) mentioned later. Note that the content of the structural unit derived from the aromatic vinyl compound in the polymer block (a1) is preferably 70% by mass or more, more preferably 80% by mass or more, further more preferably 90% by mass or more, still further more preferably 95% by mass or more, and particularly preferably 100% by mass.

Further, the content of the polymer block (a1) in the block copolymer (I) is preferably 1 to 65% by mass, more preferably 5 to 60% by mass, further more preferably 5 to 50% by mass, still further more preferably 10 to 40% by mass, and still further more preferably 10 to 35% by mass. When the content is 1% by mass or more, excellent moldability is easily exhibited in the resin composition. In addition, when the content is 65% by mass or less, it can be expected to exhibit tear strength, tensile properties, and the like while having sufficient flexibility. When the block copolymer (I) contains a plurality of polymer blocks (a1), the total amount of the plurality of polymer blocks (a1) is preferably within the above range.

(Polymer Block (a2))

The polymer block (a2) in the block copolymer (I) is a polymer block containing a structural unit derived from a conjugated diene compound.

Examples of the conjugated diene compound include isoprene, butadiene, farnesene, 2,3-dimethyl-butadiene, 2-phenyl-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, and chloroprene. These may be used alone or in combination of two or more kinds thereof.

Among these, isoprene, butadiene, farnesene, and myrcene are preferable, and isoprene, butadiene, and farnesene are more preferable.

The polymer block (a2) containing a structural unit derived from a conjugated diene compound may include a structural unit derived from only one of these conjugated diene compounds, or may include a structural unit derived from two or more of these conjugated diene compounds. In particular, it preferably includes a structural unit derived from butadiene, isoprene, or farnesene, or a structural unit derived from butadiene and isoprene.

The farnesene may be either α-farnesene or β-farnesene represented by the following formula (1), but is preferably β-farnesene from the viewpoint of ease of production of the block copolymer (I). Note that the α-farnesene and β-farnesene may be used in combination.

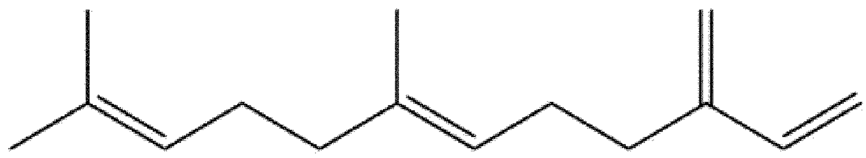

(1)

The polymer block (a2) containing a structural unit derived from a conjugated diene compound is a polymer block containing preferably 70% by mass or more of the structural unit derived from a conjugated diene compound, more preferably 80% by mass or more of the structural unit, further more preferably 90% by mass or more of the structural unit, further more preferably 95% by mass or more of the structural unit, and particularly preferably 100% by mass of the structural unit. The polymer block (a2) may have only a structural unit derived from a conjugated diene compound, but may have a structural unit derived from other copolymerizable monomers together with the structural unit, as long as the present invention is not hindered. Examples of other copolymerizable monomers include styrene, α-methylstyrene, and 4-methylstyrene. **In** the case of having a structural unit derived from other copolymerizable monomers, the ratio thereof is preferably 20% by mass or less, more preferably 10% by mass or less, and further more preferably 5% by mass or less, with respect to the total amount of the structural unit derived from the conjugated diene compound and the structural unit derived from other copolymerizable monomers.

(Polymer Block (a3))

The block copolymer (I) may further include a polymer block (a3) containing a structural unit derived from a conjugated diene compound, in addition to the polymer block (a1) and the polymer block (a2) mentioned above.

Note that the block (a2) and the block (a3) are not the same polymer block.

Examples of the conjugated diene compound constituting the structural unit derived from a conjugated diene compound include the same conjugated diene compound as that constituting the structural unit derived from a conjugated

diene compound in the polymer block (a2) mentioned above, and preferable examples thereof are also the same.

Further, the polymer block (a3) may contain a structural unit other than the structural unit derived from a conjugated diene compound.

The content of the structural unit derived from a conjugated diene compound in the polymer block (a3) is preferably 70 to 100% by mass, more preferably 80 to 100% by mass, further more preferably 90 to 100% by mass, still further more preferably 95 to 100% by mass, and particularly preferably 100% by mass.

(Bonding Form)

The block copolymer (I) is a block copolymer containing at least one of each of the polymer block (a1) and the polymer block (a2).

The bonding form of the polymer block (a1) and the polymer block (a2) is not particularly limited, and may be linear, branched, radial, or a combination of two or more thereof. Among these, a form in which each block is linearly bonded is preferable.

Examples of the linear bonding form may include a bonding form represented by $(A\text{-}B)_l$, $A\text{-}(B\text{-}A)_m$, or $B\text{-}(A\text{-}B)_n$ when the polymer block (a1) is represented by A and the polymer block (a2) is represented by B. Note that the l, m, and n each independently represent an integer of 1 or more.

When the block copolymer (I) contains at least one of each of the polymer block (a1) and the polymer block (a2), it is preferably a triblock copolymer represented by A-B-A, which is a bonding form having a block of the polymer block (a1), the polymer block (a2), and the polymer block (a1) in this order.

That is, the block copolymer (I) is preferably a triblock copolymer represented by A-B-A, and the triblock copolymer may be an unhydrogenated product or a hydrogenated product.

Further, the block copolymer (I) may be a block copolymer containing at least two polymer blocks (a1), at least one polymer block (a2), and at least one polymer block (a3).

When the block copolymer(I) contains the polymer block (a1), the polymer block (a2), and the polymer block (a3), the bonding form of the plurality of polymer blocks is not particularly limited, and may be linear, branched, radial, or a combination of two or more thereof. Among these, a form in which each block is linearly bonded is preferable.

Here, in the present specification, when the same kind of polymer blocks are linearly bonded with a divalent coupling agent or the like therebetween, the entire bonded polymer blocks are treated as one polymer block. Accordingly, a polymer block that should have otherwise been strictly denoted as A-X-A (X represents a coupling agent residual group) is denoted as A as a whole. In the present specification, since this kind of polymer block containing a coupling agent residual group is treated as described above, for example, a block copolymer containing a coupling agent residual group and to be strictly expressed as B-A-C-X-C-A-B is expressed as B-A-C-A-B and is treated as an example of a pentablock copolymer.

In addition, the two or more polymer blocks (a1) in the above-mentioned block copolymer (I) may be polymer blocks each including the same structural unit or polymer blocks each including different structural units. Similarly, when the block copolymer (I) has two or more polymer blocks (a2) or two or more polymer blocks (a3), each of the polymer blocks may be a polymer block including the same structural unit or a polymer block including a different structural unit. For example, in the two polymer blocks (a1) in the triblock copolymer represented by A-B-A, the respective aromatic vinyl compounds may be of the same kind or different kinds.

When the block copolymer (I) contains the polymer block (a1) and the polymer block (a2) but does not include the polymer block (a3), the mass ratio [(a1)/(a2)] of the polymer block (a1) to the polymer block (a2) is preferably 1/99 to 65/35, more preferably 5/95 to 60/40, further more preferably 10/90 to 50/50, still further more preferably 15/85 to 40/60, and still further more preferably 15/85 to 35/65. Within the above range, a resin composition having excellent flexibility and further more excellent moldability can be obtained.

When the block copolymer (I) contains the polymer block (a1), the polymer block (a2), and the polymer block (a3), a mass ratio [(a1)/(a2)] of the polymer block (a1) to the polymer block (a2) is preferably 1/99 to 70/30, more preferably 5/95 to 60/40, further more preferably 10/90 to 50/50, still further more preferably 20/80 to 40/60, and still further more preferably 25/75 to 35/65. Within the above range, a resin composition having excellent flexibility and further more excellent moldability can be obtained.

In the block copolymer (I), the mass ratio of the polymer block (a1) to the total amount of the polymer block (a2) and the polymer block (a3) [(a1)/((a2)+(a3))] is preferably 1/99 to 65/35. The mass ratio [(a1)/((a2)+(a3))] is more preferably 5/95 to 60/40, further more preferably 10/90 to 40/60, still further more preferably 10/90 to 30/70, and still further more preferably 15/85 to 25/75.

When the block copolymer (I) contains the polymer block (a1) and the polymer block (a2) but does not contain the polymer block (a3), the total content of the polymer block (a1) and the polymer block (a2) in the block copolymer is preferably 80% by mass or more, more preferably 90% by mass or more, further more preferably 95% by mass or more, and still further more preferably 100% by mass. Examples of one embodiment of the block copolymer (I) include, a block copolymer consisting of at least one polymer block (a1) and at least one polymer block (a2). When the block copolymer (I)

contains the polymer block (a1) and the polymer block (a2) but does not contain the polymer block (a3), examples of a preferable embodiment of the block copolymer (I) include a (a1)-(a2) diblock copolymer, a (a1)-(a2)-(a1) triblock copolymer, a (a1)-(a2)-(a1)-(a2) tetrablock copolymer, a (a2)-(a1)-(a2)-(a1)-(a2) pentablock copolymer, a (a2)-(a1)-(a2)-(a1)-(a2)-(a1) hexablock copolymer, a multibranched-type block copolymer represented by $((a1)\text{-}(a2))_n$-X (X represents a coupling agent residual group, and n represents an integer of 2 or more), and a multibranched-type block copolymer represented by $((a2)\text{-}(a1)\text{-}(a2))_n$-X (X represents a coupling agent residual group, and n represents an integer of 2 or more), a (a1)-(a2) diblock copolymer, a (a1)-(a2)-(a1) triblock copolymer, a (a1)-(a2)-(a1)-(a2) tetrablock copolymer, and a (a2)-(a1)-(a2)-(a1)-(a2) pentablock copolymer are more preferable, a (a1)-(a2) diblock copolymer, a (a1)-(a2)-(a1) triblock copolymer, and a (a1)-(a2)-(a1)-(a2) tetrablock copolymer are further more preferable, and a (a1)-(a2)-(a1) triblock copolymer, and a (a1)-(a2)-(a1)-(a2) tetrablock copolymer are still further more preferable.

In addition, when the block copolymer (I) contains the polymer block (a1), the polymer block (a2), and the polymer block (a3), the total content of these polymer blocks (a1) to (a3) in the block copolymer is preferably 80% by mass or more, more preferably 90% by mass or more, further more preferably 95% by mass or more, and still further more preferably 100% by mass. Examples of one embodiment of the block copolymer (I) include a block copolymer composed of at least one polymer block (a1), at least one polymer block (a2), and at least one polymer block (a3).

(Polymer Block Composed of Other Monomers)

The block copolymer (I) may contain, in addition to the polymer block (a1), the polymer block (a2), and the polymer block (a3), a polymer block constituted of other monomers as long as the effect of the present invention is not inhibited.

Examples of such other monomers include a functional group-containing unsaturated compound such as acrylic acid, methacrylic acid, methyl acrylate, methyl methacrylate, acrylonitrile, methacrylonitrile, maleic acid, fumaric acid, crotonic acid, itaconic acid, 2-acryloylethanesulfonic acid, 2-methacryloylethanesulfonic acid, 2-acrylamido-2-methylpropanesulfonic acid, 2-methacrylamido-2-methylpropanesulfonic acid, vinylsulfonic acid, vinyl acetate, and methyl vinyl ether. These may be used alone or in combination of two or more kinds thereof.

When the block copolymer (I) has a polymer block composed of other monomers, the content thereof is preferably 10% by mass or less, and more preferably 5% by mass or less.

(Method for Producing Block Copolymer (I))

When the block copolymer (I) is, for example, a block copolymer containing the polymer block (a1) and the polymer block (a2), or a block copolymer containing the polymer block (a1), the polymer block (a2), and the polymer block (a3), it may be suitably produced by a polymerization step of obtaining a block copolymer by anionic polymerization. Further, when the block copolymer (I) is a hydrogenated block copolymer, it may be suitably produced by a step of hydrogenating the carbon-carbon double bond in the structural unit derived from the conjugated diene compound in the block copolymer.

((Polymerization Step))

The block copolymer (I) may be produced by a solution polymerization method, the methods described in JP2012-502135A and JP2012-502136A or the like. Among these, a solution polymerization method is preferable, and for example, a known method such as an ion polymerization method such as anionic polymerization or cationic polymerization, or a radical polymerization method may be applied.

Among these, the anionic polymerization method is preferable. In the anionic polymerization method, an aromatic vinyl compound and a conjugated diene compound are sequentially added in the presence of a solvent, an anionic polymerization initiator, and a Lewis base as needed to obtain a block copolymer.

Examples of the anionic polymerization initiator include an alkali metal such as lithium, sodium, and potassium; an alkaline earth metal such as beryllium, magnesium, calcium, strontium, and barium; a lanthanoid-based rare earth metal such as lanthanum and neodymium; and a compound containing the alkali metal, the alkaline earth metal and the lanthanoid-based rare earth metal.

Among these, a compound containing an alkali metal and an alkaline earth metal is preferable, and an organic alkali metal compound is more preferable.

Examples of the organic alkali metal compound include an organolithium compound such as methyllithium, ethyllithium, n-butyllithium, sec-butyllithium, t-butyllithium, hexyllithium, phenyllithium, stilbenelithium, dilithiomethane, dilithionaphthalene, 1,4-dilithiobutane, 1,4-dilithio-2-ethylcyclohexane, and 1,3,5-trilithiobenzene; sodium naphthalene; and potassium naphthalene.

Among these, an organolithium compound is preferable, n-butyllithium and sec-butyllithium are more preferable,

and sec-butyllithium is further more preferable. Note that the organic alkali metal compound may be reacted with a secondary amine such as diisopropylamine, dibutylamine, dihexylamine, or dibenzylamine and used as an organic alkali metal amide.

The used amount of the organic alkali metal compound used in the polymerization varies depending on the molecular weight of the block copolymer (I), but is usually in the range of 0.01 to 3% by mass with respect to the total amount of the aromatic vinyl compound and the conjugated diene compound.

The solvent is not particularly limited as long as it does not adversely affect the anionic polymerization reaction, and examples thereof include a saturated aliphatic hydrocarbon such as n-pentane, isopentane, n-hexane, n-heptane, and isooctane; a saturated alicyclic hydrocarbon such as cyclopentane, cyclohexane, and methylcyclopentane; and an aromatic hydrocarbon such as benzene, toluene, and xylene. These may be used alone or in combination of two or more kinds thereof. The used amount of the solvent is not particularly limited.

The Lewis base has a role of controlling a microstructure of the structural unit derived from a conjugated diene compound. Examples of such a Lewis base include an ether compound such as dibutyl ether, diethyl ether, tetrahydrofuran, dioxane, and ethylene glycol diethyl ether; pyridine; a tertiary amine such as N,N,N',N'-tetramethylethylenediamine and trimethylamine; an alkali metal alkoxide such as potassium t-butoxide; and a phosphine compound. When the Lewis base is used, the amount thereof is usually preferably in the range of 0.01 to 1000 molar equivalent with respect to 1 mol of the anionic polymerization initiator.

The temperature of the polymerization reaction is usually in the range of about -80°C to +150°C, preferably 0°C to 100°C, and more preferably 10°C to 90°C. The type of the polymerization reaction may be a batch type or a continuous type. The block copolymer (I) may be produced by continuously or intermittently supplying each monomer to the polymerization reaction liquid such that the amounts of the aromatic vinyl compound and the conjugated diene compound present in the polymerization reaction system fall within specific ranges, or by sequentially polymerizing each monomer in the polymerization reaction liquid such that it has a specific ratio.

The polymerization reaction may be terminated by adding an alcohol such as methanol or isopropanol as a polymerization terminator. The block copolymer may be isolated by pouring the obtained polymerization reaction liquid into a poor solvent such as methanol to precipitate the block copolymer, or by washing the polymerization reaction liquid with water, followed by separation and drying.

Examples of one preferable embodiment of the block copolymer (I) includes a structure having the polymer block (a1), the polymer block (a2), and the polymer block (a1) in this order. Therefore, a step of obtaining the block copolymer (I) by preparing the polymer block (a1), the polymer block (a2), and the polymer block (a1) in this order is preferable. Further, in the case of a hydrogenated product, it is more preferable to produce a hydrogenated block copolymer (I) by a method further including a step of hydrogenating the obtained block copolymer (I).

In the production of the block copolymer (I), a coupling agent may be used from the viewpoint of efficient production.

Examples of the coupling agent include divinylbenzene; a polyepoxy compound such as epoxidized 1,2-polybutadiene, epoxidized soybean oil, and tetraglycidyl-1,3-bisaminomethylcyclohexane; a halide such as tin tetrachloride, tetrachlorosilane, trichlorosilane, trichloromethylsilane, dichlorodimethylsilane, and dibromodimethylsilane; an ester compound such as methyl benzoate, ethyl benzoate, phenyl benzoate, diethyl oxalate, diethyl malonate, diethyl adipate, dimethyl phthalate, and dimethyl terephthalate; a carbonate ester compound such as dimethyl carbonate, diethyl carbonate, and diphenyl carbonate; an alkoxysilane compound such as diethoxydimethylsilane, trimethoxymethylsilane, triethoxymethylsilane, tetramethoxysilane, tetraethoxysilane, tetrabutoxysilane, tetrakis (2-ethylhexyloxy) silane, bis (triethoxysilyl) ethane, and 3-aminopropyltriethoxysilane; and 2,4-tolylene diisocyanate.

((Hydrogenation Step))

The block copolymer (I) may be converted into a hydrogenated block copolymer (I) by subjecting the block copolymer obtained by the above method to a step of hydrogenating it. One preferable embodiment of the block copolymer (I) is a hydrogenated block copolymer (I).

As the hydrogenation method, a known method may be used. For example, the hydrogenation reaction is performed in the presence of a Ziegler catalyst; a nickel, platinum, palladium, ruthenium, or rhodium metal catalyst supported on carbon, silica, diatomaceous earth, or the like; an organic metal complex having cobalt, nickel, palladium, rhodium, or ruthenium metal; or the like as a hydrogenation catalyst in a solution in which the block copolymer (I) is dissolved in a solvent that does not affect the hydrogenation reaction.

In the hydrogenation step, a hydrogenation catalyst may be added to the polymerization reaction liquid containing the block copolymer obtained by the method for producing the block copolymer (I) described above to perform a hydrogenation reaction. **In** the present invention, the hydrogenation catalyst is preferably palladium carbon in which palladium is supported on carbon.

In the hydrogenation reaction, the hydrogen pressure is preferably 0.1 to 20 MPa, the reaction temperature is

preferably 100 to 200°C, and the reaction time is preferably 1 to 20 hours.

The hydrogenation rate of the carbon-carbon double bond in the structural unit derived from a conjugated diene compound in the block copolymer (I) is preferably 5.0 mol% or more. From the viewpoint of heat resistance and weather resistance, the hydrogenation rate of the carbon-carbon double bond in the structural unit derived from a conjugated diene compound is more preferably 10.0 mol% or more, further more preferably 20.0 mol% or more, still further more preferably 25.0 mol% or more, and particularly preferably 30.0 mol% or more.

The hydrogenation rate of the carbon-carbon double bond in the structural unit derived from a conjugated diene compound in the block copolymer (I) is preferably 70.0 mol% or more. From the viewpoint of heat resistance and weather resistance, the hydrogenation rate of the carbon-carbon double bond in the structural unit derived from a conjugated diene compound is more preferably 75.0 mol% or more, further more preferably 80.0 mol% or more, still further more preferably 85.0 mol% or more, and particularly preferably 90.0 mol% or more. In an embodiment in which weather resistance is particularly important, the hydrogenation rate is preferably 93.0 mol% or more, more preferably 95.0 mol% or more, and further more preferably 97.0 mol% or more. The upper limit value of the hydrogenation rate is not particularly limited, and a block copolymer having a hydrogenation rate of substantially 100.0 mol% may also be preferably used. From the viewpoint of selectively and stably hydrogenating only the carbon-carbon double bond in the structural unit derived from the conjugated diene compound in the block copolymer (I), the upper limit value of the hydrogenation rate is preferably 99.7 mol% or less, and more preferably 99.5 mol% or less.

The hydrogenation rate may be calculated by measuring $^1$H-NMR of the block copolymer (I) before hydrogenation and the block copolymer (I) after hydrogenation.

Note that the hydrogenation rate is the hydrogenation rate of a carbon-carbon double bond in all structural units derived from the conjugated diene compound present in the block copolymer (I).

Examples of the carbon-carbon double bond in the structural unit derived from the conjugated diene compound present in the block copolymer (I) includes a carbon-carbon double bond in the structural unit derived from a conjugated diene compound in the polymer block (a2).

Note that, in the present specification, the polymer block (a2) and the polymer block (a3) in the hydrogenated block copolymer (I) are hydrogenated, but they are referred to as "polymer block (a2)" and "polymer block (a3)" in the same manner as before hydrogenation.

In the present embodiment, an unmodified block copolymer may be used, or a modified block copolymer may be used as described below.

In the case of the modified block copolymer, the block copolymer may be modified after the hydrogenation step. Examples of the functional group that may be introduced by modification include an amino group, an alkoxysilyl group, a hydroxy group, an epoxy group, a carboxy group, a carbonyl group, a mercapto group, an isocyanate group, and an acid anhydride group.

Examples of the method of modifying the block copolymer include a method of grafting using a modifier such as maleic anhydride to the hydrogenated block copolymer after isolation.

Further, the block copolymer may be modified before the hydrogenation step. Specific examples include a method of adding a coupling agent such as tin tetrachloride, tetrachlorosilane, dichlorodimethylsilane, dimethyldiethoxysilane, tetramethoxysilane, tetraethoxysilane, 3-aminopropyltriethoxysilane, tetraglycidyl-1,3-bisaminomethylcyclohexane, and 2,4-tolylene diisocyanate, which may react with a polymerization active terminal, a polymerization terminal modifier such as 4,4'-bis (diethylamino) benzophenone, and N-vinylpyrrolidone, or other modifiers described in JP2011-132298A, before adding a polymerization terminator.

The position at which the functional group is introduced may be a polymerization terminal or a side chain of the block copolymer. The functional group may be used alone or in combination of two or more kinds thereof. The modifier is preferably in the range of 0.01 to 10 molar equivalent with respect to 1 mole of the anionic polymerization initiator.

(Weight Average Molecular Weight and Molecular Weight Distribution)

The weight average molecular weight (Mw) of the block copolymer (I) is preferably 50,000 to 600,000, more preferably 100,000 to 500,000, and further more preferably 150,000 to 300,000 from the viewpoint of moldability.

The molecular weight distribution (Mw/Mn) of the block copolymer (I) is preferably 1 to 6, more preferably 1 to 4, further more preferably 1 to 3, and still further more preferably 1 to 2. When the molecular weight distribution is within the above range, the block copolymer (I) has a small variation in viscosity and is easy to handle.

Note that, in the present specification, the weight average molecular weight (Mw) and the molecular weight distribution (Mw/Mn) are values measured by the method described in Examples below.

The total weight average molecular weight (Mw) of the polymer block (a1) in the block copolymer (I) is preferably 2,000 to 100,000, more preferably 4,000 to 80,000, further more preferably 5,000 to 70,000, and still further more preferably 6,000 to 65,000, from the viewpoint of moldability.

When the structural unit constituting the polymer block (a2) in the block copolymer (I) is any one of an isoprene

unit, a butadiene unit, and a mixture unit of isoprene and butadiene, as the bonding form of each of isoprene and butadiene, it may be a 1,2-bond and a 1,4-bond in the case of butadiene, and a 1,2-bond, a 3,4-bond, and a 1,4-bond in the case of isoprene.

In the block copolymer (I), the total content of the 3,4-bond unit and the 1,2-bond unit in the polymer block (a2) (hereinafter, sometimes simply referred to as "vinyl bonding amount") is preferably 1.0 to 40.0 mol%, more preferably 1.0 to 35.0 mol%, further more preferably 1.0 to 30.0 mol%, and still further more preferably 1.0 to 25.0 mol%, may be 1.0 to 20.0 mol%, may be 1.0 to 15.0 mol%, and may be 1.0 to 10.0 mol%. Within the above range, it is suitable for suppressing decrease in physical properties at a low temperature.

Here, the vinyl bonding amount is the total content of the 3,4-bond unit and the 1,2-bond unit with respect to the total amount of the structural unit derived from butadiene and isoprene in the polymer block (a2), and is calculated by $^1$H-NMR measurement according to the method described in Examples.

[Plasticizer (II)]

By containing the plasticizer (II), the resin composition of the present embodiment has good moldability and fluidity.

Further, the resin composition of the present embodiment has good durability (compression set) by containing the plasticizer (II). As a mechanism of action in which durability (compression set) is good by containing the plasticizer (II), it may be assumed that since the plasticizer (II) is relatively low in viscosity, but has a high molecular weight and contains small amount of naphthene component and aromatic component, the polymer block (a1) in the block copolymer (I) is not eroded, the glass transition point is not reduced, and the durability at high temperatures is maintained.

The content of the plasticizer (II) in the resin composition of the present embodiment is not particularly limited, and is preferably 10% by mass or more, more preferably 15% by mass or more, and further more preferably 20% by mass or more.

Note that the resin composition of the present embodiment may contain at least the plasticizer (II), and may contain other plasticizers such as a vegetable oil or a synthetic plasticizer, but the other plasticizer is preferably a plasticizer that does not have a carboxy group.

When the total of the plasticizer (II) and the other plasticizer is 100 parts by mass, the content of the plasticizer (II) is preferably 40 parts by mass or more, more preferably 60 parts by mass or more, further more preferably 80 parts by mass or more, still further more preferably 90 parts by mass or more, particularly preferably 95 parts by mass or more, and most preferably 100 parts by mass.

The biobased content of the plasticizer (II) is not particularly limited as long as it is 70% by mass or more, but from the viewpoint of further reducing the environmental load, it is preferably 80% by mass or more, more preferably 85% by mass or more, further more preferably 90% by mass or more, still further more preferably 95% by mass or more, and most preferably 100% by mass.

The kinematic viscosity at 40°C of the plasticizer (II) is not particularly limited, but is preferably 100.0 cSt or less, more preferably 90.0 cSt or less, further more preferably 80.0 cSt or less, still further more preferably 70.0 cSt or less, and still further more preferably 60.0 cSt or less.

The melting point (pour point) of the plasticizer (II) is not particularly limited, but is preferably -70°C or higher, more preferably -60°C or higher, and further more preferably -50°C or higher, and is preferably 20°C or lower, more preferably 10°C or lower, and further more preferably 0°C or lower.

The plasticizer (II) is not particularly limited as long as it is a biomass-derived plasticizer that does not have a carboxy group and it has a biobased content of 70% by mass or more, and suitable examples thereof include a compound represented by the following general formula (1) and a compound represented by the following general formula (2). These may be used alone or in combination of two or more kinds thereof.

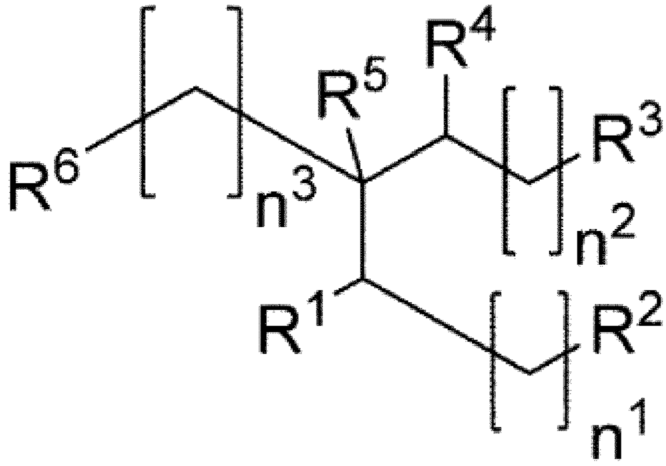

・・・General Formula (1)

Here, in the general formula (1), $n^1$ to $n^3$ are each independently 1 or 3, $R^1$ to $R^6$ are each independently hydrogen atoms or unsubstituted hydrocarbon groups, the total number of carbon atoms of $R^1$ and $R^2$ is 14, the total number of carbon atoms of $R^3$ and $R^4$ is 14, the total number of carbon atoms of $R^5$ and $R^6$ is 14, and $R^1$ to $R^6$ may have a branched structure.

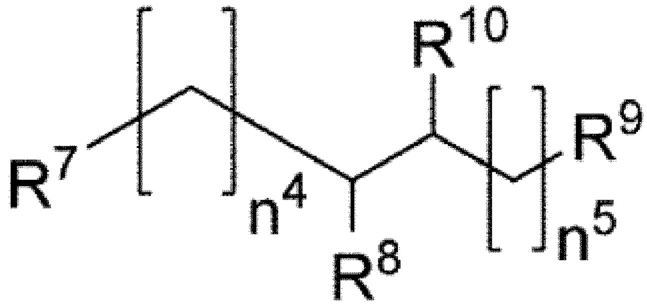

・・・General Formula (2)

Here, in the general formula (2), $n^4$ and $n^5$ are each independently 1 or 3, $R^7$ to $R^{10}$ are each independently hydrogen atoms or unsubstituted hydrocarbon groups, the total number of carbon atoms of $R^7$ and $R^8$ is 14, the total number of carbon atoms of $R^9$ and $R^{10}$ is 14, and $R^7$ to $R^{10}$ may have a branched structure.

(Specific Examples of Compound Represented by General Formula (1))

Specific examples of the compound represented by the general formula (1) include a compound represented by the following structural formulae (1-1) to (1-8).

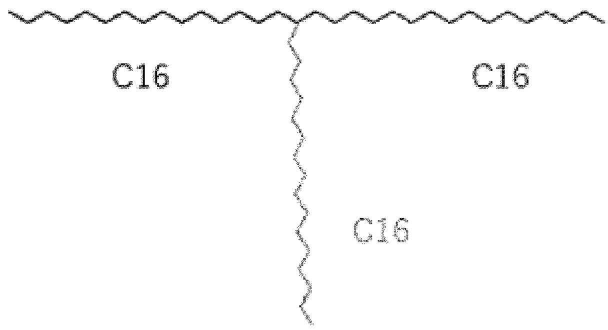

Structural Formula (1-1)

(The compound represented by the structural formula (1-1) is a compound in which, in the general formula (1), $R^1$=H, $R^2$=$C_{14}H_{29}$, $R^3$=$C_{14}H_{29}$, $R^4$=H, $R^5$=H, $R^6$=$C_{14}H_{29}$, $n^1$=1, $n^2$=1, and $n^3$=1.)

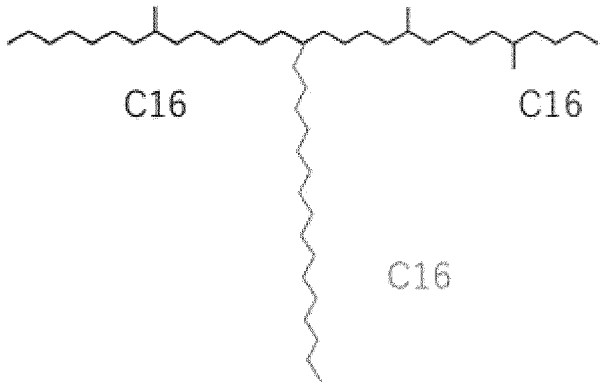

Structural Formula (1-2)

(The compound represented by the structural formula (1-2) is a compound in which, in the general formula (1), $R^1$=H, $R^2$=$C_{14}H_{29}$, $R^3$=$C_{14}H_{29}$ (branched), $R^4$=H, $R^5$=H, $R^6$=$C_{14}H_{29}$ (branched), $n^1$=1, $n^2$=1, and $n^3$=1.)

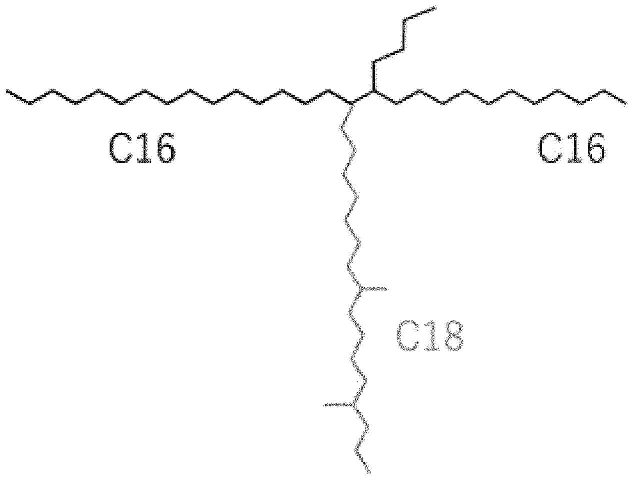

Structural Formula (1-3)

(The compound represented by the structural formula (1-3) is a compound in which, in the general formula (1), $R^1$=H, $R^2$=$C_{14}H_{29}$ (branched), $R^3$=$C_{10}H_{21}$, $R^4$=$C_4H_9$, $R^5$=H, $R^6$=$C_{14}H_{29}$, $n^1$=3, $n^2$=1, and $n^3$=1.)

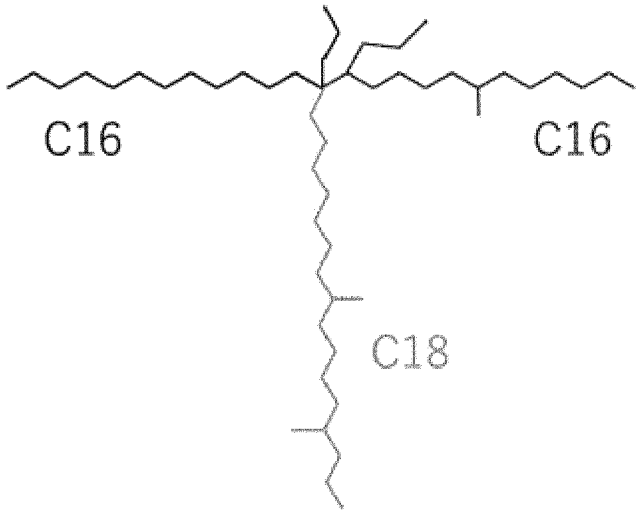

Structural Formula (1-4)

(The compound represented by the structural formula (1-4) is a compound in which, in the general formula (1), $R^1$=H, $R^2=C_{14}H_{29}$ (branched), $R^3=C_{11}H_{23}$ (branched), $R^4=C_3H_7$, $R^5=C_3H_7$, $R^6=C_{11}H_{23}$, $n^1$=3, $n^2$=1, $n^3$=1.)

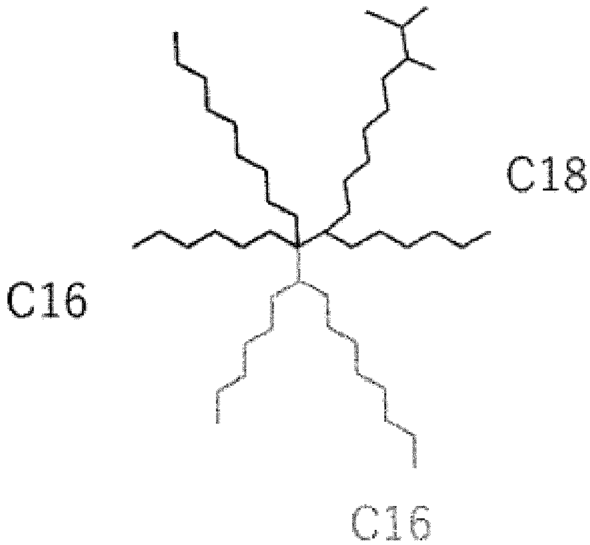

Structural Formula (1-5)

(The compound represented by the structural formula (1-5) is a compound in which, in the general formula (1), $R^1=C_6H_{13}$, $R^2=C_8H_{17}$, $R^3=C_3H_7$, $R^4=C_{11}H_{23}$ (branched), $R^5=C_9H_{19}$, $R^6=C_5H_{11}$, $n^1$=1, $n^2$=3, and $n^3$=1.)

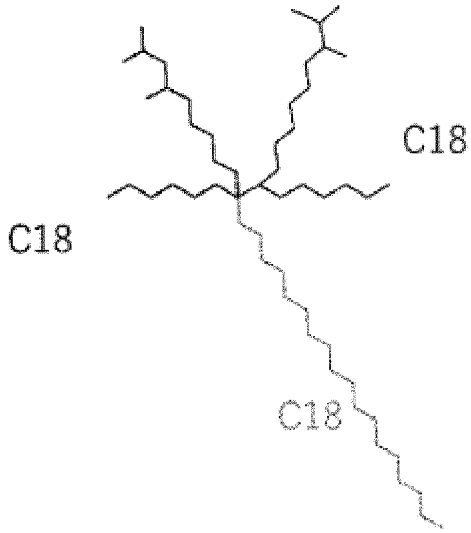

Structural Formula (1-6)

(The compound represented by the structural formula (1-6) is a compound in which, in the general formula (1), $R^1$=H, $R^2$=$C_{14}H_{29}$, $R^3$=$C_3H_7$, $R^4$=$C_{11}H_{23}$(branched), $R^5$=$C_{11}H_{23}$ (branched), $R^6$=$C_3H_7$, $n^1$=3, $n^2$=3, and $n^3$= 3.)

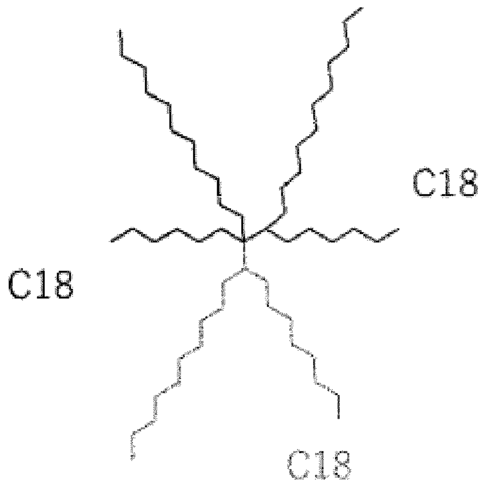

Structural Formula (1-7)

(The compound represented by the structural formula (1-7) is a compound in which, in the general formula (1), $R^1$=$C_{10}H_{21}$, $R^2$ =$C_4H_9$, $R^3$=$C_3H_7$, $R^4$=$C_{11}H_{23}$, $R^5$=$C_{11}H_{23}$, $R^6$=$C_3H_7$, $n^1$=3, $n^2$= 3, and $n^3$= 3.)

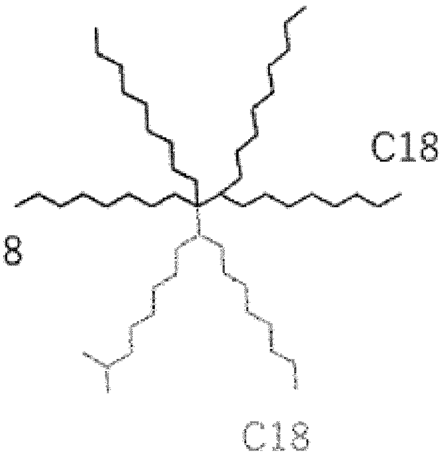

Structural Formula (1-8)

(The compound represented by the structural formula (1-8) is a compound in which, in the general formula (1), $R^1=C_9H_{19}$ (branched), $R^2=C_5H_{11}$, $R^3=C_5H_{11}$, $R^4=C_9H_{19}$, $R^5=C_9H_{19}$, $R^6=C_5H_{11}$, $n^1=3$, $n^2=3$, and $n^3=3$.)

(Specific Examples of Compound Represented by General Formula (2))

Specific examples of the compound represented by the general formula (2) include a compound represented by the following structural formulae (2-1) to (2-8).

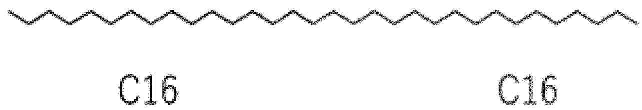

Structural Formula (2-1)

(The compound represented by the structural formula (2-1) is a compound in which, in the general formula (2), $R^7=C_{14}H_{29}$, $R^8=H$, $R^9=C_{14}H_{29}$, $R^{10}=H$, $n^4=1$, and $n^5=1$.)

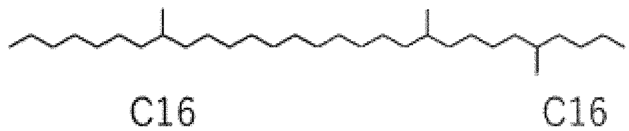

Structural Formula (2-2)

(The compound represented by the structural formula (2-2) is a compound in which, in the general formula (2), $R^7=C_{14}H_{29}$ (branched), $R^8=H$, $R^9=C_{14}H_{29}$ (branched), $R^{10}=H$, $n^4=1$, and $n^5=1$.)

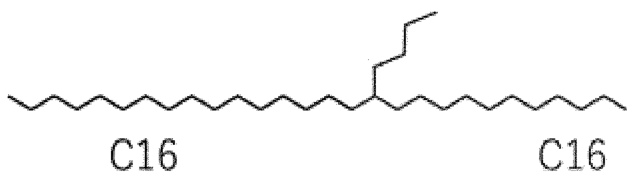

Structural Formula (2-3)

(The compound represented by the structural formula (2-3) is a compound, in which, in the general formula (2), $R^7=C_{14}H_{29}$, $R^8=H$, $R^9=C_{10}H_{21}$, $R^{10}=C_4H_9$, $n^4=1$, and $n^5=1$.)

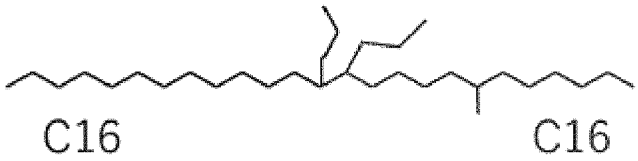

Structural Formula (2-4)

(The compound represented by the structural formula (2-4) is a compound in which, in the general formula (2), $R^7$=$C_{11}H_{23}$, $R^8$=$C_3H_7$, $R^9$=$C_{11}H_{23}$ (branched), $R^{10}$=$C_3H_7$, $n^4$=1, and $n^5$=1.)

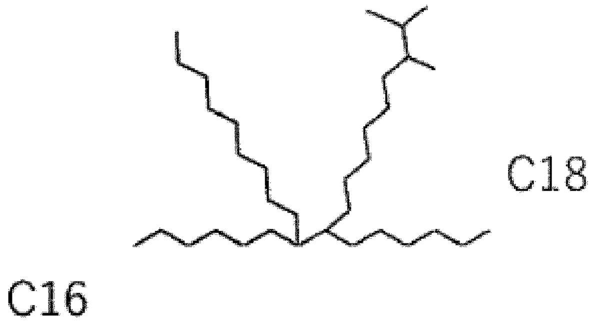

Structural Formula (2-5)

(The compound represented by the structural formula (2-5) is a compound in which, in the general formula (2), $R^7$=$C_5H_{11}$, $R^8$=$C_9H_{19}$, $R^9$=$C_3H_7$, $R^{10}$=$C_{11}H_{23}$ (branched), $n^4$=1, and $n^5$=3.)

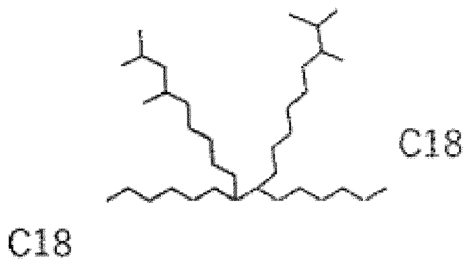

Structural Formula (2-6)

(The compound represented by the structural formula (2-6) is a compound in which, in the general formula (2), $R^7$=$C_3H_7$, $R^8$=$C_{11}H_{23}$ (branched), $R^9$=$C_3H_7$, $R^{10}$=$C_{11}H_{23}$(branched), $n^4$=3, and $n^5$=3.)

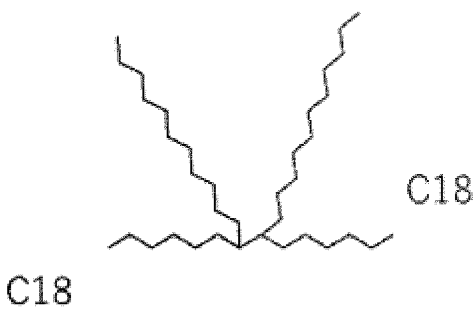

Structural Formula (2-7)

(The compound represented by the structural formula (2-7) is a compound in which, in the general formula (2), $R^7$=$C_3H_7$,

$R^8=C_{11}H_{23}$, $R^9=C_3H_7$, $R^{10}=C_{11}H_{23}$, $n^4=3$, and $n^5=3$.)

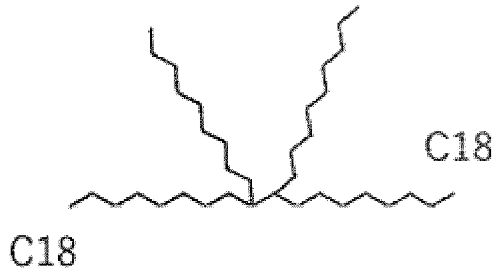

Structural Formula (2-8)

(The compound represented by the structural formula (2-8) is a compound in which, in the general formula (2), $R^7=C_5H_{11}$, $R^8=C_9H_{19}$, $R^9= C_5H_{11}$, $R^{10}=C_9H_{19}$, $n^4=3$, and $n^5=3$.)

(Vegetable Oil)

Examples of the vegetable oil include a plant-derived fat and oil such as castor oil, cottonseed oil, flaxseed oil, safflower oil, rapeseed oil, soybean oil, coconut oil, Japan wax, pine oil, corn oil, peanut oil, olive oil, palm oil, palm olein, and palm stearin, and a fat and oil such as transesterified oil, hydrogenated oil, and fractionated oil thereof. These may be used alone or in combination of two or more kinds thereof.

Among these, from the viewpoint of compatibility with the block copolymer (I), crude palm oil, refined palm oil, crude palm stearin, refined palm stearin, crude palm olein, refined palm olein, and a hydrogenated product thereof are preferable, and a hydrogenated product of refined palm stearin is more preferable.

The biobased content of the vegetable oil is preferably 10% by mass or more, more preferably 30% by mass or more, further more preferably 50% by mass or more, still further more preferably 70% by mass or more, and still further more preferably 80% by mass or more.

(Synthetic Plasticizer)

Examples of the synthetic plasticizer include an oil-based softener such as paraffin-based, naphthene-based, and aromatic-based process oil, mineral oil, and white oil; a phthalic acid derivative such as dioctyl phthalate and dibutyl phthalate; a liquid co-oligomer of ethylene and $\alpha$-olefin; liquid paraffin; polybutene; low molecular weight polyisobutylene; liquid polydiene such as liquid polybutadiene, liquid polyisoprene, a liquid polyisoprene/butadiene copolymer, a liquid styrene/butadiene copolymer, and a liquid styrene/isoprene copolymer; and a hydrogenated product or a modified product thereof. These may be used alone or in combination of two or more kinds thereof.

Among these, from the viewpoint of compatibility with the block copolymer (I), paraffin-based and naphthene-based process oil; liquid co-oligomer of ethylene and $\alpha$-olefin; liquid paraffin; and low molecular weight polyisobutylene are preferable, and paraffine-based and naphthene-based process oil is more preferable.

[Polyolefin-Based Resin (III)]

The resin composition of the present invention may further contain a polyolefin-based resin (III).

In a preferable embodiment, the resin composition of the present invention contains the polyolefin-based resin (III) in an amount of 1 to 200 parts by mass, more preferably 5 to 150 parts by mass, further more preferably 15 to 150 parts by mass, and still further more preferably 35 to 130 parts by mass, with respect to 100 parts by mass of the block copolymer (I).

Examples of the polyolefin-based resin (III) include a biomass-derived polyethylene-based resin and polypropylene-based resin; a homopolymer of olefin such as ethylene, propylene, 1-butene, 1-pentene, 1-hexene, 1-heptene, 1-octene, 1-nonene, 1-decene, 3-methyl-1-butene, and 4-methyl-1-pentene; an ethylene-$\alpha$-olefin copolymer which is a copolymer of ethylene and $\alpha$-olefin having 3 to 20 carbon atoms such as propylene, 1-butene, 1-pentene, 4-methyl-1-pentene, 1-hexene, 1-heptene, 1-octene, 1-hexene, 1-heptene, 6-methyl-1-heptene, isooctene, isooctadiene, and decadiene; an ethylene-propylene-diene copolymer (EPDM); an ethylene-vinyl acetate copolymer; an ethylene-unsaturated carboxylic acid copolymer such as an ethylene-acrylic acid copolymer and an ethylene-methacrylic acid copolymer; and a polyolefin-based elastomer containing polyolefin such as polypropylene and polyethylene as a hard segment and an ethylene-propylene copolymer rubber (EPM) and an ethylene-propylene-diene copolymer rubber

(EPDM) as a soft segments. These may be used alone or in combination of two or more kinds thereof.

Among these, polypropylene (for example, homopolypropylene, block polypropylene, and random polypropylene) and a biomass-derived polyethylene-based resin are preferable, biomass-derived low density polyethylene (LDPE) and biomass-derived high density polyethylene (HDPE) are more preferable, and biomass-derived high-density polyethylene (HDPE) is further more preferable.

The biobased content of the polyolefin-based resin (III) is preferably 20% by mass or more, more preferably 50% by mass or more, and from the viewpoint of further more enhancing the reduction in environmental load, is further more preferably 70% by mass or more, still further more preferably 80% by mass or more, and still further more preferably 90% by mass or more.

The melt flow rate of the polyolefin-based resin (III) under conditions of a temperature of 190°C and a load of 2.16 kgf (21 N) is preferably 0.1 to 100 (g/10 min), more preferably 0.5 to 80 (g/10 min), and further more preferably 1 to 70 (g/10 min), from the viewpoint of compatibility with the block copolymer (I), moldability and fluidity.

In addition, the melt flow rate of the polypropylene under the conditions of a temperature of 230°C and a load of 2.16 kgf (21 N) is preferably 0.1 to 100 (g/10 min), more preferably 0.5 to 80 (g/10 min), and further more preferably 1 to 70 (g/10 min), from the viewpoint of compatibility with the block copolymer (I), moldability and fluidity.

Note that, the melt flow rate of the high density polyethylene (HDPE) derived from biomass under the conditions of a temperature of 190°C and a load of 2.16 kgf (21 N) is preferably 1 to 100 (g/10 min), more preferably 5 to 50 (g/10 min), and further more preferably 10 to 30 (g/10 min), from the viewpoint of compatibility with the block copolymer (I), moldability and fluidity.

[Tackifier (IV)]

The resin composition of the present invention may further contain a tackifier (IV).

An embodiment in which the resin composition of the present invention contains the tackifier (IV) in an amount of preferably 1 to 300 parts by mass, more preferably 10 to 250 parts by mass, further more preferably 50 to 200 parts by mass, and still further more preferably 100 to 180 parts by mass, with respect to 100 parts by mass of the block copolymer (I) is exemplified.

Examples of the tackifier (IV) include a coumarone-based resin such as a coumarone-indene resin; a phenol-based resin and a terpene-based resin such as a p-t-butylphenol-acetylene resin, a phenol-formaldehyde resin, a terpene-phenol resin, a polyterpene resin, and a xylene-formaldehyde resin; a petroleum resin such as an aromatic-based petroleum resin, an aliphatic-based petroleum resin, an alicyclic-based petroleum resin, an aromatic-based petroleum resin, and a modified alicyclic-based petroleum resin; and a rosin-based resin such as rosin ester represented by pentaerythritol ester of rosin and glycerol ester of rosin, hydrogenated rosin, methyl ester of hydrogenated rosin, pentaerythritol ester of polymerized rosin, hydrogenated rosin ester, a high-melting point ester-based resin, polymerized rosin, cured rosin, and special rosin ester. These may be used alone or in combination of two or more kinds thereof.

Among these, a terpene-based resin, a petroleum resin, and a rosin-based resin are preferable, and a petroleum resin such as a hydrogenated petroleum resin (product name: ARKON P100, manufactured by Arakawa Chemical Industries, Ltd.) is more preferable.

The softening point of the tackifier is preferably 70 to 160°C, more preferably 80 to 140°C, and further more preferably 85 to 120°C. When the softening point of the tackifier is 70°C or higher, at the time of using the resin composition as an adhesive, the heat resistance tends to be high and the bleeding-out (oozing) to an adherend tends to be small, and when the softening point is 160°C or lower, the coatability and processability tend to be good.

[Additive]

An additive other than those mentioned above may be added to the resin composition of the present embodiment as long as the effect of the present invention is not impaired. Examples of the additive include an inorganic filler, a heat aging inhibitor, an antioxidant such as a hindered phenol-based antioxidant (ADEKASTAB AO-60, manufactured by ADEKA Corporation) and a phosphorus-based antioxidant (IRGAFOS 168, manufactured by BASF Japan Ltd.), a light stabilizer, an antistatic agent, a release agent, a flame retardant, a foaming agent, a pigment, a dye, and a whitening agent. These additives may be used alone or in combination of two or more kinds thereof.

The content of the additive in the resin composition is preferably 15% by mass or less, more preferably 5% by mass or less, and further more preferably 1% by mass or less. The content of the additive in the resin composition may be, for example, 0.01% by mass or more.

[Content of Each Component in Resin Composition]

One of preferable embodiments is that the resin composition of the present embodiment contains,

with respect to 100 parts by mass of the block copolymer (I),
1 to 1500 parts by mass of the plasticizer (II).

In the resin composition of the present embodiment, the content of the plasticizer (II) is preferably 1 to 1500 parts by mass, more preferably 10 to 1000 parts by mass, further more preferably 15 to 500 parts by mass, and still further more preferably 20 to 300 parts by mass, with respect to 100 parts by mass of the block copolymer (I).

In addition, as one of the preferable present embodiments, an embodiment in which the resin composition contains:

with respect to 100 parts by mass of the block copolymer (I),
preferably 1 to 1500 parts by mass, more preferably 10 to 1000 parts by mass, further more preferably 15 to 500 parts by mass, and still further more preferably 20 to 200 parts by mass of the plasticizer (II), and
preferably 1 to 200 parts by mass, more preferably 5 to 150 parts by mass, further more preferably 15 to 150 parts by mass, and still further more preferably 35 to 130 parts by mass of the polyolefin-based resin (III) is exemplified.

In addition, as one of the preferable present embodiments, an embodiment in which the resin composition contains:

with respect to 100 parts by mass of the block copolymer (I),
preferably 1 to 1500 parts by mass, more preferably 10 to 1000 parts by mass, further more preferably 15 to 500 parts by mass, and still further more preferably 20 to 100 parts by mass of the plasticizer (II), and
preferably 1 to 300 parts by mass, more preferably 10 to 250 parts by mass, further more preferably 50 to 200 parts by mass, and still further more preferably 100 to 180 parts by mass of the tackifier (IV) is exemplified.

The total content of the (I) to (IV) in the resin composition of the present embodiment is not particularly limited, but is preferably 85% to 100% by mass, more preferably 90% to 100% by mass, and further more preferably 95% to 100% by mass.

Embodiments of the resin composition of the present invention include a pellet, a gel composition, and an adhesive, and examples thereof include the following embodiments (1) to (3).

(1) A pellet containing the block copolymer (I), the plasticizer (II), and a polyolefin-based resin (III): Such a pellet has a high biobased content, little oil bleeding and coloration, and various physical properties equivalent to those of a paraffin-based process oil.
(2) A gel composition containing the block copolymer (I) and the plasticizer (II): Such a gel composition has a high biobased content, a low viscosity, and various physical properties equivalent to those of a paraffin-based process oil.
(3) An adhesive containing the block copolymer (I), the plasticizer (II), and the tackifier (IV), Such an adhesive has a high biobased content, a low viscosity, and an adhesive property equivalent to that of a paraffin-based process oil.

[Method for Producing Resin Composition]

The method for producing the resin composition of the present embodiment is not particularly limited, and examples thereof include a method in which the (I) to (II), the (III) to (IV) as necessary, and further, other additives are pre-blended and collectively mixed, and then melt-kneaded using a single-screw extruder, a multi-screw extruder, a Banbury mixer, a heating roll, various kneaders, or the like. In addition, examples thereof include a method in which the (I) to (II), and as necessary, the (III) to (IV), and further, an additive are supplied from separate charging ports and melt-kneaded.

Further, examples of the pre-blending method include a method using a mixer such as a Henschel mixer, a high-speed mixer, a V-blender, a ribbon blender, a tumbler blender, a conical blender, or the like. The temperature during melt-kneading may be arbitrarily selected preferably in the range of 150°C to 300°C.

The following method for producing a resin composition may be used.

First, the (I) and (II) are premixed, and the premixed composition is melt-kneaded, extruded, and cut to produce an oil-extended compound for dry blend (V).

Next, the produced oil-extended compound for dry blend (V), the (III), the optional (IV), and optional other additives are mixed to obtain a resin composition.

Note that the gel composition of (2) above may be produced using a production method well known in the art. For example, it may be produced by mixing the plasticizer (II), the block copolymer (I), and other components as necessary. The mixing may be performed using a well-known mixing apparatus. More specifically, it may be produced by mixing the plasticizer (II), the block copolymer (I), and as necessary, the other components at 100 to 200°C for 0.1 to 10 hours under air or nitrogen, and as necessary, under vacuum, followed by cooling.

[Biobased Content]

The biobased content of the resin composition of the present embodiment is preferably 15% by mass or more, and may be 30% by mass or more, 45% by mass or more, 50% by mass or more, 55% by mass or more, or 60% by mass or more. The biobased content is an index indicating the petroleum dependency of the resin composition, and when the biobased content is within the above range, the petroleum dependency may be reduced.

The biobased content (% by mass) is calculated from the mass ratio of the block copolymer (I), the plasticizer (II), and the polyolefin-based resin (III) and the biobased content of each component according to the following formula.

$$\text{Biobased content (\% by mass)} = (MI \times XI/100) + (MII \times XII/100) + (MIII \times XIII/100)$$

In the above formula, MI represents the mass ratio (% by mass) of the block copolymer (I) to the total mass of the resin composition, MII represents the mass ratio (% by mass) of the plasticizer (II) to the total mass of the resin composition, and MIII represents the mass ratio (% by mass) of the polyolefin-based resin (III) to the total mass of the resin composition. XI (% by mass) represents the biobased content of the block copolymer (I), XII (% by mass) represents the biobased content of the plasticizer (II), and XIII (% by mass) represents the biobased content of the polyolefin-based resin (III).

<Physical Properties of Resin Composition>

(Melt Flow Rate Value (MFR))

The resin composition of the present embodiment has a melt flow rate value (MFR) of preferably 200 (g/10 min) or less, more preferably 160 (g/10 min) or less, and further more preferably 120 (g/10 min) or less, and preferably 1 (g/10 min) or more, more preferably 3 (g/10 min) or more, and further more preferably 5 (g/ 10 min) or more. When the melt flow rate value (MFR) is within the above range, the breaking strength is good, and the moldability is also excellent.

Note that in the present specification, the "melt flow rate value (MFR)" is a value measured in accordance with JIS K7210:1999 under conditions of a temperature of 230°C and a load of 2.16 kgf, as in Examples mentioned later.

(Hardness)

The resin composition of the present embodiment has a hardness (type A: 22°C: 0 second) according to JIS K 6253-2:2012 of preferably 97 or less, and preferably 10 or more, more preferably 20 or more, and further more preferably 25 or more. When the A hardness is within the above range, the molding processability is good, and the flexibility is also excellent.

Note that, in the present specification, the "hardness (type A: 22°C: 0 second)" is a value measured under the same conditions as in Examples mentioned later.

In the resin composition of the present embodiment, the hardness (type A: 22°C: 15 seconds) according to JIS K 6251:2010 is preferably 97 or less, more preferably 93 or less, and further more preferably 90 or less. Further, the hardness (type A, 22°C, 15 seconds) is preferably 5 or more, more preferably 10 or more, and further more preferably 20 or more. When the A hardness is within the above range, the molding processability is good, and the flexibility is also excellent.

In the resin composition of the present embodiment, the hardness (type C: 23°C) according to JIS K 7312:1996 using an Asker rubber hardness meter type C is preferably 30 or less, more preferably 10 or less, and further more preferably 5 or less. When the hardness (type C: 23°C) is within the above range, the flexibility is good, and the texture is excellent.

Note that, in the present specification, the "hardness (type C: 23°C)" is a value measured under the same conditions as in Examples mentioned later.

In the resin composition of the present embodiment, the hardness (type C: -20°C) according to JIS K 7312:1996 using an Asker rubber hardness meter type C is preferably 10 or less, more preferably 7 or less, and further more preferably 4 or less. When the hardness (type C: -20°C) is within the above range, the composition has good flexibility at a low temperature and a small change in hardness in a wide temperature range.

Note that, in the present specification, the "hardness (type C: -20°C)" is a value measured under the same conditions as in Examples mentioned later.

(Tensile Strength)

In the resin composition of the present embodiment, the tensile strength may be evaluated in accordance with JIS K6251:2010. The tensile strength is preferably 1 MPa or more, more preferably 2 MPa or more, and further more preferably

3 MPa or more. When the tensile strength is within the above range, the durability is excellent.

(Tensile Elongation)

In the resin composition of the present embodiment, the tensile elongation may be evaluated in accordance with JIS K6251:2010. The tensile elongation is preferably 100% or more, more preferably 150% or more, and further more preferably 200% or more. When the tensile elongation is within the above range, the stretchability is excellent.

(Compression Set)

In the resin composition of the present embodiment, the compression set (100°C × 22 hours) may be evaluated according to JIS K6262:2013. The compression set (100°C × 22 hours) is preferably 95% or less, more preferably 90% or less, and further more preferably 85% or less. When the compression set (100°C × 22 hours) is within the above range, the heat resistance is excellent.

(Storage Elastic Modulus)

In the resin composition of the present embodiment, the storage elastic modulus (22°C) may be evaluated by viscoelasticity measurement. The storage elastic modulus (22°C) is preferably $2.0 \times 10^5$ Pa or less, more preferably $1.5 \times 10^5$ Pa or less, and further more preferably $1.0 \times 10^5$ Pa or less. In addition, the storage elastic modulus (22°C) is preferably $1.0 \times 10^4$ Pa or more, more preferably $2.0 \times 10^4$ Pa or more, and further more preferably $3.0 \times 10^4$ Pa or more. When the storage elastic modulus (22°C) is within the above range, the balance between flexibility and shape retainability is excellent.

In the resin composition of the present embodiment, the storage elastic modulus (-30°C) may be evaluated by viscoelasticity measurement. The storage elastic modulus (-30°C) is preferably $3.0 \times 10^5$ Pa or less, more preferably $2.0 \times 10^5$ Pa or less, and further more preferably $1.5 \times 10^5$ Pa or less. When the storage elastic modulus (-30°C) is within the above range, the flexibility at a low temperature is excellent.

(Melt Viscosity)

In the resin composition of the present embodiment, the melt viscosity (160°C) may be evaluated by a B-type viscometer. The melt viscosity (160°C) is preferably $2.0 \times 10^5$ mPa·s or less, more preferably $1.5 \times 10^5$ mPa·s or less, and further more preferably $8.0 \times 10^4$ mPa·s or less. Further, the melt viscosity (160°C) is preferably $1.0 \times 10^3$ mPa·s or more, more preferably $5.0 \times 10^3$ mPa·s or more, and further more preferably $1.5 \times 10^4$ mPa·s or more. When the melt viscosity (160°C) is within the above range, the low-temperature coatability (moldability) is excellent.

In the resin composition of the present embodiment, the melt viscosity (180°C) may be evaluated by a B-type viscometer. The melt viscosity (180°C) is preferably $1.0 \times 10^5$ mPa·s or less, more preferably $8.0 \times 10^4$ mPa·s or less, and further more preferably $5.0 \times 10^4$ mPa·s or less. Further, the melt viscosity (180°C) is preferably $1.0 \times 10^3$ mPa·s or more, more preferably $5.0 \times 10^3$ mPa·s or more, and further more preferably $1.5 \times 10^4$ mPa·s or more. When the melt viscosity (180°C) is within the above range, the coatability (moldability) is excellent.

(Compressive Stress)

In the resin composition of the present embodiment, the compressive stress (22°C) is preferably 0.500 MPa or less, more preferably 0.100 MPa or less, and further more preferably 0.035 MPa or less, and is preferably 0.001 MPa or more, more preferably 0.005 MPa or more, and further more preferably 0.010 MPa or more. When the compressive stress (22°C) is within the above range, a composition having excellent flexibility and excellent shape retainability is obtained.

Note that, in the present specification, the "compressive stress (22°C)" is a value measured under the same conditions as in Examples mentioned later.

(Dropping Point)

In the resin composition of the present embodiment, the dropping point is preferably 175°C or higher, more preferably 185°C or higher, further more preferably 195°C or higher, still further more preferably 205°C or higher, still further more preferably 215°C or higher, and still further more preferably 220°C or higher. When the dropping point is within the above range, the gel composition as a filler has a property that does not flow out from the inside of the protective tube or the cable under a wide range of temperatures even when the protective tube is broken.

Note that, in the present specification, the "dropping point" is a value measured under the same conditions as in

Examples mentioned later.

(Viscosity)

In the resin composition of the present embodiment, the 1 $s^{-1}$ viscosity is preferably 200,000 mPa·s or less, more preferably 100,000 mPa·s or less, and further more preferably 50,000 mPa·s or less, and is preferably 10,000 mPa·s or more, more preferably 20,000 mPa·s or more, and further more preferably 30,000 mPa·s or more. When the 1 $s^{-1}$ viscosity is within the above range, the gel composition can be easily filled in a protective tube or a cable during the production of the cable, and the handling properties are excellent.
In the resin composition of the present embodiment, the 6 $s^{-1}$ viscosity is preferably 50,000 mPa·s or less, more preferably 30,000 mPa·s or less, and further more preferably 20,000 mPa·s or less, and is preferably 5,000 mPa·s or more, more preferably 8,000 mPa·s or more, and further more preferably 12,000 mPa·s or more. When the 6 $s^{-1}$ viscosity is within the above range, the gel composition can be easily filled in a protective tube or a cable during the production of the cable, and the handling properties are excellent.
In the resin composition of the present embodiment, the 50 $s^{-1}$ viscosity is preferably 20,000 mPa·s or less, more preferably 10,000 mPa·s or less, and further more preferably 5,000 mPa·s or less, and is preferably 1,000 mPa·s or more, more preferably 2,000 mPa·s or more, and further more preferably 3,000 mPa·s or more. When the 50 $s^{-1}$ viscosity is within the above range, the gel composition can be easily filled in a protective tube or a cable during the production of the cable, and the handling properties are excellent.
Note that, in the present specification, the "1 $s^{-1}$ viscosity", the "6 $s^{-1}$ viscosity", and the "50 $s^{-1}$ viscosity" are values measured under the same conditions as in Examples mentioned later.

(Oil Separation Degree at 100°C)

In the resin composition of the present embodiment, the oil separation degree at 100°C may be evaluated in accordance with JIS K 2220:2013. In the resin composition of the present embodiment, the oil separation degree at 100°C is preferably 10.0% or less, more preferably 5.0% or less, and further more preferably 1.0% or less. When the oil separation degree at 100°C is within the above range, it is indicated that the composition of the gel composition is uniform, and the gel composition is hardly separated.

(Worked Penetration)

In the resin composition of the present embodiment, the worked penetration may be evaluated according to Item 7 of JIS K 2220:2013. In the resin composition of the present embodiment, the worked penetration is preferably 3,000 or less, more preferably 1,500 or less, and further more preferably 1,000 or less, and is preferably 100 or more, more preferably 150 or more, and further more preferably 200 or more. When the worked penetration is within the above range, the gel composition as a filler has a property that does not flow out from the inside of the protective tube or the cable under a wide range of temperatures even when the protective tube is broken.

<Molded Body>

The molded body of the present invention is obtained by using the resin composition of the present invention.
The shape of the molded body may be any shape as long as the molded body may be produced using the resin composition of the present invention. For example, it may be formed into various shapes such as a pellet, a film, a sheet, a plate, a pipe, a tube, a rod, and a granule. The method for producing the molded body is not particularly limited, and it may be molded by various conventional molding methods, such as injection molding, blow molding, foam molding, press molding, extrusion molding, and calender molding.
Since the resin composition of the present invention is excellent in molding processability, an injection molded body or an extrusion molded body is suitable, and in particular, an injection molded body embossed by injection molding may be obtained with good design.
Examples of the molded body of the present invention include the following embodiments.
A film made of a resin composition containing a copolymer (I), a plasticizer (II), and a polyolefin-based resin (III): Such a film has a high biobased content and a low degree of orientation.

<Physical Properties of Molded Body (Particularly Film)>

According to the resin composition of the present invention, it is possible to obtain a molded body having a high biobased content, and in particular, in the case of forming a film, it is possible to obtain a film having a small difference in

physical properties between the MD direction and the TD direction. By using the resin composition of the present invention, the ratio of MD direction/TD direction at 100% elongation may be 0.1 to 2.8, may be 0.2 to 2.4, and further, it is possible to be 0.3 to 2.1.

<Use>

The resin composition of the present invention is expected to have a reduced environmental load and excellent moldability. Therefore, the resin composition and the molded body of the present invention may be suitably used as a molded product such as a sheet, a film, a tube, a hose, or a belt. Specifically, it may be suitably used for various vibration-proof and vibration-suppression members such as vibration-proof rubber, a mat, a sheet, a cushion, a damper, a pad, and mount rubber; footwear such as sports shoes and fashion sandals; a home electric appliance member such as television, a stereo, a vacuum cleaner, and a refrigerator; a building material such as a door of a building and a sealing packing for a window frame; an automobile interior part or an automobile exterior part such as a bumper part, skin such as a body panel, a weather strip, a grommet, and an instrument panel, and an airbag cover; a grip for a tool used in sports, fitness, and the like such as a driver, a golf club, a tennis racket, ski stocks, a bicycle, a motorcycle, a fishing gear, and a water race; a grip for a tool and electric tool such as a hammer, a driver, pliers, and a wrench; a grip for a kitchen utensil, a toothbrush, an interdental brush, a razor, and a plumbing product such as a bath handrail; a grip for a writing instrument such as a pen and scissors; a grip used for an automobile interior and exterior such as a shift lever and an assist knob; a grip for a bags; an anti-slip of a glove and an anti-slip mat such as a kitchen mat; a toy; tires such as automobile tires, bicycle tires, and motorcycle tires; and the like.

Further, it may also be suitably used for a food packaging material such as a food wrap film; a medical device such as an infusion solution bag, a syringe, and a catheter; a stopper and cap liner for a container for storing food, beverages, medicine, and the like; a stretch film; a diaper; and the like.

Examples

Hereinafter, the present invention is even further described in detail with reference to Examples and Comparative Examples, but the present invention is not limited these Examples.

Note that, β-farnesene (purity: 97.6% by mass, biobased content (ASTM D6866-21): 99%, manufactured by Amyris, Inc.) was purified with a molecular sieve of 3 Å and distilled under a nitrogen atmosphere to remove hydrocarbon-based impurity such as zingiberene, bisabolene, farnesene epoxide, a farnesol isomer, E,E-farnesol, squalene, ergosterol and several kinds of dimers of farnesene, and then used for the following polymerization.

The respective components used in Examples and Comparative Examples are as follows.

<Block Copolymer (I)>

Block Copolymer (P-1) of Production Example 1 mentioned later, biobased content (ASTM D6866-21): 0% by mass
Block copolymer (P-2) of Production Example 2 mentioned later, biobased content (ASTM D6866-21): 0% by mass
Block copolymer (Q-1) of Production Example 3 mentioned later, biobased content (ASTM D6866-21): 0% by mass
Block copolymer (R-1) of Production Example 4 mentioned later, biobased content (ASTM D6866-21): 68% by mass
Block copolymer (R-2) of Production Example 5 mentioned later, biobased content (ASTM D6866-21): 80% by mass
Block copolymer (T-1) of Production Example 6 mentioned later, biobased content (ASTM D6866-21): 0% by mass
Block copolymer (P-3) of Production Example 7 mentioned later, biobased content (ASTM D6866-21): 0% by mass
Block copolymer (P-4) of Production Example 8 mentioned later, biobased content (ASTM D6866-21): 0% by mass
Block copolymer (P-5) of Production Example 9 mentioned later, biobased content (ASTM D6866-21): 0% by mass
Block copolymer (P-6) of Production Example 10 mentioned later, biobased content (ASTM D6866-21): 0% by mass
Block copolymer (R-3) of Production Example 14 mentioned later, biobased content (ASTM D6866-21): 80% by mass

<Plasticizer (II)>

Plasticizer A: product name: VIVA-B-FIX10227, manufactured by H&R Group, a mixture having a structure represented by the general formula (1), biobased content (ASTM D6866-21): 100% by mass

Plasticizer B: product name: VIVASPES10234, H&R Group, a mixture having a structure represented by the general formula (2), biobased content (ASTM D6866-21): 100% by mass

<Plasticizer Outside Scope of Present Invention>

Plasticizer C: paraffin-based process oil (product name: Diana Process PW-90, manufactured by Idemitsu Kosan Co., Ltd.), biobased content (ASTM D6866-21): 0% by mass
Plasticizer D: sunflower oil (product name: OLEIN RICH, manufactured by Showa Sangyo Co., Ltd.), biobased content (ASTM D6866-21): 95% by mass, containing a carboxy group
Plasticizer E: flaxseed oil (product name: flaxseed oil, manufactured by The Nisshin OilliO Group, Ltd.), biobased content (ASTM D6866-21): 95% by mass, containing a carboxy group
Plasticizer F: naphthene oil (product name: SUNTHEN450, manufactured by JAPAN SUN OIL COMPANY, LTD.), biobased content (ASTM D6866-21): 0% by mass
Plasticizer G: product name: Krystol™550, manufactured by Petro-Canada Lubricants Inc., biobased content (ASTM D6866-21): 0% by mass
Plasticizer H: product name: Renoil70-W, manufactured by D-A Lubricants Company Inc., biobased content (ASTM D6866-21): 0% by mass
Plasticizer I: paraffin-based process oil (product name: PW-32, manufactured by Idemitsu Kosan Co., Ltd.), biobased content (ASTM D6866-21): 0% by mass
Plasticizer J: paraffin-based process oil (product name: KP0-50, manufactured by MORESCO Corporation), biobased content (ASTM D6866-21): 0% by mass

<Polyolefin-Based Resin (III)>

Homo-PP: homopolypropylene (product name: J107G, manufactured by Prime Polymer Co., Ltd., MFR: 30 g/10 min (temperature of 230°C, load of 2.16 kg), biobased content (ASTM D6866-21): 0% by mass)
Block-PP: block polypropylene (product name: J707, manufactured by Prime Polymer Co., Ltd., MFR: 30 g/10 min (temperature of 230°C, load of 2.16 kg), biobased content (ASTM D6866-21): 0% by mass)
Bio-Block-PP: bio-block polypropylene (product name: Circluen EP540P, manufactured by Lyondellbasell, melt flow rate: 15 g/10 min (temperature of 230°C, load of 2.16 kg), bio-based content (ASTM D6866-21): 25% by mass)
Bio-LDPE: bio LDPE polyethylene (product name: SPB608, manufactured by Braskem, melt flow rate: 30 g/10 min (temperature of 190°C, load of 2.16 kg), biobased content (ASTM D6866-21): 95% by mass)
Bio-HDPE: bio HDPE polyethylene (product name: SHA7260, manufactured by Braskem, melt flow rate: 20 g/10 min (temperature of 190°C, load of 2.16 kg), biobased content (ASTM D6866-21): 94% by mass)

<Tackifier (IV)>

Tackifier resin A: tackifier (product name: ARKON P100, manufactured by Arakawa Chemical Industries, Ltd.)
Tackifier rein B: manufactured by EASTMAN Chemical Company, trade name: Regalite™R1125

<Antioxidant>

Hindered phenol-based antioxidant (manufactured by ADEKA Corporation, ADEKASTAB AO-60)
The details of each measurement method for the block copolymer (I) obtained in Production Examples are as follows.

(1) Measurement of Weight Average Molecular Weight (Mw), Molecular Weight Distribution, and the Like

The weight average molecular weight (Mw) and the molecular weight distribution (Mw/Mn) of the block copolymer (I) and the styrene block were determined by GPC (gel permeation chromatography) in terms of standard polystyrene equivalent molecular weight. The measurement apparatus and conditions are as follows.

· Apparatus: GPC apparatus "HLC-8320GPC" manufactured by Tosoh Corporation
· Separation column "TSKgelSuperHZ4000" manufactured by Tosoh Corporation
· Eluent: tetrahydrofuran
· Eluent flow rate: 0.7 mL/min

· Sample concentration: 5 mg/10 mL
· Column temperature: 40°C

(2) Method for Measuring Hydrogenation Rate

Each of the block copolymer (I) before hydrogenation and the block copolymer (I) after hydrogenation was dissolved in $CDCl_3$, and subjected to $^1$H-NMR measurement [apparatus: "ADVANCE 400 Nano bay" (manufactured by Bruker), measurement temperature: 30°C]. The hydrogenation rate of the carbon-carbon double bond in the structural unit derived from the conjugated diene compound in the block copolymer (I) before hydrogenation was calculated by the following formula from the peak of the proton contained in the carbon-carbon double bond appearing at 4.5 to 6.0 ppm of the obtained spectrum.

Hydrogenation rate (mol%) = {1 - (number of moles of carbon-carbon double bond contained per 1 mole of block copolymer (I) after hydrogenation) / (number of moles of carbon-carbon double bond contained per 1 mole of block copolymer (I) before hydrogenation)} $\times$ 100

(3) Vinyl Bonding Amount of Block Copolymer (I)

Further, the details of the method for measuring the vinyl bonding amount of the block copolymer (I) obtained in Production Examples are as follows.
The block copolymer (I) before hydrogenation was dissolved in $CDCl_3$, and subjected to $^1$H-NMR measurement [apparatus: "ADVANCE 400 Nano bay" (manufactured by Bruker), measurement temperature: 30°C]. The vinyl bonding amount was calculated from the ratio of the peak area corresponding to the 3,4-bond unit and the 1,2-bond unit in the isoprene structural unit and the 1,2-bond unit in the butadiene structural unit to the total peak area of the structural unit derived from butadiene, the structural unit derived from isoprene, or the structural units derived from butadiene and isoprene.

<Block Copolymer (I)>

[Production Example 1]

Block Copolymer (P-1)

A nitrogen-purged and dried pressure-resistant container was charged with 50.0 kg of cyclohexane as a solvent and 0.0310 kg of sec-butyllithium (10.5% by mass cyclohexane solution) as an anionic polymerization initiator, the temperature was raised to 50°C, then 1.32 kg of styrene (1) was added and polymerization was performed for 1 hour, a mixture liquid of 2.73 kg of butadiene and 3.44 kg of isoprene was added and polymerization was performed for 2 hours, and further 1.32 kg of styrene (2) was added and polymerization was performed for 1 hour to obtain a reaction liquid containing a polystyrene-poly(butadiene/isoprene)-polystyrene triblock copolymer.
To the reaction liquid, palladium carbon (amount of palladium supported: 5% by mass) as a hydrogenation catalyst was added in an amount of 5% by mass with respect to the block copolymer, and it was allowed to react under conditions of a hydrogen pressure of 2 MPa at 150°C for 10 hours. After allowing to cool and releasing the pressure, the hydrogenation catalyst was removed by filtration, and the filtrate was concentrated and further vacuum-dried to obtain a hydrogenated product of a polystyrene-poly(butadiene/isoprene)-polystyrene triblock copolymer (block copolymer (P-1)).
In addition, the physical properties of the block copolymer (P-1) were measured. The results are shown in Table 1.

[Production Examples 2 to 3]

Block Copolymer (P-2) and Block Copolymer (Q-1)

A block copolymer (P-2) and a block copolymer (Q-1) were produced by the same procedure as in Production Example 1, except that the raw materials and the used amounts thereof were as shown in Table 1. However, in the production of the block copolymer (Q-1), tetrahydrofuran was used as the Lewis base.
The physical properties of the obtained block copolymer (P-2) and block copolymer (Q-1) were measured. The results are shown in Table 1.

[Production Example 4]

Block Copolymer (R-1)

A nitrogen-purged and dried pressure-resistant container was charged with 50.0 kg of cyclohexane as a solvent and 0.0155 kg of sec-butyllithium (10.5% by mass cyclohexane solution) as an anionic polymerization initiator, the temperature was raised to 50°C, then 1.32 kg of styrene (1) was added and polymerization was performed for 1 hour, subsequently 6.18 kg of β-farnesene was added and polymerization was performed for 2 hours, and further 1.32 kg of styrene (2) was added and polymerization was performed for 1 hour to obtain a reaction liquid containing a polystyrene-poly(β-farnesene)-polystyrene triblock copolymer.

To the reaction liquid, palladium carbon (amount of palladium supported: 5% by mass) as a hydrogenation catalyst was added in an amount of 5% by mass with respect to the block copolymer, and it was allowed to react under conditions of a hydrogen pressure of 2 MPa at 150°C for 10 hours. After allowing to cool and releasing the pressure, the hydrogenation catalyst was removed by filtration, and the filtrate was concentrated and further vacuum-dried to obtain a hydrogenated product of a polystyrene-poly(β-farnesene)-polystyrene triblock copolymer (block copolymer (R-1)).

The biobased content of the obtained block copolymer (R-1) measured in accordance with ASTM D6866-21 was 68% by mass.

Further, the physical properties of the block copolymer (R-1) were measured. The results are shown in Table 1.

[Production Example 5]

Block Copolymer (R-2)

A block copolymer (R-2) was produced by the same procedure as in Production Example 4 except that the raw materials and the used amounts thereof were as shown in Table 1.

The physical properties of the obtained block copolymer (R-2) were measured. The results are shown in Table 1.

[Production Example 14]

Block Copolymer (R-3)

A nitrogen-purged and dried pressure-resistant container was charged with 50.0 kg of cyclohexane as a solvent and 0.0413 kg of sec-butyllithium (10.5% by mass cyclohexane solution) as an anionic polymerization initiator, the temperature was raised to 50°C, then 1.12 kg of styrene (1) was added and polymerization was performed for 1 hour, subsequently, 10.25 kg of β-farnesene was added and polymerization was performed for 2 hours, and further 1.12 kg of styrene (2) was added and polymerization was performed for 1 hour to obtain a reaction liquid containing a polystyrene-poly(β-farnesene)-polystyrene triblock copolymer.

To the reaction liquid, palladium carbon (amount of palladium supported: 5% by mass) as a hydrogenation catalyst was added in an amount of 5% by mass with respect to the block copolymer, and it was allowed to react under conditions of a hydrogen pressure of 2 MPa at 150°C for 3 hours. After allowing to cool and releasing the pressure, the hydrogenation catalyst was removed by filtration, and the filtrate was concentrated and further vacuum-dried to obtain a hydrogenated product of a polystyrene-poly(β-farnesene)-polystyrene triblock copolymer (block copolymer (R-3)).

The biobased content of the obtained block copolymer (R-3) measured in accordance with ASTM D6866-21 was 80% by mass.

Further, the physical properties of the block copolymer (R-3) were measured. The results are shown in Table 1.

[Production Example 6]

Block Copolymer (T-1)

A nitrogen-purged and dried pressure-resistant container was charged with 50.0 kg of cyclohexane as a solvent and 0.061 kg of sec-butyllithium (10.5% by mass in cyclohexane solution) as an anionic polymerization initiator, the temperature was raised to 50°C, 0.81 kg of styrene (1) was added and polymerization was performed for 1 hour, subsequently, 10.87 kg of isoprene was added and polymerization was performed for 2 hours, and 0.81 kg of styrene (2) was further added and polymerization was performed for 1 hour to obtain a reaction liquid containing a styrene-isoprene-styrene triblock copolymer.

To the reaction liquid, palladium carbon (amount of palladium supported: 5% by mass) as a hydrogenation catalyst was added in an amount of 5% by mass with respect to the block copolymer, and it was allowed to react under conditions of a hydrogen pressure of 2 MPa at 150°C for 10 hours.

After allowing to cool and releasing the pressure, the palladium carbon was removed by filtration, and the filtrate

was concentrated and further vacuum-dried to obtain a hydrogenated product of a styrene-isoprene-styrene triblock copolymer (SEPS).

In addition, in the same manner as in (SEPS), a nitrogen-purged and dried pressure-resistant container was charged with 50.0 kg of cyclohexane as a solvent and 0.420 kg of sec-butyllithium (44.1 g of sec-butyllithium) (10.5% by mass cyclohexane solution) as an anionic polymerization initiator, the temperature was raised to 50°C, then 2.83 kg of styrene (1) was added and polymerization was performed for 1 hour, and subsequently, 19.81 kg of isoprene was added and polymerization was performed for 2 hours to obtain a reaction liquid containing a styrene-isoprene diblock copolymer.

The reaction liquid was hydrogenated in the same manner as in (SEPS) to obtain a hydrogenated product of a styrene-isoprene diblock copolymer (SEP).

The (SEPS) and (SEP) obtained above were melt-kneaded at a kneading temperature of 200°C at a screw of 300 rpm using a screw extruder ZSK26MagaCopounder (L/D=56) manufactured by Coperion GmbH, to obtain a block copolymer (T-1) which was a composition composed of SEPS and SEP.

[Production Examples 7 to 8]

Block Copolymer (P-3) and Block Copolymer (P-4)

A block copolymer (P-3) and a block copolymer (P-4) were produced by the same procedure as in Production Example 1, except that the raw materials and the used amounts thereof were as shown in Table 1.

The physical properties of the obtained block copolymer (P-3) and block copolymer (P-4) were measured. The results are shown in Table 1.

[Production Examples 9 to 10]

Block Copolymer (P-5) and Block Copolymer (P-6)

A block copolymer (P-5) and a block copolymer (P-6) were produced by the same procedure as in Production Example 1 except that the raw materials and the used amounts thereof were as shown in Table 1.

The physical properties of the obtained block copolymer (P-5) and block copolymer (P-6) were measured. The results are shown in Table 1.

Block Copolymer (S-1)

SBS, styrene-butadiene-styrene block copolymer, Mw: 304,000/119,000/59,000 = 1.0/87/13, hydrogenation rate: 0 mol%, vinyl bonding amount of 11 mol% (product name: D-1102, manufactured by KRATON)

Block Copolymer (U-1)

SIS, styrene-isoprene-styrene block copolymer, Mw: 213,000/112,000 = 64/36, hydrogenation rate: 0 mol%, vinyl bonding amount of 7.0 mol% (product name: Quintac3421, manufactured by ZEON Corporation)

[Production Examples 11 to 13]

<Table 9: Oil-Extended Compound for Dry Blend (V) >

Oil-Extended Compound for Dry Blend (T-2), Oil-Extended Compound for Dry Blend (T-3), Oil-Extended Compound for Dry Blend (T-4)

The respective components were premixed according to the formulation shown in Table 9 below. Next, using a twin-screw extruder ("ZSK26Mc" manufactured by Coperion GmbH; number of cylinders of 14), the premixed composition was supplied to a hopper under the conditions of a cylinder temperature of 180°C and a screw rotation speed of 300 rpm. Further, it was melt-kneaded, extruded into a strand shape, and cut to produce pellets of the resin composition.

Table 1

| | | Production Example 1 | Production Example 2 | Production Example 3 | Production Example 4 | Production Example 5 | Production Example 6 | | Production Example 7 | Production Example 8 | Production Example 9 | Production Example 10 | Production Example 14 |
|---|---|---|---|---|---|---|---|---|---|---|---|---|---|
| | | (P-1) | (P-2) | (Q-1) | (R-1) | (R-2) | (T-1) | | (P-3) | (P-4) | (P-5) | (P-6) | (R-3) |
| | | | | | | | (SEPS) | (SEP) | | | | | |
| Used Amount (kg) | Cyclohexane | 50.0 | 50.0 | 50.0 | 50.0 | 50.0 | 50.0 | 50.0 | 50.0 | 50.0 | 50.0 | 50.0 | 50.0 |
| | Sec-butyllithium (10.5% by mass cyclohexane solution ) | 0.0310 | 0.1394 | 0.0303 | 0.0155 | 0.0413 | 0.0611 | 0.4200 | 0.0531 | 0.1394 | 0.0875 | 0.1219 | 0.0413 |
| | Tetrahydrofuran | - | - | 0.104 | - | - | - | - | - | - | - | 0.108 | - |
| | Polymer Block (al) Styrene (1) | 1.32 | 1.87 | 1.50 | 1.32 | 1.12 | 0.81 | 2.83 | 1.41 | 1.87 | 5.60 | 2.00 | 1.12 |
| | Styrene (2) | 1.32 | 1.87 | 1.50 | 1.32 | 1.12 | 0.81 | - | 1.41 | 1.87 | - | 2.00 | 1.12 |
| | Polymer Block (a2) β-farnesene | - | - | - | 6.18 | 10.25 | - | - | - | - | - | - | 10.25 |
| | Butadiene | 2.73 | 3.87 | 5.82 | - | - | - | - | 2.66 | 4.89 | - | 8.50 | - |
| | Isoprene | 3.44 | 4.88 | - | - | - | 10.87 | 19.81 | 3.34 | 3.86 | 9.34 | - | - |
| [(al)/(a2)] | | 30/70 | 30/70 | 34/66 | 30/70 | 18/82 | 13/87 | | 32/68 | 30/70 | 37.5/62.5 | 31.5/68.5 | 18/82 |
| Ip Constitutional Unit in (a2) (mol%) | | *50* | *50* | 0 | 0 | 0 | 100 | | *50* | 39 | 100 | 0 | 0 |
| Polymer Skeleton | | St - (Bd / Ip) - St | St - (Bd / Ip) - St | St -Bd - St | St - F - St | St - F - St | St - Ip - St / St - Ip | | St - (Bd / Ip) - St | St - (Bd / Ip) - St | St - Ip | St-Bd-St | St-F-St |

(continued)

| | | Production Example 1 | Production Example 2 | Production Example 3 | Production Example 4 | Production Example 5 | Production Example 6 | | Production Example 7 | Production Example 8 | Production Example 9 | Production Example 10 | Production Example 14 |
|---|---|---|---|---|---|---|---|---|---|---|---|---|---|
| | | (P-1) | (P-2) | (Q-1) | (R-1) | (R-2) | (T-1) | | (P-3) | (P-4) | (P-5) | (P-6) | (R-3) |
| | | | | | | | (SEPS) | (SEP) | | | | | |
| Physical Properties | Weight Average Molecular Weight of Styrene Block (Mw) | 26,000 | 8,200 | 30,200 | 52,000 | 16,000 | 7,900 / 2,000 | | 16,200 | 8,700 | 39,000 | 9,400 | 16,000 |
| | Weight Average Molecular Weight of Block Copolymer (Mw) | 262,000 | 82,400 | 286,000 | 373,000 | 201,000 | 187,000 / 42,900 = 40 / 60 | | 151,000 | 97,400 | 139,000 | 97,500 | 210,000 |
| | Molecular Weight Distribution (Mw/Mn) | *1.05* | 1.04 | 1.16 | 1.18 | 1.23 | 1.01 / 1.05 | | 1.02 | 1.03 | 1.06 | 1.06 | 1.18 |
| | Hydrogenation Rate (mol%) | 98.9 | 99.1 | 99.0 | 90.2 | 93.2 | 98.4 | | 98.7 | 98.2 | 98.9 | 99.2 | 46.4 |
| | Vinyl Bonding Amount (mol%) | 8.0 | 8.0 | 38.4 | 7.7 | 7.7 | 7.0 | | 7.6 | 8.0 | 8.0 | 38.2 | 6.0 |

Note that each notation in Table 1 is as follows.
[(a1)/(a2)]:
The mass ratio of the content of the polymer block (a1) to the content of the polymer block (a2) is shown.

Polymer Skeleton:

St-(Bd/Ip)-St represents a polystyrene-poly (butadiene/isoprene)-polystyrene triblock copolymer.
St-Bd-St represents a polystyrene-poly (butadiene)-polystyrene triblock copolymer.
St-F-St represents a polystyrene-poly (β-farnesene)-polystyrene triblock copolymer.
St-Ip-St represents a polystyrene-poly(isoprene)-polystyrene triblock copolymer.
St-Ip represents to a polystyrene-poly (isoprene) diblock copolymer.
The details of each measurement method for the plasticizer (II) are as follows.

(1) Measurement of Kinematic Viscosity

The kinematic viscosity of each of the plasticizers A to J was measured under a condition at 40°C using an SVM dynamic viscometer (product name: SVM (TM) 3001, manufactured by Yujunkatsuyutsushinsha). The results are shown in Table 2.

(2) Measurement of Melting Point (Pour Point)

The melting point (pour point) of each of the plasticizers A to J was measured using an automatic pour-point tester (product name: RPP-303CML, manufactured by Rigo) under the conditions of JIS K2269:1987. The results are shown in Table 2.

Table 2

| | | Plasticizer A | Plasticizer B | Plasticizer C | Plasticizer D | Plasticizer E | Plasticizer F | Plasticizer G | Plasticizer H | Plasticizer I | Plasticizer J |
|---|---|---|---|---|---|---|---|---|---|---|---|
| | | VIVA-B-FIX 10227 | VIVASPES 10234 | PW-90 Paraffin Oil | Sunflower Oil | Flaxseed Oil | SUNTHEN450 Naphthene Oil | Krystol 550 | Renoil 70-W | PW-32 Paraffin Oil | KP0-50 Paraffin Oil |
| Physical Properties | Kinematic Viscosity at 40°C (cSt) | 57.0 | 21.0 | 95.5 | 33.3 | 29.6 | 99.7 | 105.0 | 13.0 | 30.6 | 9.3 |
| | Melting Point (Pour Point) (°C) | -27 | -45 | -15 | -18 to -16 | -27 to -18 | -30 | -12 | -27 | -18 | -13 |
| | Biobased Content (%) | 100.0 | 100.0 | 0.0 | 95.0 | 95.0 | 0.0 | 0.0 | 0.0 | 0.0 | 0.0 |

(Examples 1 to 22, 29 to 31 and 69, and Comparative Examples 1 to 14 and 17 to 20)

<Table 3-1 to 4 and 7: Compound>

The respective components were premixed according to the formulation shown in Tables 3-1 to 4 and 7.

Next, using a twin-screw extruder ("ZSK26Mc" manufactured by Coperion GmbH; number of cylinders of 14), the premixed composition was supplied to a hopper under the conditions of a cylinder temperature of 210°C and a screw rotation speed of 300 rpm. Further, it was melt-kneaded, extruded into a strand shape, and cut to produce pellets of the resin composition.

<Table 5: Oil-Extended Compound>

The respective components were premixed according to the formulation shown in Table 5. Next, using a twin-screw extruder ("ZSK26Mc" manufactured by Coperion GmbH; number of cylinders of 14), the premixed composition was supplied to a hopper under the conditions of a cylinder temperature of 160°C and a screw rotation speed of 300 rpm. Further, it was melt-kneaded, extruded into a strand shape, and cut to produce pellets of the resin composition.

(Examples 23 to 28 and 70 and Comparative Examples 15 to 16)

<Table 6: Tackifier>

According to the formulation shown in Table 6, solutions of the respective components in cyclohexane were prepared to have a solid content concentration of 25% by mass.

· For Melt Viscosity Measurement

The solution was added to a container and dried to obtain a resin composition.

· For Adhesive Force Measurement

Each of the solutions was applied to a substrate layer (PET film: thickness of 50 μm) using an automatic film coating apparatus PI-1210 (manufactured by Tester Sangyo Co., Ltd.) with a baker-type applicator SA-201 (manufactured by Tester Sangyo Co., Ltd.) set as a 6 mil, and then dried at 60°C × 0.5 hours and at room temperature for 22 hours to obtain a laminate having an adhesive layer thickness of about 25 μm.

(Examples 32 to 34, Examples 67 to 68, Comparative Examples 21 to 22, and Comparative Examples 29 to 30)

<Table 8: Film>

The respective components were premixed according to the formulation shown in Table 8.

Next, using a twin-screw extruder ("ZSK26Mc" manufactured by Coperion GmbH; number of cylinders of 14), the premixed composition was supplied to a hopper under kneading conditions of a cylinder temperature of 205°C and a screw rotation speed of 300 rpm. Further, it was melt-kneaded, extruded into a strand shape, and cut to produce pellets of the resin composition.

Subsequently, a film of a thermoplastic elastomer composition was obtained under molding conditions using a Thermo Fisher 20 mm single-screw apparatus set at a temperature of 220°C.

Note that each notation in Table 8 is as follows.

· Tackifier resin B: trade name: Regalite™R1125, manufactured by EASTMAN Chemical Company

· Polyolefin elastomer: trade name: Vistamaxx™6102 (structural unit derived from ethylene: 16% by mass), manufactured by Exxon Mobil Corporation

· Polystyrene-based resin: trade name: Styrolution PS3190 (weight average molecular weight: 250,000), manufactured by INEOS Styrolution America LLC.

(Examples 35, 39, 41, 43, 45, 47, and 49)

<Table 10-1: Pellet and Injection Sheet>

The respective components were premixed according to the formulation shown in Table 10-1. Next, using a twin-screw extruder ("ZSK26Mc" manufactured by Coperion GmbH; number of cylinders of 14), the premixed composition was supplied to a hopper under the conditions of a cylinder temperature of 210°C and a screw rotation speed of 300 rpm. Further, it was melt-kneaded, extruded into a strand shape, and cut to produce pellets of the resin composition.
The pellets obtained above were injection-molded with an injection-molding apparatus "EC75SX" (manufactured by Toshiba Machine Co., Ltd.) at a cylinder temperature of 210°C, a mold temperature of 40°C, and an injection pressure of 80 MPa to prepare an injection sheet having a length of 110 mm, a width of 110 mm, and a thickness of 2 mm.

(Examples 36, 37, 38, 40, 42, 44, 46, 48, and 50)

<Table 10-1: Injection Sheet (Dry Blend)>

According to the formulation shown in Table 10-1, T-2 or T-3 and a polyolefin resin were placed in a bag and premixed, and it was charged into an injection-molding apparatus "EC75SX" (manufactured by Toshiba Machine Co., Ltd.) and injection-molded at a cylinder temperature of 210°C, a mold temperature of 40°C and an injection pressure of 80 MPa to prepare an injection sheet having a length of 110 mm, a width of 110 mm and a thickness of 2 mm.

(Examples 51 and 53)

<Table 10-2: Pellet>

The respective components were premixed according to the formulation shown in Table 10-2. Next, using a twin-screw extruder ("ZSK26Mc" manufactured by Coperion GmbH; number of cylinders of 14), the premixed composition was supplied to a hopper under the conditions of a cylinder temperature of 210°C and a screw rotation speed of 300 rpm. Further, it was melt-kneaded, extruded into a strand shape, and cut to produce pellets of the resin composition.
The pellets obtained above were formed into a ribbon sheet having a thickness of 1 mm and a width of 35 mm using a single-screw extruder ("NV40mm" manufactured by Freesia Macros Corporation; L/D36) under the conditions of a barrel temperature of 180°C and a screw rotation speed of 30 rpm.

(Examples 52 and 54)

<Table 10-2: Ribbon Sheet (Dry Blend)>

According to the formulation shown in Table 10-2, T-2 and a polyolefin resin were placed in a bag and premixed, and it was charged into a single-screw extruder ("NV40mm" manufactured by Freesia Macros Corporation; L/D36) and formed into a ribbon sheet having a thickness of 1 mm and a width of 35 mm under conditions of a barrel temperature of 180°C and a screw rotation speed of 30 rpm.

(Comparative Examples 23 and 25)

<Table 11: Pellet and Injection Sheet>

The respective components were premixed according to the formulation shown in Table 11. Next, using a twin-screw extruder ("ZSK26Mc" manufactured by Coperion GmbH; number of cylinders of 14), the premixed composition was supplied to a hopper under the conditions of a cylinder temperature of 210°C and a screw rotation speed of 300 rpm. Further, it was melt-kneaded, extruded into a strand shape, and cut to produce pellets of the resin composition.
The pellets obtained above were injection-molded with an injection-molding apparatus "EC75SX" (manufactured by Toshiba Machine Co., Ltd.) at a cylinder temperature of 210°C, a mold temperature of 40°C, and an injection pressure of 80 MPa to prepare an injection sheet having a length of 110 mm, a width of 110 mm, and a thickness of 2 mm.

(Comparative Example 24)

<Table 11: Injection Sheet (Dry Blend)>

According to the formulation shown in Table 11, T-4 and a polyolefin resin were placed in a bag and premixed, and it was charged into an injection-molding apparatus "EC75SX" (manufactured by Toshiba Machine Co., Ltd.) and injection-molded at a cylinder temperature of 210°C, a mold temperature of 40°C and an injection pressure of 80 MPa to prepare an injection sheet having a length of 110 mm, a width of 110 mm and a thickness of 2 mm.

(Examples 55 to 65 and Comparative Examples 26 to 27)

<Table 12: Resin Composition (Gel Composition), Sheet Sample, and Cylindrical Test Piece>

According to the formulation shown in Table 12, the respective components were premixed, and it was allowed to stand in a Safety Oven SPH-202 (manufactured by ESPEC CORP.) in which the temperature was raised to 120°C for 1.5 hours for oil absorption. Next, using a Labo Plastomill (manufactured by Toyo Seiki Seisaku-sho, Ltd.), it was kneaded at a set temperature of 110°C and a rotation speed of 70 rpm for 5 minutes to obtain a resin composition (gel composition).

Using a compression press molding apparatus "NF-37" manufactured by Shindo Kinzoku Co., Ltd., and using a Teflon (registered trademark)-coated metal frame as a spacer, the obtained resin composition (gel composition) was subjected to compression press molding at 160°C under a load of 100 $kgf/cm^2$ for 3 minutes, followed by cooling to obtain a sheet sample for a bending test. On the other hand, a piece for the compression stress and a piece for the compression set test were compression-molded at 160°C for 3 minutes to prepare cylindrical test pieces each having a diameter of 13.0 ±0.5 mm and a thickness of 6.3±0.3 mm (d0).

(Example 66 and Comparative Example 28)

<Table 13: Gel Composition>

According to the formulation shown in Table 13, a gel composition was obtained by mixing under nitrogen at 120°C for 3 hours, placing under vacuum, and then cooling.

Note that each notation in Tables 10-1, 10-2, and 11 is as follows.

· Homo-PP A: homopolypropylene (product name: J107G, manufactured by Prime Polymer Co., Ltd., MFR: 30 g/10 min (temperature of 230°C, load of 2.16 kg)
· Homo-PP B: homopolypropylene (product name: J106G, manufactured by Prime Polymer Co., Ltd., MFR: 16 g/10 min (temperature of 230°C, load of 2.16 kg)
· Homo-PP C: homopolypropylene (product name: J105G, manufactured by Prime Polymer Co., Ltd., MFR: 9.0 g/10 min (temperature of 230°C, load of 2.16 kg)
· Homo-PP D: homopolypropylene (product name: E-100GPL, manufactured by Prime Polymer Co., Ltd., MFR: 0.9 g/10 min (temperature of 230°C, load of 2.16 kg)
· "Difference from pellet" is a value of "value of pellet" - "value of Dry blend", and the lower the numerical value, the smaller the difference and the better.
· "Rate of change with respect to pellet" is a value of ("value of pellet" - "value of Dry blend") / "value of pellet" * 100, and the lower the numerical value, the smaller the rate of change and the better.

Note that the notation in Table 12 is as follows.

- "Hardness change" is a value of "hardness at an ambient temperature of 23°C" - "hardness at an ambient temperature of -20°C", and the lower the numerical value, the smaller the change and the better.

<Measurement and Evaluation>

The following measurements and evaluations were performed using the resin compositions obtained in the above Examples and Comparative Examples. The results are shown in Tables 3-1 to 8 and 10-1 to 13. Note that the results in Tables 3-1 to 8 and 10-1 to 13 are preferably obtained by comparing the results belonging to a group of the same composition ratio (for example, (1) a group consisting of Examples 1 to 3 and Comparative Examples 1 to 5, (2) a group consisting of Examples 5, 6, and 8 and Comparative Examples 6 to 8, (3) a group consisting of Examples 9 to 11 and Comparative Examples 9 to 11, (4) a group consisting of Examples 12 to 14, (5) a group consisting of Examples 19 and 20 and Comparative Example 12, (6) a group consisting of Example 21 and Comparative Example 13, (7) a group consisting of Example 22 and Comparative Example 14, (8) a group consisting of Examples 23, 24, 26, and 28 and Comparative Examples 15 and 16, (9) a group consisting of Example 29 and Comparative Example 17, (10) a group consisting of Example 30 and Comparative Example 18, (11) a group consisting of Example 15 and Comparative Example 19, (12) a group consisting of Example 31 and Comparative Example 20, (13) a group consisting of Examples 32, 33, 67, and 68 and Comparative Examples 21, 29, and 30, (14) a group consisting of Example 34 and Comparative Example 22, (15) a group

consisting of Examples 35 to 40, (16) a group consisting of Examples 41 to 44, (17) a group consisting of Examples 45 to 48, (18) a group consisting of Examples 49 to 50, (19) a group consisting of Examples 51 to 52, (20) a group consisting of Examples 53 to 54, (21) a group consisting of Comparative Examples 23 to 24, (22) a group consisting of Examples 55 to 59, and 65 and Comparative Example 26, (23) a group consisting of Examples 60 to 64 and Comparative Example 27, (24) a group consisting of Example 66 and Comparative Example 28, and (25) a group consisting of Examples 27 and 70).

(1) Biobased Content of Resin Composition

From the mass ratio of the block copolymer (I), the plasticizer (II), and the polyolefin-based resin (III) used in the above Examples and Comparative Examples and the biobased content of each component, the biobased content (% by mass) of the resin composition was calculated by the following formula. The results are shown in Tables 3-1 to 13.

$$\text{Biobased content (\% by mass)} = (MI \times XI/100) + (MII \times XII/100) + (MIII \times XIII/100)$$

In the above formula, MI represents the mass ratio (% by mass) of the block copolymer (I) to the total mass of the resin composition, MII represents the mass ratio (% by mass) of the plasticizer (II) to the total mass of the resin composition, and MIII represents the mass ratio (% by mass) of the polyolefin-based resin (III) to the total mass of the resin composition. XI (% by mass) represents the biobased content of the block copolymer (I), XII (% by mass) represents the biobased content of the plasticizer (II), and XIII (% by mass) represents the biobased content of the polyolefin-based resin (III).

(2) Melt Flow Rate Value (MFR)

The melt flow rate values (MFR) of each resin composition shown in Tables 3-1, 3-2, 4, 7, 8, and 10-1 to 11 were measured using a melt indexer L244 (manufactured by Techno Seven Co., Ltd.) under the following measurement conditions in accordance with JIS K7210:1999. The results are shown in Tables 3-1, 3-2, 4, 7, 8, and 10-1 to 11.

(Measurement Conditions)

· Temperature: 230°C
· Load: 2.16 kg
· Die: standard die (diameter: 2.095 mm, length: 8.000 mm)

(3) Hardness

(3-1) Preparation of Sheet of Resin Composition

Pellets of the resin composition obtained in each example were injection-molded by an injection-molding apparatus "EC75SX" (manufactured by Toshiba Machine Co., Ltd.) at a cylinder temperature of 210°C, a mold temperature of 40°C, and an injection pressure of 80 MPa to prepare an injection sheet having a length of 110 mm, a width of 110 mm, and a thickness of 2 mm.

(3-2) Measurement of Hardness

A dumbbell No. 3 test piece (2 mm) was obtained from the injection sheet using a punching blade in accordance with JIS K 6251:2010.
Three of the obtained test pieces were stacked, and the hardness at a thickness of 6 mm was measured using an indenter of a Type A durometer at an indoor temperature of 22°C in accordance with JIS K 6253-3:2012 ((1) 22°C, 0 sec; (2) 22°C, 15 sec). The results are shown in Tables 3-1 to 5, 7, and 10-1 to 11.

(4) Tensile Strength and (5) Tensile Elongation

Using the dumbbell No. 3 test piece (2 mm) prepared in the above (3-2), the tensile strength and the tensile elongation were measured in the flow direction of the TD (transverse) direction in Tables 3-1 to 5, 7, 10-1, and 10-2, and in the MD direction in Table 11, according to JIS K 6251:2010. The higher the numerical values of tensile strength and tensile elongation, the better the tensile properties. The results are shown in Tables 3-1 to 5, 7, and 10-1 to 11.

(6) Compression Set

Each of the thermoplastic elastomer compositions obtained in Examples and Comparative Examples was compression-molded at 160°C for 3 minutes to prepare a cylindrical test piece having a diameter of 13.0±0.5 mm and thicknesses of 6.3±0.3 mm (d0). In accordance with JIS K6262:2013, the cylindrical test piece was compressed and deformed by 25% using a spacer thickness of 4.8 mm (d1), held under an atmosphere of 70°C or 100°C for 22 hours, and then released from the compression. Thereafter, the thickness (d2: mm) of the cylindrical test piece was measured when it was allowed to stand in an atmosphere of 23°C and a relative humidity of 50% for 30 minutes, and the compression set was determined by compression set (%) = 100×(d0-d2)/(d0-d1). The lower the numerical value, the better the rubber elasticity. The results are shown in Tables 3-1 to 4, 7, and 10-1 to 11.

(7) Storage Elastic Modulus

A disk-shaped test piece having a diameter of 25 mm and a thickness of 2 mm was cut out from the sheet prepared in the above (3-1). The dynamic viscoelasticity of the test piece was measured using an ARES-G2 rheometer (manufactured by TA Instruments) under the following conditions, and the storage elastic modulus (G') at each of -22°C and +22°C was measured. The results are shown in Table 5.

(Dynamic Viscoelasticity Measuring Apparatus and Measurement Conditions)

· Parallel plate: diameter of 25 mm
· Vibration mode: torsional vibration
· Strain amount: 0.1%
· Frequency: 1 Hz
· Measurement temperature: -70 to 200°C
· Rate of temperature increase: 3°C/minute

(8) Complex Viscosity

A disk-shaped test piece having a diameter of 25 mm and a thickness of 2 mm was cut out from the sheet prepared in the above (3-1). The complex viscosity of the test piece was measured using an ARES-G2 rheometer (manufactured by TA Instruments) under the following conditions. When the complex viscosity is low in this frequency region, kneading may be performed with low shear, heat generation of the resin and the like may be reduced, and moldability is excellent. The results are shown in Table 5.

· Parallel plate: diameter of 25 mm
· Vibration mode: torsional vibration
· Frequency: 0.25 Hz
· Measurement temperature: 240°C (Example 21 and Comparative Example 13)
250°C (Examples 19 and 20, and Comparative Example 12)
270°C (Example 22 and Comparative Example 14)

(9) Odor

The sheet prepared in the above (3-1) was left to stand in an atmosphere at 23°C and a relative humidity of 50% for 24 hours, and then the odor was evaluated according to the following evaluation criteria. The evaluation results are shown in Tables 3-1 to 5, 7, and 10-1 to 11.

(Evaluation Criteria)

1: No odor (good)
2: Slight odor present (acceptable)

3: Odor present (unacceptable)

(10) Oil Bleeding

The sheet prepared in the above (3-1) was left to stand in an atmosphere at 23°C and a relative humidity of 50% for 24 hours, and then evaluated visually and by touch according to the following evaluation criteria. The evaluation results are shown in Tables 3-1 to 8 and 10-1 to 11.

(Evaluation Criteria)

| | |
|---|---|
| 1: No bleeding | Cannot be confirmed visually and does not remain on the hand (good) |
| 2: Slight bleeding present | Cannot be confirmed visually and slightly remains on the (unacceptable) |
| 3: Bleeding present | Can be confirmed visually, and remains on the hand (unacceptable) |

(11) Coloration

The sheet prepared in the above (3-1) was left to stand under an atmosphere of 23°C and a relative humidity of 50% for 24 hours, and then visually evaluated according to the following evaluation criteria. The evaluation results are shown in Tables 3-1 to 5, 7, and 10-1 to 11.

(Evaluation Criteria)

1: No coloration (good)
2: Slightly colored(acceptable)
3: Colored (unacceptable)

(12) Melt Viscosity

The solution prepared in the same manner as in the one for the evaluation of the adhesive was air-dried at room temperature for 48 hours and then dried in a vacuum dryer at 60°C for 0.5 hours to remove cyclohexane, thereby preparing a cast film of 5 cm × 5 cm × about 0.1 cm. The melt viscosity of a sample obtained by cutting the cast film was measured at 160°C and 180°C using a B-type viscometer BROOKFIELD DV-II + VISCMETER (manufactured by Brookfield). The smaller the value, the better the moldability. The results are shown in Table 6.

(13) Adhesive Force

A smooth SUS304 (BA single-sided SG affixed, thickness of 1.0 mm) or an acryl resin plate (trade name: SUMIPEX E, thickness of 1.5 mm, manufactured by Sumitomo Chemical Co., Ltd.) was used as an adherend. The laminate "for measuring adhesive force" was attached to the adherend so that the face of the adhesive layer was in contact with the adherend, and it was cut into a width of 25 mm to obtain a test piece. The test piece was rolled using a 2 kg rubber roller at a speed of 20 mm/minute, and then allowed to stand in an atmosphere of 23±1°C and a humidity of 50±5% for 30 minutes. Thereafter, in accordance with JIS Z 0237:2009, the 180° peel strength was measured at a peel rate of 300 mm/minute and defined as the peel strength (23°C). The peel strength (23°C) is preferably 10 N/25 mm or more, and more preferably 15 N/25 mm or more. When the peel strength (23°C) is within the above range, the adhesive force to an adherend is excellent. The results are shown in Table 6.

(14) Tensile Test (Going Stress, Returning Stress, Stress Relaxation, and Stress Difference)

A test was performed in an atmosphere of 23°C in accordance with ASTM D882-18 using the film-molded thermoplastic elastomer compositions (MD and TD directions) of Examples 32 to 34, Examples 67 to 68, Comparative Examples 21 to 22, and Comparative Examples 29 to 30. A size of 50.8 mm × 25.4 mm was cut using a die to prepare a test piece (6 pieces), and the thickness (inch) of the center of each test piece was measured. The test results shown in Table 8 were average values of six test pieces. The test piece was inserted into a pneumatic grip of a Bluehill3 software and

Instron5567 equipped with a 100 N load cell (manufactured by Instron), a cross head was operated to extend the test piece at 250 mm/minute until it reached 200% elongation, it was held at 200% elongation for 30 seconds, and then the operation of returning to 0% elongation for 60 seconds was performed, and the stress relaxation property (%) was calculated by the following formula. Note that the 100 N load cell is used with pneumatic film grips that have a grip of 12.7 mm × 25.4 mm on one side and a line grip of 25.4 mm on the opposite side. The results are shown in Table 8.

Stress relaxation property (%) = ["going stress at 200% elongation" - "stress after 200% elongation and holding for 30 seconds"] / "going stress at 200% elongation" × 100

Note that the "stress relaxation property (%)" is represented by, for example, (3) or (6) in Fig. 1 mentioned later, the "going stress at 200% elongation" is represented by, for example, (2) or (5) in Fig. 1 mentioned later, and the "stress after 200% elongation and holding for 30 seconds" is represented by, for example, (2-2) or (5-2) in Fig. 1 mentioned later.

(1) Going stress at first 100% elongation: stress at 100% elongation during elongation from 0% to 200% under the above conditions ((1) in Fig. 1)

(2) Going stress at first 200% elongation: stress at 200% elongation during elongation from 0% to 200% under the above conditions ((2) in Fig. 1)

(3) First time stress relaxation property: reduction rate (%) of stress after elongation from 0% to 200% and holding for 30 seconds under the above conditions (= [(going stress at first 200% elongation) - (stress after first 200% elongation and holding for 30 seconds)] ((3) in Fig. 1) / (going stress at first 200% elongation) × 100)

(4) Returning stress at first 30% elongation: stress at elongation from 0% to 200%, holding for 30 seconds, and then returning to 30% under the above conditions ((4) in Fig. 1)

(5) Going stress at second 200% elongation: stress at 200% elongation when the sample measured once was elongated again from 0% to 200% ((5) in Fig. 1)

(6) Second stress relaxation property: stress reduction rate (%) after elongation from 0% to 200% and holding for 30 seconds under the above conditions (= [(going stress at second 200% elongation) - (stress after second 200% elongation and holding for 30 seconds)] ((6) in Fig. 1) / (going stress at second 200% elongation) × 100)

(7) Returning stress at second 30% elongation: stress at elongation from 0% to 200%, holding for 30 seconds, and then returning to 30% under the above conditions ((7) in Fig. 1)

(8) Ratio of stress difference (%): a ratio (%) of a stress difference ((8) in Fig. 1) obtained by subtracting the "going stress at second 200% elongation ((5) in Fig. 1)" from the "going stress at first 200% elongation ((2) in Fig. 1)" to the "going stress at first 200% elongation ((2) in Fig. 1)" (= [(going stress at first 200% elongation) - (going stress at second 200% elongation)] / (going stress at first 200% elongation) × 100)

(15) Compressive Stress (22°C)

Each of the thermoplastic elastomer compositions obtained in Examples and Comparative Examples was compression-molded at 140°C for 3 minutes to prepare a cylindrical test piece having a diameter of 13.0±0.5 mm and a thicknesses of 6.3 ± 0.3 mm (d0). With AUTOGRAPH AGX-V (manufactured by Shimadzu Corporation), the stress when the cylindrical test piece was deformed at a compression rate of 1 mm/min and a compression width of 4 mm was measured in a state at an ambient temperature of 22°C. The lower the stress, the more flexible it is. The results are shown in Table 12.

(16) Hardness (23°C) and Hardness (-20°C)

The hardness was measured at 23°C and -20°C in accordance with JIS K 7312:1996 using an Asker rubber hardness meter type C. The results are shown in Table 12.

(17) Dropping Point of Gel Composition

The dropping point of each of the obtained gel compositions was measured in accordance with JIS K 2220:2013.

The results are shown in Table 13.

(18) Viscosity of Gel Composition

The viscosity was measured using a rheometer (R/S+ RHEOMETER, manufactured by BROOKFIELD) at 25°C under shear rate conditions of 1 $s^{-1}$, 6 $s^{-1}$, and 50 $s^{-1}$. More specifically, a sample chamber (MB3-25F, manufactured by BROOKFIELD) was charged with about 30 mL of the gel composition, it was attached to a rheometer main body in which a spindle (CC3-25, manufactured by BROOKFIELD) was set, and the shear rate was measured with 1 $s^{-1}$ at 25°C for 300 seconds and stabilized. Subsequently, (1) the shear rate was increased from 1 $s^{-1}$ to 50 $s^{-1}$ over 120 seconds and then decreased from 50 $s^{-1}$ to 1 $s^{-1}$ over 120 seconds, subsequently (2) the shear rate was increased from 1 $s^{-1}$ to 50 $s^{-1}$ over 120 seconds and then decreased from 50 $s^{-1}$ to 1 $s^{-1}$ over 120 seconds, and further subsequently (3) the shear rate was increased from 1 $s^{-1}$ to 50 $s^{-1}$ over 120 seconds and then decreased from 50 $s^{-1}$ to 1 $s^{-1}$ over 120 seconds. The viscosity under the shear rate conditions of 1 $s^{-1}$, 6 $s^{-1}$, and 50 $s^{-1}$ obtained in the measurement of the step (3) of increasing the shear rate from 1 $s^{-1}$ to 50 $s^{-1}$ over 120 seconds was adopted. The 1 $s^{-1}$ viscosity, the 6 $s^{-1}$ viscosity, and the 50 $s^{-1}$ viscosity described in Table 13 mean viscosities under shear rate conditions of the 1 $s^{-1}$, the 6 $s^{-1}$, and the 50 $s^{-1}$, respectively. The results are shown in Table 13.

(19) Oil Separation Degree of Gel Composition

Regarding the oil separation degree, a method was performed in accordance with JIS K 2220:2013. More specifically, 10 g of the gel composition was weighed and added into a wire net conical filter (a conical filter made of a stainless steel wire net having a mesh opening of 250 μm (wire diameter of 160 μm) defined in JIS Z 8801-1:2013) and held at 80°C for 24 hours, and then the mass of the oil separated from the gel composition was measured to calculate the oil separation degree. The results are shown in Table 13.

(20) Worked Penetration of Gel Composition

The consistency (worked penetration) of each of the obtained gel compositions was measured in accordance with item 7 of JIS K 2220:2013. The results are shown in Table 13.

Table 3-1

| | | Example 1 | | Example 2 | | Example 3 | | Example 4 | | Example 5 | | Example 6 | | Example 7 | | Example 8 | | Example 9 | | Example 69 | |
|---|---|---|---|---|---|---|---|---|---|---|---|---|---|---|---|---|---|---|---|---|---|
| | | Part(s) | % | Part(s) | % | Part(s) | % | Part(s) | % | Part(s) | % | Part(s) | % | Part(s) | % | Part(s) | % | Part(s) | % | Part(s) | % |
| Block Copolymer (I) | (P-1) | 100 | 32.8 | 100 | 32.8 | 0 | 0.0 | 25 | 10.4 | 100 | 37.7 | 100 | 37.7 | 30 | 13.3 | 0 | 0.0 | 100 | 40.8 | 25 | 12.8 |
| | (Q-1) | 0 | 0.0 | 0 | 0.0 | 100 | 32.8 | 0 | 0.0 | 0 | 0.0 | 0 | 0.0 | 0 | 0.0 | 100 | 37.7 | 0 | 0.0 | 0 | 0.0 |
| | (R-1) | 0 | 0.0 | 0 | 0.0 | 0 | 0.0 | 10 | 4.2 | 0 | 0.0 | 0 | 0.0 | 70 | 31.1 | 0 | 0.0 | 0 | 0.0 | 0 | 0.0 |
| | (R-2) | 0 | 0.0 | 0 | 0.0 | 0 | 0.0 | 70 | 29.2 | 0 | 0.0 | 0 | 0.0 | 0 | 0.0 | 0 | 0.0 | 0 | 0.0 | 0 | 0.0 |
| | (R-3) | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 70 | 35.9 |
| Plasticizer (II) | Plasticizer A | 170 | 55.7 | 0 | 0.0 | 170 | 55.7 | 80 | 33.3 | 120 | 45.3 | 0 | 0.0 | 60 | 26.7 | 120 | 45.3 | 80 | 32.7 | 80 | 41.0 |
| | Plasticizer B | 0 | 0.0 | 170 | 55.7 | 0 | 0.0 | 0 | 0.0 | 0 | 0.0 | 120 | 45.3 | 0 | 0.0 | 0 | 0.0 | 0 | 0.0 | 0 | 0.0 |
| | Plasticizer C | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| | Plasticizer D | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| | Plasticizer E | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| | Plasticizer F | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| Polyolefin-Based Resin (III) | Homo-PP | 35 | 11.5 | 35 | 11.5 | 35 | 11.5 | 20 | 8.3 | 45 | 17.0 | 45 | 17.0 | 20 | 8.9 | 45 | 17.0 | 65 | 26.5 | 20 | 10.3 |
| | Block-PP | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| | Bio-Block-PP | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| | Bio-LDPE | 0 | 0.0 | 0 | 0.0 | 0 | 0.0 | 35 | 14.6 | 0 | 0.0 | 0 | 0.0 | 45 | 20.0 | 0 | 0.0 | 0 | 0.0 | 0 | 0.0 |
| | Bio-HDPE | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |

Table 3-1 (Continued)

| | | Example 1 | | Example 2 | | Example 3 | | Example 4 | | Example 5 | | Example 6 | | Example 7 | | Example 8 | | Example 9 | | Example 69 | |
|---|---|---|---|---|---|---|---|---|---|---|---|---|---|---|---|---|---|---|---|---|---|
| | | Part(s) | % | Part(s) | % | Part(s) | % | Part(s) | % | Part(s) | % | Part(s) | % | Part(s) | % | Part(s) | % | Part(s) | % | Part(s) | % |
| Resin Composition | | 305 | 100.0 | 305 | 100.0 | 305 | 100.0 | 240 | 100.0 | 265 | 100.0 | 265 | 100.0 | 225 | 100.0 | 265 | 100.0 | 245 | 100.0 | 195 | 100.0 |
| Biobased Content of Resin Composition | % by Mass | 56 | | 56 | | 56 | | 73 | | 45 | | 45 | | 67 | | 45 | | 33 | | 73 | |
| MFR (230°C, 2.16 kg) | g/10 min | 17 | | 41 | | 18 | | 22 | | 4.9 | | 20 | | 13 | | 4.5 | | 4.7 | | 35 | |
| Hardness Type A | 22°C (0 sec) | 48 | | 45 | | 48 | | 62 | | 68 | | 65 | | 65 | | 67 | | 86 | | 63 | |
| | 22°C (15 sec) | 36 | | 34 | | 37 | | 52 | | 60 | | 57 | | 57 | | 59 | | 80 | | 52 | |
| Tensile Strength | MPa | 8.1 | | 6.5 | | 7.8 | | 3.4 | | 15.0 | | 12.0 | | 6.6 | | 14.0 | | 23.0 | | 3.0 | |
| Tensile Elongation | % | 930 | | 840 | | 900 | | 500 | | 900 | | 850 | | 640 | | 910 | | 850 | | 450 | |
| Compression Set (100°C × 22 h) | % | 43 | | 48 | | 39 | | 68 | | 49 | | 60 | | 64 | | 47 | | 50 | | 70 | |
| Odor | | 1 | | 1 | | 1 | | 1 | | 1 | | 1 | | 1 | | 1 | | 1 | | 1 | |
| Oil Bleeding | | 2 | | 2 | | 2 | | 2 | | 1 | | 2 | | 1 | | 1 | | 1 | | 2 | |
| Coloration | | 1 | | 1 | | 1 | | 1 | | 1 | | 1 | | 1 | | 1 | | 1 | | 1 | |

Table 3-2

| | | Example 10 | | Example 11 | | Example 12 | | Example 13 | | Example 14 | | Example 15 | | Example 16 | | Example 17 | | Example 18 | |
|---|---|---|---|---|---|---|---|---|---|---|---|---|---|---|---|---|---|---|---|
| | | Part(s) | % | Part(s) | % | Part(s) | % | Part(s) | % | Part(s) | % | Part(s) | % | Part(s) | % | Part(s) | % | Part(s) | % |
| Block Copolymer (I) | (P-1) | 100 | 40.8 | 0 | 0.0 | 40 | 14.3 | 40 | 14.3 | 40 | 14.3 | 40 | 15.4 | 100 | 32.8 | 100 | 37.7 | 100 | 40.8 |
| | (Q-1) | 0 | 0.0 | 100 | 40.8 | 0 | 0.0 | 0 | 0.0 | 0 | 0.0 | 0 | 0.0 | 0 | 0.0 | 0 | 0.0 | 0 | 0.0 |
| | (R-1) | 0 | 0.0 | 0 | 0.0 | 60 | 21.4 | 60 | 21.4 | 60 | 21.4 | 60 | 23.1 | 0 | 0.0 | 0 | 0.0 | 0 | 0.0 |
| | (R-2) | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| Plasticizer (II) | Plasticizer A | 0 | 0.0 | 80 | 32.7 | 50 | 17.9 | 50 | 17.9 | 50 | 17.9 | 50 | 19.2 | 85 | 27.9 | 60 | 22.6 | 40 | 16.3 |
| | Plasticizer B | 80 | 32.7 | 0 | 0.0 | 0 | 0.0 | 0 | 0.0 | 0 | 0.0 | 0 | 0.0 | 0 | 0.0 | 0 | 0.0 | 0 | 0.0 |
| | Plasticizer C | 0 | 0.0 | 0 | 0.0 | 0 | 0.0 | 0 | 0.0 | 0 | 0.0 | 0 | 0.0 | 85 | 27.9 | 60 | 22.6 | 40 | 16.3 |
| | Plasticizer D | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| | Plasticizer E | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| | Plasticizer F | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| Polyolefin-Based Resin (III) | Homo-PP | 65 | 26.5 | 65 | 26.5 | 50 | 17.9 | 0 | 0.0 | 0 | 0.0 | 0 | 0.0 | 35 | 11.5 | 45 | 17.0 | 65 | 26.5 |
| | Block-PP | 0 | 0.0 | 0 | 0.0 | 0 | 0.0 | 50 | 17.9 | 0 | 0.0 | 0 | 0.0 | 0 | 0.0 | 0 | 0.0 | 0 | 0.0 |
| | Bio-Block-PP | 0 | 0.0 | 0 | 0.0 | 0 | 0.0 | 0 | 0.0 | 50 | 17.9 | 0 | 0.0 | 0 | 0.0 | 0 | 0.0 | 0 | 0.0 |
| | Bio-LDPE | 0 | 0.0 | 0 | 0.0 | 80 | 28.6 | 80 | 28.6 | 80 | 28.6 | 0 | 0.0 | 0 | 0.0 | 0 | 0.0 | 0 | 0.0 |
| | Bio-HDPE | 0 | 0.0 | 0 | 0.0 | 0 | 0.0 | 0 | 0.0 | 0 | 0.0 | 110 | 42.3 | 0 | 0.0 | 0 | 0.0 | 0 | 0.0 |

Table 3-2 (Continued)

| | | | Example 10 | | Example 11 | | Example 12 | | Example 13 | | Example 14 | | Example 15 | | Example 16 | | Example 17 | | Example 18 | |
|---|---|---|---|---|---|---|---|---|---|---|---|---|---|---|---|---|---|---|---|---|
| | | | Part(s) | % | Part(s) | % | Part(s) | % | Part(s) | % | Part(s) | % | Part(s) | % | Part(s) | % | Part(s) | % | Part(s) | % |
| Resin Composition | | | 245 | 100.0 | 245 | 100.0 | 280 | 100.0 | 280 | 100.0 | 280 | 100.0 | 260 | 100.0 | 305 | 100.0 | 265 | 100.0 | 245 | 100.0 |
| Biobased Content of Resin Composition | | % by Mass | 33 | | 33 | | 60 | | 60 | | 64 | | 75 | | 28 | | 23 | | 16 | |
| MFR (230°C, 2.16 kg) | | g/10 min | 5.8 | | 5.0 | | 50 | | 14 | | 11 | | 6.4 | | 13 | | 2.8 | | 4.5 | |
| Hardness | Type A | 22°C (0 sec) | 82 | | 86 | | 86 | | 87 | | 88 | | 90 | | 50 | | 69 | | 85 | |
| | | 22°C (15 sec) | 77 | | 81 | | 79 | | 81 | | 81 | | 85 | | 39 | | 60 | | 80 | |
| Tensile Strength | | MPa | 22.0 | | 25.0 | | 7.2 | | 8.7 | | 8.5 | | 12 | | 8.4 | | 14.2 | | 25 | |
| Tensile Elongation | | % | 820 | | 850 | | 500 | | 540 | | 520 | | 840 | | 960 | | 890 | | 920 | |
| Compression Set (100°C × 22 h) | | % | 57 | | 51 | | 78 | | 75 | | 77 | | 57 | | 47 | | 51 | | 49 | |
| Odor | | | 1 | | 1 | | 1 | | 1 | | 1 | | 1 | | 1 | | 1 | | 1 | |
| Oil Bleeding | | | 1 | | 1 | | 1 | | 1 | | 1 | | 1 | | 1 | | 1 | | 1 | |
| Coloration | | | 1 | | 1 | | 1 | | 1 | | 1 | | 1 | | 1 | | 1 | | 1 | |

Table 4

| | | Comparative Example 1 | | Comparative Example 2 | | Comparative Example 3 | | Comparative Example 4 | | Comparative Example 5 | | Comparative Example 6 | | Comparative Example 7 | | Comparative Example 8 | | Comparative Example 9 | | Comparative Example 10 | | Comparative Example 11 | |
|---|---|---|---|---|---|---|---|---|---|---|---|---|---|---|---|---|---|---|---|---|---|---|---|
| | | Part (s) | % | Part (s) | % | Part (s) | % | Part (s) | % | Part (s) | % | Part (s) | % | Part (s) | % | Part (s) | % | Part (s) | % | Part (s) | % | Part (s) | % |
| Block Copolymer (I) | (P-1) | 100 | 32.8 | 100 | 32.8 | 100 | 32.8 | 100 | 32.8 | 0 | 0.0 | 100 | 37.7 | 100 | 37.7 | 0 | 0.0 | 100 | 40.8 | 100 | 40.8 | 0 | 0.0 |
| | (Q-1) | 0 | 0.0 | 0 | 0.0 | 0 | 0.0 | 0 | 0.0 | 100 | 32.8 | 0 | 0.0 | 0 | 0.0 | 100 | 37.7 | 0 | 0.0 | 0 | 0.0 | 100 | 40.8 |
| | (R-1) | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| | (R-2) | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| Plasticizer (II) | Plasticizer A | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| | Plasticizer B | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| | Plasticizer C | 170 | 55.7 | 0 | 0.0 | 0 | 0.0 | 0 | 0.0 | 170 | 55.7 | 120 | 45.3 | 0 | 0.0 | 120 | 45.3 | 80 | 32.7 | 0 | 0.0 | 80 | 32.7 |
| | Plasticizer D | 0 | 0.0 | 170 | 55.7 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| | Plasticizer E | 0 | 0.0 | 0 | 0.0 | 170 | 55.7 | 0 | 0.0 | 0 | 0.0 | 0 | 0.0 | 120 | 45.3 | 0 | 0.0 | 0 | 0.0 | 80 | 32.7 | 0 | 0.0 |

Table 4 (Continued)

| | | Comparative Example 1 | | Comparative Example 2 | | Comparative Example 3 | | Comparative Example 4 | | Comparative Example 5 | | Comparative Example 6 | | Comparative Example 7 | | Comparative Example 8 | | Comparative Example 9 | | Comparative Example 10 | | Comparative Example 11 | |
|---|---|---|---|---|---|---|---|---|---|---|---|---|---|---|---|---|---|---|---|---|---|---|---|
| | | Part (s) | % | Part (s) | % | Part (s) | % | Part (s) | % | Part (s) | % | Part (s) | % | Part (s) | % | Part (s) | % | Part (s) | % | Part (s) | % | Part (s) | % |
| Plasticizer (II) | Plasticizer F | 0 | 0.0 | 0 | 0.0 | 0 | 0.0 | 170 | 55.7 | 0 | 0.0 | 0 | 0.0 | 0 | 0.0 | 0 | 0.0 | 0 | 0.0 | 0 | 0.0 | 0 | 0.0 |
| Polyolefin-Based Resin (III) | Homo-PP | 35 | 11.5 | 35 | 11.5 | 35 | 11.5 | 35 | 11.5 | 35 | 11.5 | 45 | 17.0 | 45 | 17.0 | 45 | 17.0 | 65 | 26.5 | 65 | 26.5 | 65 | 26.5 |
| | Block-PP | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| | Bio-Block-PP | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| | Bio-LDPE | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| | Bio-HDPE | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 | 0 | 0.0 |
| Resin Composition | | 305 | 100.0 | 305 | 100.0 | 305 | 100.0 | 305 | 100.0 | 305 | 100.0 | 265 | 100.0 | 265 | 100.0 | 265 | 100.0 | 245 | 100.0 | 245 | 100.0 | 245 | 100.0 |
| Biobased Content of Resin Composition | % by Mass | 0 | | 53 | | 53 | | 0 | | 0 | | 0 | | 43 | | 0 | | 0 | | 31 | | 0 | |
| MFR (230°C, 2.16 kg) | g/10 min | 6.1 | | 18 | | 31 | | 2.3 | | 5.9 | | 3.7 | | 19 | | 2.4 | | 2.9 | | 15 | | 2 | |

Table 4 (Continued)

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|---|---|
| | | | Part (s) % | Part (s) % | Part (s) % | Part (s) % | Part (s) % | Part (s) % | Part (s) % | Part (s) % | Part (s) % | Part (s) % | Part (s) % |
| Hard ness | Type A | 22°C (0 sec) | 51 | 36 | 49 | 45 | 47 | 70 | 76 | 69 | 88 | 82 | 86 |
| | | 22°C (15 sec) | 38 | 28 | 39 | 35 | 37 | 61 | 66 | 61 | 83 | 77 | 80 |
| Tensile Strength | | MPa | 8.1 | 7.2 | 3.3 | 11.0 | 8.3 | 14.0 | 2.1 | 14.0 | 26.0 | 15.0 | 27 |
| Tensile Elongation | | % | 950 | 950 | 770 | 940 | 920 | 880 | 400 | 850 | 890 | 660 | 870 |
| Compression Set (100°C × 22 h) | | % | 49 | 60 | 64 | 79 | 45 | 50 | 65 | 45 | 54 | 72 | 48 |
| Odor | | | 1 | 2 | 2 | 3 | 1 | 1 | 3 | 1 | 1 | 2 | 1 |
| Oil Bleeding | | | 2 | 3 | 3 | 3 | 2 | 1 | 3 | 1 | 1 | 2 | 1 |
| Coloration | | | 1 | 2 | 3 | 3 | 1 | 1 | 3 | 1 | 1 | 3 | 1 |

Table 5

| | | | | Example 19 | | Example 20 | | Example 21 | | Comparative Example 12 | | Comparative Example 13 | | Example 22 | | Comparative Example 14 | |
|---|---|---|---|---|---|---|---|---|---|---|---|---|---|---|---|---|---|
| | | | | Part(s) | % | Part(s) | % | Part(s) | % | Part(s) | % | Part(s) | % | Part(s) | % | Part(s) | % |
| Block Copolymer (I) | | | (P-2) | 100 | 50.0 | 100 | 50.0 | 0 | 0.0 | 100 | 50.0 | 0 | 0.0 | 0 | 0.0 | 0 | 0.0 |
| | | | (S-1) | 0 | 0.0 | 0 | 0.0 | 100 | 83.3 | 0 | 0.0 | 100 | 83.3 | 0 | 0.0 | 0 | 0.0 |
| | | | (P-3) | 0 | 0.0 | 0 | 0.0 | 0 | 0.0 | 0 | 0.0 | 0 | 0.0 | 100 | 25.0 | 100 | 25.0 |
| Plasticizer (II) | | | Plasticizer A | 100 | 50.0 | 0 | 0.0 | 20 | 16.7 | 0 | 0.0 | 0 | 0.0 | 300 | 75.0 | 0 | 0.0 |
| | | | Plasticizer B | 0 | 0.0 | 100 | 50.0 | 0 | 0.0 | 0 | 0.0 | 0 | 0.0 | 0 | 0.0 | 0 | 0.0 |
| | | | Plasticizer C | 0 | 0.0 | 0 | 0.0 | 0 | 0.0 | 100 | 50.0 | 20 | 16.7 | 0 | 0.0 | 300 | 75.0 |
| Resin Composition | | | | 200 | 100.0 | 200 | 100.0 | 120 | 100.0 | 200 | 100.0 | 120 | 100.0 | 400 | 100.0 | 400 | 100.0 |
| Biobased Content of Resin Composition | | | % by Mass | 50 | | 50 | | 17 | | 0 | | 0 | | 75 | | 75 | |
| Complex Viscosity | 0.25 Hz | 240 deg.C | Pa·s | - | | - | | 12250 | | - | | 13223 | | - | | - | |
| | | 250 deg.C | Pa·s | 69.3 | | 60.3 | | - | | 74.4 | | - | | - | | - | |
| | | 270 deg.C | Pa·s | - | | - | | - | | - | | - | | 122 | | 186 | |
| Hardness | Type A | 22°C (0 sec) | | 31 | | 31 | | 62 | | 35 | | 57 | | 3 | | 3 | |
| | | 22°C(15 sec) | | 28 | | 27 | | 54 | | 32 | | 51 | | 2 | | 1 | |
| Tensile Strength | | | MPa | 8.7 | | 6.3 | | 10.2 | | 7.0 | | 11.0 | | 4.5 | | 4.5 | |
| Tensile Elongation | | | % | 830 | | 720 | | 1200 | | 800 | | 1100 | | 1250 | | 1300 | |
| Storage Elastic Modulus | | 22°C | Pa | 470211 | | 473669 | | 960501 | | 487321 | | 842475 | | 44320 | | 53524 | |
| | | -22°C | Pa | 654679 | | 568596 | | 1182203 | | 795111 | | 1040280 | | 65328 | | 135203 | |
| Odor | | | | 1 | | 1 | | 1 | | 1 | | 1 | | 1 | | 1 | |
| Oil Bleeding | | | | 1 | | 1 | | 1 | | 1 | | 1 | | 1 | | 1 | |
| Coloration | | | | 1 | | 1 | | 2 | | 1 | | 2 | | 1 | | 1 | |

Table 6

| | | Example 23 | | Example 24 | | Example 25 | | Example 26 | | Comparative Example 15 | | Example 27 | | Example 28 | | Comparative Example 16 | | Example 70 | |
|---|---|---|---|---|---|---|---|---|---|---|---|---|---|---|---|---|---|---|---|
| | | Part(s) | % | Part(s) | % | Part(s) | % | Part(s) | % | Part(s) | % | Part(s) | % | Part(s) | % | Part(s) | % | Part(s) | % |
| Block Copolymer (I) | (T-1) | 100 | 33.3 | 100 | 33.3 | 50 | 16.7 | 0 | 0.0 | 100 | 33.3 | 0 | 0.0 | 0 | 0.0 | 100 | 33.3 | 0 | 0.0 |
| | (R-2) | 0 | 0.0 | 0 | 0.0 | 50 | 16.7 | 0 | 0.0 | 0 | 0.0 | 100 | 28.6 | 100 | 33.3 | 0 | 0.0 | 0 | 0.0 |
| | (U-1) | 0 | 0.0 | 0 | 0.0 | 0 | 0.0 | 100 | 33.3 | 0 | 0.0 | 0 | 0.0 | 0 | 0.0 | 0 | 0.0 | 0 | 0.0 |
| | (R-3) | 0 | 0.0 | 0 | 0.0 | 0 | 0.0 | 0 | 0.0 | 0 | 0.0 | 0 | 0.0 | 0 | 0.0 | 0 | 0.0 | 100 | 28.6 |
| Plasticizer (II) | Plasticizer A | 50 | 16.7 | 0 | 0.0 | 50 | 16.7 | 50 | 16.7 | 0 | 0.0 | 100 | 28.6 | 0 | 0.0 | 0 | 0.0 | 100 | 28.6 |
| | Plasticizer B | 0 | 0.0 | 50 | 16.7 | 0 | 0.0 | 0 | 0.0 | 0 | 0.0 | 0 | 0.0 | 50 | 16.7 | 0 | 0.0 | 0 | 0.0 |
| | Plasticizer C | 0 | 0.0 | 0 | 0.0 | 0 | 0.0 | 0 | 0.0 | 50 | 16.7 | 0 | 0.0 | 0 | 0.0 | 0 | 0.0 | 0 | 0.0 |
| | Plasticizer E | 0 | 0.0 | 0 | 0.0 | 0 | 0.0 | 0 | 0.0 | 0 | 0.0 | 0 | 0.0 | 0 | 0.0 | 50 | 16.7 | 0 | 0.0 |
| Tackifier (IV) | Tackifier Resin A | 150 | 50.0 | 150 | 50.0 | 150 | 50.0 | 150 | 50.0 | 150 | 50.0 | 150 | 42.8 | 150 | 50.0 | 150 | 50.0 | 150 | 42.8 |
| Antioxidant | ADEKASAB AO-60 | 0.2 | 0.1 | 0.2 | 0.1 | 0.2 | 0.1 | 0.2 | 0.1 | 0.2 | 0.1 | 0.2 | 0.1 | 0.2 | 0.1 | 0.2 | 0.1 | 0.2 | 0.1 |
| Resin Composition | | 300.2 | 100.0 | 300.2 | 100.0 | 300.2 | 100.0 | 300.2 | 100.0 | 300.2 | 100.0 | 350.2 | 100.0 | 300.2 | 100.0 | 300.2 | 100.0 | 350.2 | 100.0 |
| Biobased Content of Resin Composition | % by Mass | 17 | | 17 | | 30 | | 17 | | 0 | | 52 | | 43 | | 16 | | 52 | |
| Melt Viscosity 160°C | mPa·s | 21,000 | | 18,000 | | 74,000 | | 29,000 | | 23,900 | | 132,000 | | 123,000 | | 22,000 | | 29,300 | |
| Melt Viscosity 180°C | mPa·s | 9,500 | | 8,500 | | 26,200 | | 15,500 | | 11,500 | | 17,600 | | 18,300 | | 11,300 | | 13,000 | |

Table 6 (Continued)

| | | Example 23 | | Example 24 | | Example 25 | | Example 26 | | Comparative Example 15 | | Example 27 | | Example 28 | | Comparative Example 16 | | Example 70 | |
|---|---|---|---|---|---|---|---|---|---|---|---|---|---|---|---|---|---|---|---|
| | | Part(s) | % | Part(s) | % | Part(s) | % | Part(s) | % | Part(s) | % | Part(s) | % | Part(s) | % | Part(s) | % | Part(s) | % |
| Adhesive Force with respect to SUS | N/25 mm | 33 | | 22 | | 29 | | 27 | | 36 | | 29 | | 23 | | 1.5 | | 30 | |
| Adhesive Force with respect to PMMA | N/25 mm | 21 | | 15 | | 16 | | 22 | | 25 | | 21 | | 21 | | 19 | | 19 | |
| Oil Bleeding | | 1 | | 1 | | 1 | | 1 | | 1 | | 1 | | 1 | | 3 | | 2 | |

Table 7

| | | | Example 29 | | Example 30 | | Example 15 | | Example 31 | | | Comparative Example 17 | | Comparative Example 18 | | Comparative Example 19 | | Comparative Example 20 | |
|---|---|---|---|---|---|---|---|---|---|---|---|---|---|---|---|---|---|---|---|
| | | | Part(s) | % | Part(s) | % | Part(s) | % | Part(s) | % | | Part(s) | % | Part(s) | % | Part(s) | % | Part(s) | % |
| Block Copolymer (I) | | (P-1) | 25 | 10.0 | 30 | 12.8 | 40 | 15.4 | 100 | 37.7 | | 25 | 10.0 | 30 | 12.8 | 40 | 15.4 | 100 | 37.7 |
| | | (R-1) | 10 | 4.0 | 70 | 29.8 | 60 | 23.1 | 0 | 0.0 | | 10 | 4.0 | 70 | 29.8 | 60 | 23.1 | 0 | 0.0 |
| | | (R-2) | 70 | 28.0 | 0 | 0.0 | 0 | 0.0 | 0 | 0.0 | | 70 | 28.0 | 0 | 0.0 | 0 | 0 | 0 | 0.0 |
| Plasticizer (II) | | Plasticizer A | 80 | 32.0 | 60 | 25.5 | 50 | 19.2 | 120 | 45.3 | | 0 | 0.0 | 0 | 0.0 | 0 | 0 | 0 | 0.0 |
| | | Plasticizer C | 0 | 0.0 | 0 | 0.0 | 0 | 0.0 | 0 | 0.0 | | 80 | 32.0 | 60 | 25.5 | 50 | 19.2 | 120 | 45.3 |
| Polyolefin-Based Resin (III) | | Homo-PP | 0 | 0.0 | 0 | 0.0 | 0 | 0.0 | 0 | 0.0 | | 0 | 0.0 | 0 | 0.0 | 0 | 0 | 0 | 0.0 |
| | | Bio-LDPE | 0 | 0.0 | 0 | 0.0 | 0 | 0.0 | 0 | 0.0 | | 0 | 0.0 | 0 | 0.0 | 0 | 0 | 0 | 0.0 |
| | | Bio-HDPE | 65 | 260 | 75 | 31.9 | 110 | 42.3 | 45 | 17.0 | | 65 | 26.0 | 75 | 31.9 | 110 | 42.3 | 45 | 17.0 |
| Resin Composition | | | 250 | 100.0 | 235 | 100.0 | 260 | 100.0 | 265 | 100.0 | | 250 | 100.0 | 235 | 100.0 | 260 | 100.0 | 265 | 100.0 |
| Biobased Content of Resin Composition | | % by Mass | 82 | | 76 | | 75 | | 69 | | | 50 | | 50 | | 55 | | 16 | |
| MFR (230°C, 2.16 kg) | | g/10 min | 18 | | 6.8 | | 6.4 | | 0.3 | | | 16.0 | | 6.5 | | 6.0 | | 0.4 | |
| Hardness | Type A | 22°C (0 sec) | 70 | | 80 | | 90 | | 51 | | | 69 | | 81 | | 90 | | 55 | |
| | | 22°C (15 sec) | 58 | | 70 | | 85 | | 41 | | | 57 | | 71 | | 85 | | 45 | |
| Tensile Strength | | Mpa | 3.6 | | 8.1 | | 12.1 | | 12.8 | | | 4.0 | | 9.1 | | 13.1 | | 13.4 | |
| Tensile Elongation | | % | 450 | | 780 | | 840 | | 1050 | | | 520 | | 870 | | 540 | | 1050 | |
| Compression Set (100°C × 22 h) | | % | 72 | | 56 | | 57 | | 42 | | | 73 | | 57 | | 60 | | 45 | |
| Odor | | | 1 | | 1 | | 1 | | 1 | | | 1 | | 1 | | 1 | | 1 | |
| Oil Bleeding | | | 1 | | 1 | | 1 | | 1 | | | 1 | | 1 | | 1 | | 1 | |
| Coloration | | | 1 | | 1 | | 1 | | 1 | | | 1 | | 1 | | 1 | | 1 | |

Table 8

| | | Example 32 | Example 33 | Example 34 | Example 67 | Example 68 | Comparative Example 21 | Comparative Example 22 | Comparative Example 29 | Comparative Example 30 |
|---|---|---|---|---|---|---|---|---|---|---|
| | | % | % | % | % | % | % | % | % | % |
| Block Copolymer (I) | (P-4) | 60 | 60 | 48 | - | - | 60 | 48 | - | - |
| | (P-2) | - | - | - | 60 | - | - | - | 60 | - |
| | (P-6) | - | - | - | - | 60 | - | - | - | 60 |
| Plasticizer (II) | Plasticizer A | 20 | - | 16 | 20 | 20 | - | - | - | - |
| | Plasticizer B | - | 20 | - | - | - | - | - | - | - |
| | Plasticizer G | - | - | - | - | - | 20 | 16 | 20 | 20 |
| Polyolefin-Based Resin (III) | Polyolefin Elastomer | - | - | 20 | - | - | - | 20 | - | - |
| Tackifier (IV) | Tackifier Resin B | 10 | 10 | 8 | 10 | 10 | 10 | 8 | 10 | 10 |
| Polystyrene-Based Resin | PS3190 | 10 | 10 | 8 | 10 | 10 | 10 | 8 | 10 | 10 |
| MFR (230°C, 2.16 kg) | g/10 min | 2.2 | 2.2 | 2.8 | 4.8 | 2.0 | 1.7 | 2.5 | 4.6 | 1.8 |

Table 8 (Continued)

| | | | Example 32 | | Example 33 | | Example 34 | | Example 67 | | Example 68 | | Comparative Example 21 | | Comparative Example 22 | | Comparative Example 29 | | Comparative Example 30 | |
|---|---|---|---|---|---|---|---|---|---|---|---|---|---|---|---|---|---|---|---|---|
| | | | % | | % | | % | | % | | % | | % | | % | | % | | % | |
| Biobased Content of Resin Composition | | % by Mass | 20 | | 20 | | 16 | | 20 | | 20 | | 0 | | 0 | | 0 | | 0 | |
| Film Thickness | | µm | 152 | | 148 | | 155 | | 151 | | 153 | | 153 | | 157 | | 152 | | 153 | |
| Oil Bleeding | | | 1 | | 1 | | 1 | | 1 | | 1 | | 1 | | 1 | | 1 | | 1 | |
| Direction | | | MD | TD | MD | TD | MD | TD | MD | TD | MD | TD | MD | TD | MD | TD | MD | TD | MD | TD |
| Tensile Test | (1) Going Stress at First 100% Elongation | MPa | 1.91 | 0.87 | 1.85 | 0.89 | 1.68 | 1.05 | 1.32 | 0.92 | 2.01 | 0.77 | 2.25 | 0.89 | 1.98 | 1.07 | 1.50 | 0.95 | 2.13 | 0.80 |
| | Going Stress at First 100% Elongation MD Direction/TD Direction | | 2.2 | | 2.1 | | 1.6 | | 1.4 | | 2.6 | | 2.5 | | 1.9 | | 1.6 | | 2.7 | |
| | (2) Going Stress at First 200% Elongation | MPa | 2.64 | 1.07 | 2.58 | 1.10 | 2.36 | 1.36 | 1.82 | 1.13 | 2.84 | 1.02 | 3.21 | 1.12 | 2.87 | 1.30 | 2.11 | 1.19 | 2.97 | 1.06 |
| | Going Stress at First 200% Elongation MD Direction/TD Direction | | 2.5 | | 2.3 | | 1.7 | | 1.6 | | 2.8 | | 2.9 | | 2.2 | | 1.8 | | 2.8 | |
| | (2-2) Stress after First 200% Elongation and Holding for 30 Seconds | MPa | 1.97 | 0.95 | 1.99 | 0.99 | 1.79 | 1.14 | 1.56 | 1.06 | 2.21 | 0.95 | 2.33 | 0.99 | 2.12 | 1.09 | 1.76 | 1.11 | 2.28 | 0.98 |

Table 8 (Continued)

| | | | Example 32 | | Example 33 | | Example 34 | | Example 67 | | Example 68 | | Comparative Example 21 | | Comparative Example 22 | | Comparative Example 29 | | Comparative Example 30 | |
|---|---|---|---|---|---|---|---|---|---|---|---|---|---|---|---|---|---|---|---|---|
| | | | % | | % | | % | | % | | % | | % | | % | | % | | % | |
| | (3) First Time Stress Relaxation Rate | % | 25.26 | 11.43 | 22.89 | 10.10 | 24.15 | 15.76 | 14.35 | 5.97 | 22.3 | 6.75 | 27.32 | 11.75 | 26.12 | 16.20 | 17.0 | 6.47 | 23.2 | 7.95 |
| | (4) Returning Stress at First 30% Elongation | MPa | 0.35 | 0.35 | 0.40 | 0.38 | 0.37 | 0.29 | 0.42 | 0.39 | 0.35 | 0.30 | 0.30 | 0.38 | 0.32 | 0.31 | 0.40 | 0.39 | 0.33 | 0.30 |
| | (5) Going Stress at Second 200% Elongation | MPa | 2.32 | 1.04 | 2.26 | 1.07 | 2.09 | 1.15 | 1.66 | 1.11 | 2.40 | 0.99 | 2.76 | 1.09 | 2.49 | 1.21 | 1.89 | 1.16 | 2.48 | 1.02 |
| | Going Stress at Second 200% Elongation MD Direction/TD Direction | | 2.2 | | 2.1 | | 1.8 | | 1.5 | | 2.4 | | 2.5 | | 2.1 | | 1.6 | | 2.4 | |
| | (5-2) Stress after Second 200% Elongation and Holding for 30 Seconds | MPa | 1.89 | 0.93 | 1.91 | 0.98 | 1.74 | 1.00 | 1.52 | 1.06 | 2.12 | 0.94 | 2.22 | 0.98 | 2.05 | 1.05 | 1.70 | 1.10 | 2.19 | 0.96 |
| | (6) Second Stress Relaxation Rate | % | 18.40 | 10.60 | 15.54 | 8.41 | 16.88 | 13.50 | 8.36 | 4.54 | 11.5 | 5.09 | 19.42 | 10.17 | 17.82 | 12.95 | 9.80 | 4.87 | 11.7 | 5.93 |
| | (7) Returning Stress at Second 30% Elongation | MPa | 0.33 | 0.34 | 0.38 | 0.36 | 0.37 | 0.30 | 0.4 | 0.56 | 0.34 | 0.37 | 0.28 | 0.36 | 0.31 | 0.28 | 0.38 | 0.37 | 0.32 | 0.29 |
| | (8) Ratio of Stress Difference | % | 12.10 | 2.80 | 12.40 | 2.72 | 11.40 | 15.40 | 8.80 | 1.80 | 15.50 | 2.90 | 14.00 | 2.68 | 13.20 | 6.92 | 10.4 | 2.5 | 16.5 | 3.8 |

Table 9

| | | Production Example 11 | | Production Example 12 | | Production Example 13 | |
|---|---|---|---|---|---|---|---|
| | | T-2 | | T-3 | | T-4 | |
| | | Part(s) | % | Part(s) | % | Part(s) | % |
| Block Copolymer (I) | (P-1) | 100 | 40.0 | 100 | 25.0 | 100 | 40.0 |
| Plasticizer (II) | Plasticizer A | 150 | 60.0 | 0 | 0.0 | 0 | 0.0 |
| | Plasticizer B | 0 | 0.0 | 300 | 75.0 | 0 | 0.0 |
| | Plasticizer E | 0 | 0.0 | 0 | 0.0 | 150 | 60.0 |
| Resin Composition | | 250 | 100.0 | 400 | 100.0 | 250 | 100.0 |
| Biobased Content of Resin Composition | % by Mass | 60 | | 75 | | 60 | |

Table 10-1

| | | Example 35 | | Example 36 | | Example 37 | | Example 38 | | Example 39 | | Example 40 | | Example 41 | | Example 42 | |
|---|---|---|---|---|---|---|---|---|---|---|---|---|---|---|---|---|---|
| | | Part(s) | % | Part(s) | % | Part(s) | % | Part(s) | % | Part(s) | % | Part(s) | % | Part(s) | % | Part(s) | % |
| Block Copolymer (I) | (P-1) | 100 | 33.3 | 0 | 0.0 | 0 | 0.0 | 0 | 0.0 | 100 | 33.3 | 0 | 0.0 | 100 | 35.7 | 0 | 0.0 |
| Plasticizer (II) | Plasticizer A | 150 | 50.0 | 0 | 0.0 | 0 | 0.0 | 0 | 0.0 | 150 | 50.0 | 0 | 0.0 | 150 | 53.6 | 0 | 0.0 |
| | Plasticizer B | 0 | 0.0 | 0 | 0.0 | 0 | 0.0 | 0 | 0.0 | 0 | 0.0 | 0 | 0.0 | 0 | 0.0 | 0 | 0.0 |
| | Plasticizer E | 0 | 0.0 | 0 | 0.0 | 0 | 0.0 | 0 | 0.0 | 0 | 0.0 | 0 | 0.0 | 0 | 0.0 | 0 | 0.0 |
| | Plasticizer I | 0 | 0.0 | 0 | 0.0 | 0 | 0.0 | 0 | 0.0 | 0 | 0.0 | 0 | 0.0 | 0 | 0.0 | 0 | 0.0 |
| Polyolefin-Based Resin (III) | Homo-PP A | 50 | 16.7 | 20 | 16.7 | 0 | 0.0 | 0 | 0.0 | 0 | 0.0 | 0 | 0.0 | 30 | 10.7 | 12 | 10.7 |
| | Homo-PP B | 0 | 0.0 | 0 | 0.0 | 20 | 16.7 | 0 | 0.0 | 0 | 0.0 | 0 | 0.0 | 0 | 0.0 | 0 | 0.0 |
| | Homo-PP C | 0 | 0.0 | 0 | 0.0 | 0 | 0.0 | 20 | 16.7 | 0 | 0.0 | 0 | 0.0 | 0 | 0.0 | 0 | 0.0 |
| | Homo-PP D | 0 | 0.0 | 0 | 0.0 | 0 | 0.0 | 0 | 0.0 | 50 | 16.7 | 20 | 16.7 | 0 | 0.0 | 0 | 0.0 |
| | Bio-LDPE | 0 | 0.0 | 0 | 0.0 | 0 | 0.0 | 0 | 0.0 | 0 | 0.0 | 0 | 0.0 | 0 | 0.0 | 0 | 0.0 |
| Oil-Extended Compound for Dry Blend (V) | (T-2) | 0 | 0.0 | 100 | 83.3 | 100 | 83.3 | 100 | 83.3 | 0 | 0.0 | 100 | 83.3 | 0 | 0.0 | 100 | 89.3 |
| | (T-3) | 0 | 0.0 | 0 | 0.0 | 0 | 0.0 | 0 | 0.0 | 0 | 0.0 | 0 | 0.0 | 0 | 0.0 | 0 | 0.0 |
| Resin Composition | | 300 | 100.0 | 120 | 100.0 | 120 | 100.0 | 120 | 100.0 | 300 | 100.0 | 120 | 100.0 | 280 | 100.0 | 112 | 100.0 |
| Biobased Content of Resin Composition | % by Mass | 50 | | 50 | | 50 | | 50 | | 50 | | 50 | | 54 | | 54 | |
| MFR (230°C, 2.16 kg) | g/10 min | 43 | | 32 | | 2.7 | | 5.7 | | 4.1 | | 1.4 | | 3.1 | | 0.4 | |

(continued)

| | | | Example 35 | Example 36 | Example 37 | Example 38 | Example 39 | Example 40 | Example 41 | Example 42 |
|---|---|---|---|---|---|---|---|---|---|---|
| | | | Part(s) / % | Part(s) / % | Part(s) / % | Part(s) / % | Part(s) / % | Part(s) / % | Part(s) / % | Part(s) / % |
| Hardness | Type A | 22°C (0 sec) | 61 | 61 | 66 | 67 | 67 | 67 | 47 | 49 |
| | | Difference from Pellet (A) | - | 0 | 5 | 6 | - | 0 | - | 2 |
| | | Rate of Change with respect to Pellet (%) | - | 0.0 | 8.2 | 9.8 | - | 0.0 | - | 4.3 |
| | | 22°C (15 sec) | 54 | 52 | 58 | 60 | 60 | 58 | 38 | 38 |
| | | Difference from Pellet (A) | - | -2 | 4 | 6 | - | -2 | - | 0 |
| | | Rate of Change with respect to Pellet (%) | - | 3.7 | 7.4 | 11 | - | 3.3 | - | 0 |
| Tensile Elongation | | % | 920 | 860 | 880 | 840 | 910 | 760 | 1000 | 950 |
| | | Difference from Pellet (%) | | -60 | -40 | -80 | - | -150 | - | -50 |
| | | Rate of Change with respect to Pellet (%) | - | 6.5 | 4.3 | 8.7 | - | 16 | - | 5.0 |

(continued)

| | | Example 35 | | Example 36 | | Example 37 | | Example 38 | | Example 39 | | Example 40 | | Example 41 | | Example 42 | |
|---|---|---|---|---|---|---|---|---|---|---|---|---|---|---|---|---|---|
| | | Part(s) | % | Part(s) | % | Part(s) | % | Part(s) | % | Part(s) | % | Part(s) | % | Part(s) | % | Part(s) | % |
| **Compression** Set (70°C × 22 h) | % | 40 | | 40 | | 35 | | 35 | | 34 | | 34 | | 30 | | 27 | |
| | Difference from Pellet (%) | - | | 0 | | -5 | | -5 | | - | | 0 | | - | | -3 | |
| | Rate of Change with respect to Pellet (%) | - | | 0 | | 13 | | 13 | | - | | 0 | | - | | 10 | |
| Compression Set (100°C × 22 h) | % | 49 | | 46 | | 49 | | 49 | | 42 | | 47 | | 43 | | 41 | |
| | Difference from Pellet (%) | - | | -3 | | 0 | | 0 | | - | | 5 | | - | | -2 | |
| | Rate of Change with respect to Pellet (%) | - | | 6.1 | | 0 | | 0 | | - | | 12 | | - | | 4.7 | |
| Odor | | 1 | | 1 | | 1 | | 1 | | 1 | | 1 | | 1 | | 1 | |
| Oil Bleeding | | 1 | | 1 | | 1 | | 1 | | 1 | | 1 | | 1 | | 1 | |
| Coloration | | 1 | | 1 | | 1 | | 1 | | 1 | | 1 | | 1 | | 1 | |

Table 10-1 (Continued)

| | | Example 43 | | Example 44 | | Example 45 | | Example 46 | | Example 47 | | Example 48 | | Example 49 | | Example 50 | |
|---|---|---|---|---|---|---|---|---|---|---|---|---|---|---|---|---|---|
| | | Part(s) | % | Part(s) | % | Part(s) | % | Part(s) | % | Part(s) | % | Part(s) | % | Part(s) | % | Part(s) | % |
| Block Copolymer (I) | (P-1) | 100 | 35.7 | 0 | 0.0 | 100 | 28.6 | 0.0 | 0.0 | 100 | 28.6 | 0 | 0.0 | 100 | 23.8 | 0 | 0.0 |
| Plasticizer (II) | Plasticizer A | 150 | 53.6 | 0 | 0.0 | 150 | 42.9 | 0.0 | 0.0 | 150 | 42.9 | 0 | 0.0 | 0 | 0.0 | 0 | 0.0 |
| | Plasticizer B | 0 | 0.0 | 0 | 0.0 | 0 | 0.0 | 0 | 0.0 | 0 | 0.0 | 0 | 0.0 | 300 | 71.4 | 0 | 0.0 |
| | Plasticizer E | 0 | 0.0 | 0 | 0.0 | 0 | 0.0 | 0 | 0.0 | 0 | 0.0 | 0 | 0.0 | 0 | 0.0 | 0 | 0.0 |
| | Plasticizer I | 0 | 0.0 | 0 | 0.0 | 0 | 0.0 | 0 | 0.0 | 0 | 0.0 | 0 | 0.0 | 0 | 0.0 | 0 | 0.0 |
| Polyolefin-Based Resin (III) | Homo-PP A | 0 | 0.0 | 0 | 0.0 | 100 | 28.6 | 40.0 | 28.6 | 0 | 0.0 | 0 | 0.0 | 0 | 0.0 | 0 | 0.0 |
| | Homo-PP B | 0 | 0.0 | 0 | 0.0 | 0 | 0.0 | 0 | 0.0 | 0 | 0.0 | 0 | 0.0 | 0 | 0.0 | 0 | 0.0 |
| | Homo-PP C | 0 | 0.0 | 0 | 0.0 | 0 | 0.0 | 0 | 0.0 | 0 | 0.0 | 0 | 0.0 | 0 | 0.0 | 0 | 0.0 |
| | Homo-PP D | 30 | 10.7 | 12 | 10.7 | 0 | 0.0 | 0 | 0.0 | 100 | 28.6 | 40 | 28.6 | 0 | 0.0 | 0 | 0.0 |
| | Bio-LDPE | 0 | 0.0 | 0 | 0.0 | 0 | 0.0 | 0 | 0.0 | 0 | 0.0 | 0 | 0.0 | 20 | 4.8 | 5 | 4.8 |
| Oil-Extended Compound for Dry Blend (V) | (T-2) | 0 | 0.0 | 100 | 89.3 | 0 | 0.0 | 100 | 71.4 | 0 | 0.0 | 100 | 71.4 | 0 | 0.0 | 0 | 0.0 |
| | (T-3) | 0 | 0.0 | 0 | 0.0 | 0 | 0.0 | 0 | 0.0 | 0 | 0.0 | 0 | 0.0 | 0 | 0.0 | 100 | 95.2 |
| Resin Composition | | 280 | 100.0 | 112 | 100.0 | 350 | 100.0 | 140 | 100 | 350 | 100 | 140 | 100.0 | 420 | 100.0 | 105 | 100.0 |
| Biobased Content of Resin Composition | % by Mass | 54 | | 54 | | 43 | | 43 | | 43 | | 43 | | 71 | | 71 | |
| MFR (230°C, 2.16 kg) | g/10 min | 0.4 | | 0.2 | | 47 | | 70 | | 6.2 | | 7.6 | | 6.7 | | 2.4 | |

(continued)

| | | | Example 43 | Example 44 | Example 45 | Example 46 | Example 47 | Example 48 | Example 49 | Example 50 |
|---|---|---|---|---|---|---|---|---|---|---|
| | | | Part(s) / % | Part(s) / % | Part(s) / % | Part(s) / % | Part(s) / % | Part(s) / % | Part(s) / % | Part(s) / % |
| Hardness | Type A | 22°C (0 sec) | 50 | 45 | 83 | 82 | 82 | 81 | 9.0 | 8.8 |
| | | Difference from Pellet (A) | - | -5 | - | -1 | - | -1 | - | -0.2 |
| | | Rate of Change with respect to Pellet (%) | - | 10.0 | - | 1.2 | - | 1.2 | - | 2.2 |
| | | 22°C (15 sec) | 40 | 36 | 79 | 77 | 79 | 76 | 6.1 | 5.2 |
| | | Difference from Pellet (A) | - | -4 | | 2 | - | 3 | - | |
| | | Rate of Change with respect to Pellet (%) | - | 10 | | 2.5 | - | 3.8 | - | |
| Tensile Elongation | | % | 950 | 880 | 790 | 660 | 850 | 620 | 1200 | 1200 |
| | | Difference from Pellet (%) | - | -70 | - | -180 | - | -230 | - | 0 |
| | | Rate of Change with respect to Pellet (%) | - | 7.4 | - | 23 | - | 27 | - | 0 |

(continued)

| | | Example 43 | Example 44 | Example 45 | Example 46 | Example 47 | Example 48 | Example 49 | Example 50 |
|---|---|---|---|---|---|---|---|---|---|
| | | Part(s) / % | Part(s) / % | Part(s) / % | Part(s) / % | Part(s) / % | Part(s) / % | Part(s) / % | Part(s) / % |
| Compression Set (70°C × 22 h) | % | 31 | 30 | 51 | 51 | 39 | 41 | 29 | 24 |
| | Difference from Pellet (%) | - | -1 | - | 0 | - | 2 | - | -5 |
| | Rate of Change with respect to Pellet (%) | - | 3.2 | - | 0 | - | 5.1 | - | 17 |
| Compression Set (100°C × 22 h) | % | 44 | 43 | 55 | 56 | 45 | 46 | - | - |
| | Difference from Pellet (%) | - | -1 | - | 1 | - | 1 | - | - |
| | Rate of Change with respect to Pellet (%) | - | 2.3 | - | 1.8 | - | 22 | - | - |
| Odor | | 1 | 1 | 1 | 1 | 1 | 1 | 1 | 1 |
| Oil Bleeding | | 1 | 1 | 1 | 1 | 1 | 1 | 1 | 1 |
| Coloration | | 1 | 1 | 1 | 1 | 1 | 1 | 1 | 1 |

Table 10-2

| | | | Example 51 | | Example 52 | | Example 53 | | Example 54 | |
|---|---|---|---|---|---|---|---|---|---|---|
| | | | Part(s) | % | Part(s) | % | Part(s) | % | Part(s) | % |
| Block Copolymer (I) | | (P-1) | 100 | 33.3 | 0 | 0.0 | 100 | 28.6 | 0 | 0.0 |
| Plasticizer (II) | | Plasticizer A | 150 | 50.0 | 0 | 0.0 | 150 | 42.9 | 0 | 0.0 |
| | | Plasticizer E | 0 | 0.0 | 0 | 0.0 | 0 | 0.0 | 0 | 0.0 |
| | | Plasticizer I | 0 | 0.0 | 0 | 0.0 | 0 | 0.0 | 0 | 0.0 |
| Polyolefin-Based Resin (III) | | Homo-PP A | 0 | 0.0 | 0 | 0.0 | 0 | 0.0 | 0 | 0.0 |
| | | Homo-PP B | 0 | 0.0 | 0 | 0.0 | 0 | 0.0 | 0 | 0.0 |
| | | Homo-PP C | 0 | 0.0 | 0 | 0.0 | 0 | 0.0 | 0 | 0.0 |
| | | Homo-PP D | 50 | 16.7 | 20 | 16.7 | 100 | 28.6 | 40 | 28.6 |
| | | Bio-LDPE | 0 | 0.0 | 0 | 0.0 | 0 | 0.0 | 0 | 0.0 |
| Oil-Extended Compound for Dry Blend (V) | | (T-2) | 0 | 0.0 | 100 | 83.3 | 0 | 0.0 | 100 | 71.4 |
| Resin Composition | | | 300 | 100.0 | 120 | 100.0 | 350 | 100.0 | 140 | 100.0 |
| Biobased Content of Resin Composition | | % by Mass | 50 | | 50 | | 43 | | 43 | |
| MFR (230°C, 2.16 kg) | | g/10 min | 4.1 | | 6.2 | | 1.4 | | 7.6 | |
| Hardness | Type A | 22°C (0 sec) | 65 | | 61 | | 68 | | 71 | |
| | | Difference from Pellet (A) | - | | -4 | | - | | 3 | |
| | | Rate of Change with respect to Pellet (%) | - | | 6.2 | | - | | 4.4 | |
| | | 22°C (15 sec) | 57 | | 55 | | 65 | | 67 | |
| | | Difference from Pellet (A) | - | | -2 | | - | | 2 | |
| | | Rate of Change with respect to Pellet (%) | - | | 3.5 | | - | | 3.1 | |

(continued)

| | | Example 51 | | Example 52 | | Example 53 | | Example 54 | |
|---|---|---|---|---|---|---|---|---|---|
| | | Part(s) | % | Part(s) | % | Part(s) | % | Part(s) | % |
| Tensile Elongation | % | 910 | | 850 | | 810 | | 750 | |
| | Difference from Pellet (%) | - | | 60 | | - | | 60 | |
| | Rate of Change with respect to Pellet (%) | - | | 6.6 | | - | | 7.4 | |
| Compression Set (100°C × 22 h) | % | 46 | | 52 | | 52 | | 56 | |
| | Difference from Pellet (%) | - | | 6 | | - | | 4 | |
| | Rate of Change with respect to Pellet (%) | - | | 13 | | - | | 7.7 | |
| Odor | | 1 | | 1 | | 1 | | 1 | |
| Oil Bleeding | | 1 | | 1 | | 1 | | 1 | |
| Coloration | | 1 | | 1 | | 1 | | 1 | |

Table 11

| | | Comparative Example 23 | | Comparative Example 24 | | Comparative Example 25 | |
|---|---|---|---|---|---|---|---|
| | | Part(s) | % | Part(s) | % | Part(s) | % |
| Block Copolymer (I) | (P-1) | 100 | 33.3 | 0 | 0.0 | 100 | 23.8 |
| Plasticizer (II) | Plasticizer A | 0 | 0.0 | 0 | 0.0 | 0 | 0.0 |
| | Plasticizer E | 150 | 50.0 | 0 | 0.0 | 0 | 0.0 |
| | Plasticizer I | 0 | 0.0 | 0 | 0.0 | 300 | 71.4 |
| Polyolefin-Based Resin (III) | Homo-PP A | 50 | 16.7 | 20 | 16.7 | 0 | 0.0 |
| | Homo-PP B | 0 | 0.0 | 0 | 0.0 | 0 | 0.0 |
| | Homo-PP C | 0 | 0.0 | 0 | 0.0 | 0 | 0.0 |
| | Homo-PP D | 0 | 0.0 | 0 | 0.0 | 0 | 0.0 |
| | Bio-LDPE | 0 | 0.0 | 0 | 0.0 | 20 | 4.8 |
| Oil-Extended Compound for Dry Blend (V) | (T-2) | 0 | 0.0 | 0 | 0.0 | 0 | 0.0 |
| | (T-3) | 0 | 0.0 | 0 | 0.0 | 0 | 0.0 |
| | (T-4) | 0 | 0.0 | 100 | 83.3 | 0 | 0 |
| Resin Composition | | 300 | 100.0 | 120 | 100.0 | 420 | 100.0 |
| Biobased Content of Resin Composition | % by Mass | 50 | | 50 | | 0 | |
| MFR(230°C, 2.16 kg) | g/10 min | 65 | | 92 | | 15 | |

(continued)

| | | | Comparative Example 23 | | Comparative Example 24 | | Comparative Example 25 | |
|---|---|---|---|---|---|---|---|---|
| | | | Part(s) | % | Part(s) | % | Part(s) | % |
| Hardness | Type A | 22°C (0 sec) | 60 | | 58 | | 11 | |
| | | Difference from Pellet (A) | - | | -2 | | - | |
| | | Rate of Change with respect to Pellet (%) | - | | 3.3 | | - | |
| | | 22°C (15 sec) | 53 | | 51 | | 7.7 | |
| | | Difference from Pellet (A) | - | | -2 | | - | |
| | | Rate of Change with respect to Pellet (%) | - | | 3.8 | | - | |
| Tensile Elongation | | % | 750 | | 500 | | 1500 | |
| | | Difference from Pellet (MPa) | - | | 250 | | - | |
| | | Rate of Change with respect to Pellet (%) | - | | 33 | | - | |
| Compression Set (70°C × 22 h) | | % | 61 | | 75 | | 35 | |
| | | Difference from Pellet (MPa) | - | | 14 | | - | |
| | | Rate of Change with respect to Pellet (%) | - | | 23 | | - | |
| Compression Set (100°C × 22 h) | | % | 70 | | 88 | | - | |
| | | Difference from Pellet (MPa) | - | | 18 | | - | |
| | | Rate of Change with respect to Pellet (%) | - | | 26 | | - | |
| Odor | | | 2 | | 3 | | 1 | |
| Oil Bleeding | | | 3 | | 3 | | 1 | |
| Coloration | | | 3 | | 3 | | 1 | |

Table 12

| | | Example 55 | | Example 56 | | Example 57 | | Example 58 | | Example 59 | | Comparative Example 26 | |
|---|---|---|---|---|---|---|---|---|---|---|---|---|---|
| | | Part(s) | % | Part(s) | % | Part(s) | % | Part(s) | % | Part(s) | % | Part(s) | % |
| Block Copolymer (I) | (P-1) | 100 | 11.1 | 100 | 11.1 | 100 | 11.1 | 100 | 11.1 | 100 | 11.1 | 100 | 11.1 |
| | (Q-1) | 0 | 0.0 | 0 | 0.0 | 0 | 0.0 | 0 | 0.0 | 0 | 0.0 | 0 | 0.0 |
| Plasticizer (II) | Plasticizer B | 800 | 88.9 | 720 | 80.0 | 560 | 62.2 | 400 | 44.4 | 240 | 26.7 | 0 | 0.0 |
| | Plasticizer J | 0 | 0.0 | 80 | 8.9 | 240 | 26.7 | 400 | 44.4 | 560 | 62.2 | 800 | 88.9 |
| Resin Composition | | 900 | 100.0 | 900 | 100.0 | 900 | 100.0 | 900 | 100.0 | 900 | 100.0 | 900 | 100.0 |
| Biobased Content of Resin Composition | % by Mass | 89 | | 80 | | 62 | | 44 | | 27 | | 0 | |
| Compressive Stress (22°C) | MPa | 0.034 | | 0.035 | | 0.035 | | 0.035 | | 0.036 | | 0.038 | |
| Hardness (23°C) | TypeC | 2 | | 2 | | 2 | | 2 | | 2 | | 2 | |
| Hardness (-20°C) | TypeC | 2 | | 2 | | 2 | | 3 | | 5 | | 11 | |
| Hardness Change | | 0 | | 0 | | 0 | | 1 | | 3 | | 9 | |

Table 12 (Continued)

| | | Example 60 | | Example 61 | | Example 62 | | Example 63 | | Example 64 | | Comparative Example 27 | | Example 65 | |
|---|---|---|---|---|---|---|---|---|---|---|---|---|---|---|---|
| | | Part(s) | % | Part(s) | % | Part(s) | % | Part(s) | % | Part(s) | % | Part(s) | % | Part(s) | % |
| Block Copolymer (I) | (P-1) | 100 | 6.3 | 100 | 6.3 | 100 | 6.3 | 100 | 6.3 | 100 | 6.3 | 100 | 6.3 | 0 | 0.0 |
| | (Q-1) | 0 | 0.0 | 0 | 0.0 | 0 | 0.0 | 0 | 0.0 | 0 | 0.0 | 0 | 0.0 | 100 | 11.1 |
| Plasticizer (II) | Plasticizer B | 1500 | 93.8 | 1350 | 84.4 | 1050 | 65.6 | 750 | 46.9 | 450 | 28.1 | 0 | 0.0 | 800 | 88.9 |
| | Plasticizer J | 0 | 0 | 150 | 9.4 | 450 | 28.1 | 750 | 46.9 | 1050 | 65.6 | 1500 | 93.8 | 0 | 0.0 |
| Resin Composition | | 1600 | 100.0 | 1600 | 100.0 | 1600 | 100 | 1600 | 100.0 | 1600 | 100.0 | 1600 | 100.0 | 900 | 100 |
| Biobased Content of Resin Composition | % by Mass | 94 | | 84 | | 66 | | 47 | | 28 | | 0 | | 0 | |
| Compressive Stress (22°C) | MPa | 0.010 | | 0.011 | | 0.011 | | 0.011 | | 0.012 | | 0.014 | | 0.027 | |
| Hardness (23°C) | TypeC | 0 | | 0 | | 0 | | 0 | | 0 | | 0 | | 2 | |
| Hardness (-20°C) | TypeC | 1 | | 1 | | 1 | | 1 | | 1 | | 6 | | 8 | |
| Hardness Change | | 1 | | 1 | | 1 | | 1 | | 1 | | 6 | | 6 | |

Table 13

| | | Example 66 | | Comparative Example 28 | |
|---|---|---|---|---|---|
| | | Part(s) | % | Part(s) | % |
| Block Copolymer (I) | (P-5) | 100 | 10.0 | 100 | 10.0 |
| Plasticizer (II) | Plasticizer B | 900 | 90.0 | 0 | 0.0 |
| | Plasticizer I | 0 | 0.0 | 900 | 90.0 |
| Resin Composition | | 1000 | 100.0 | 1000 | 100.0 |
| Biobased Content of Resin Composition | % by Mass | 90 | | 0 | |
| Dropping Point | °C | 225 | | 172 | |
| 1 $s^{-1}$ Viscosity | mPa·s | 45500 | | 87700 | |
| 6 $s^{-1}$ Viscosity | mPa·s | 13900 | | 32400 | |
| 50 $s^{-1}$ Viscosity | mPa·s | 4300 | | 13100 | |
| Viscosity Ratio [1 $s^{-1}$ Viscosity/50 $s^{-1}$ Viscosity] | | 10.5 | | 6.7 | |
| Oil Separation Degree at 100°C | % | <0.1 | | <0.1 | |
| Worked Penetration | - | 384 | | 381 | |

Note that each notation in Tables 3-1 to 13 is as follows.

· "Part(s)" in the resin composition means part(s) by mass in the resin composition.
· "%" in the resin composition means % by mass in the resin composition.

From Tables 3-1 to 7, it can be seen that each of the resin compositions and the molded bodies of Examples contains a material capable of reducing an environmental load, and resin compositions and molded bodies having excellent moldability were obtained.
From Table 8, it can be seen that each of the films of Examples has a high biobased content, a small orientation of the film (a small difference in physical properties between the MD direction and the TD direction), and a small ratio of the stress difference obtained by subtracting the second going stress at the time from 0% to 200% elongation from the first going stress at the time from 0% to 200% elongation. Accordingly, the film of Examples can be suitably used as a stretchable film, and for example, in an adult diaper or the like in which the film is used on the entire surface, it can be assumed that a good fitting feeling can be obtained due to a small stress difference between the vertical and horizontal directions.
From Table 10-1, when Example 35 and Example 36, Example 39 and Example 40, Example 41 and Example 42, Example 43 and Example 44, Example 45 and Example 46, Example 47 and Example 48, and Example 49 and Example 50, which have the same components but are different in production method, are compared with each other, it can be seen that the hardness and the compression set are equivalent.
In addition, when Examples 36 to 38 in which the value of MFR of the polyolefin-based resin dry-blended at an equivalent blending ratio was changed are compared, it can be seen that the hardness and the compression set are equivalent.
From Table 10-2, when Example 51 and Example 52, and Example 53 and Example 54, which have the same components and different production methods are compared with each other, it can be seen that the hardness and the compression set are equivalent.
From Table 10-1 and Table 11, it can be seen that when Example 35 and Comparative Example 23, and Example 36 and Comparative Example 24 in which only the plasticizer (II) used is different are compared with each other, Examples are excellent in tensile elongation, odor, coloration, and oil bleeding. In addition, when Example 49 and Comparative Example 25 in which only the plasticizer (II) used is different are compared with each other, it can be seen that Example is excellent in the biobased content and the compression set.
It was found that each of the resin compositions and the molded bodies of Examples in Table 12 becomes a composition having high flexibility and durability in a wide temperature range.
As can be seen from Table 13, Example 66 had a high biobased content, a high dropping point, a high thixotropy (viscosity ratio), and a low viscosity compared with Comparative Example 28. In addition, as can be seen from Table 13, Example 66 and Comparative Example 28 had the equivalent oil separation degree and worked penetration.

Industrial Applicability

The resin composition of the present invention contains a material capable of reducing an environmental load, and can be expected to have excellent moldability. Therefore, the resin composition and the molded body of the present invention can be suitably used as a molded product such as a sheet, a film, a tube, a hose, or a belt.

## Claims

1. A resin composition comprising: a block copolymer (I) including a polymer block (a1) containing a structural unit derived from an aromatic vinyl compound and a polymer block (a2) containing a structural unit derived from a conjugated diene compound, and

   a plasticizer (II) derived from biomass that does not have a carboxy group,
   wherein the plasticizer (II) has a biobased content of 70% by mass or more.

2. The resin composition according to Claim 1, wherein the plasticizer (II) has a kinematic viscosity at 40°C of 100.0 cSt or less.

3. The resin composition according to Claim 1 or 2, wherein the plasticizer (II) is at least one of a compound represented by the following general formula (1) and a compound represented by the following general formula (2):

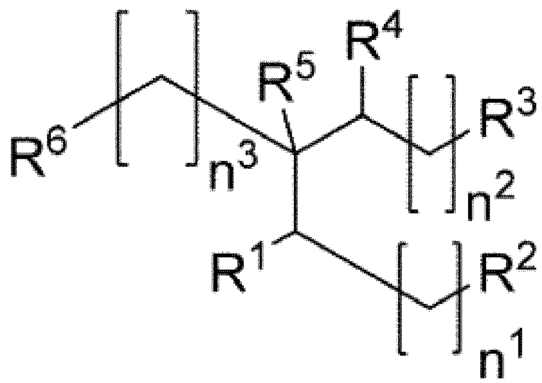

· · · General Formula (1)

wherein, in the general formula (1), $n^1$ to $n^3$ are each independently 1 or 3, $R^1$ to $R^6$ are each independently hydrogen atoms or unsubstituted hydrocarbon groups, the total number of carbon atoms of $R^1$ and $R^2$ is 14, the total number of carbon atoms of $R^3$ and $R^4$ is 14, the total number of carbon atoms of $R^5$ and $R^6$ is 14, and $R^1$ to $R^6$ may have a branched structure; and

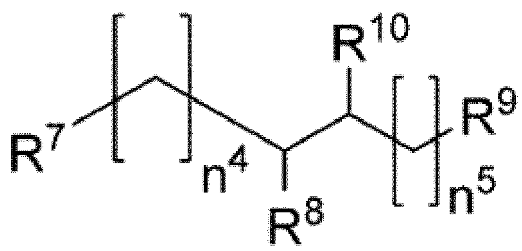

· · · General Formula (2)

wherein, in the general formula (2), $n^4$ and $n^5$ are each independently 1 or 3, $R^7$ to $R^{10}$ are each independently hydrogen atoms or unsubstituted hydrocarbon groups, the total number of carbon atoms of $R^7$ and $R^8$ is 14, the total number of carbon atoms of $R^9$ and $R^{10}$ is 14, and $R^7$ to $R^{10}$ may have a branched structure.

**4.** The resin composition according to any one of Claims 1 to 3, wherein the aromatic vinyl compound in the polymer block (a1) in the block copolymer (I) is at least one selected from the group consisting of styrene, α-methylstyrene, and 4-methylstyrene.

**5.** The resin composition according to any one of Claims 1 to 4, wherein a content of the aromatic vinyl compound in the polymer block (a1) in the block copolymer (I) is 1 to 65% by mass.

**6.** The resin composition according to any one of Claims 1 to 5, wherein a weight average molecular weight of the block copolymer (I) determined by gel permeation chromatography in terms of standard polystyrene is 50,000 to 600,000.

**7.** The resin composition according to any one of Claims 1 to 6, wherein a vinyl bonding amount in the polymer block (a2) of the block copolymer (I) is 1.0 to 40.0 mol%.

**8.** The resin composition according to any one of Claims 1 to 7, wherein a hydrogenation rate of a carbon-carbon double bond in a structural unit derived from a conjugated diene compound in the block copolymer (I) is 5.0 mol% or more.

**9.** The resin composition according to Claim 8, wherein a hydrogenation rate of a carbon-carbon double bond in a structural unit derived from a conjugated diene compound in the block copolymer (I) is 30.0 mol% or more.

**10.** The resin composition according to Claim 9, wherein a hydrogenation rate of a carbon-carbon double bond in a structural unit derived from a conjugated diene compound in the block copolymer (I) is 70.0 mol% or more.

**11.** The resin composition according to any one of Claims 1 to 10, comprising 1 to 1500 parts by mass of the plasticizer (II) with respect to 100 parts by mass of the block copolymer (I).

**12.** The resin composition according to any one of Claims 1 to 11, comprising 1 to 200 parts by mass of a polyolefin-based resin (III) with respect to 100 parts by mass of the block copolymer (I).

**13.** The resin composition according to Claim 12, wherein the polyolefin-based resin (III) includes polyethylene and/or polypropylene.

**14.** The resin composition according to Claim 12, wherein the polyolefin-based resin (III) is polypropylene.

**15.** The resin composition according to Claim 12, wherein the polyolefin-based resin (III) is polyethylene.

**16.** The resin composition according to any one of Claims 1 to 15, comprising 1 to 300 parts by mass of a tackifier (IV) with respect to 100 parts by mass of the block copolymer (I).

**17.** The resin composition according to any one of Claims 1 to 16, wherein the resin composition has a biobased content of 15% by mass or more.

**18.** A molded body obtained by using the resin composition according to any one of Claims 1 to 17.

[Fig. 1]

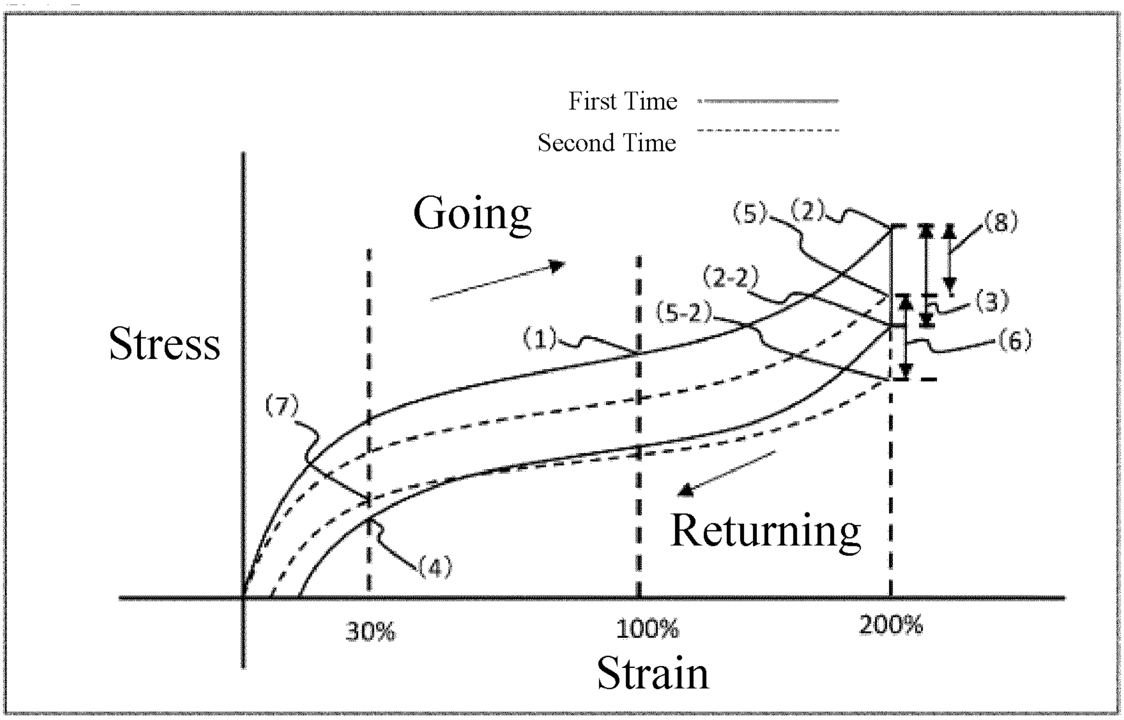
First Time
Second Time
Going
Stress
Returning
Strain
30%
100%
200%
(1)
(2)
(2-2)
(3)
(4)
(5)
(5-2)
(6)
(7)
(8)

**INTERNATIONAL SEARCH REPORT**

International application No.
**PCT/JP2023/027887**

**A. CLASSIFICATION OF SUBJECT MATTER**

***C08L 53/02***(2006.01)i; ***C08K 5/01***(2006.01)i; ***C08L 23/00***(2006.01)i; ***C08L 23/06***(2006.01)i; ***C08L 23/12***(2006.01)i; ***C08L 101/12***(2006.01)i
FI: C08L53/02; C08K5/01; C08L23/00; C08L23/06; C08L23/12; C08L101/12

According to International Patent Classification (IPC) or to both national classification and IPC

**B. FIELDS SEARCHED**

Minimum documentation searched (classification system followed by classification symbols)

C08L53/02; C08K5/01; C08L23/00; C08L23/06; C08L23/12; C08L101/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2022/163787 A1 (KURARAY CO) 04 August 2022 (2022-08-04) claims, paragraphs [0085]-[0086], [0103], examples | 1-2, 4-18 |
| A | entire text | 3 |
| X | JP 55-92306 A (NITTO ELECTRIC IND CO) 12 July 1980 (1980-07-12) claims, p. 3, lower right column, line 19 to p. 4, upper left column, line 7, examples | 1-2, 4-12, 16-18 |
| A | entire text | 3, 13-15 |
| E, X | WO 2023/145927 A1 (MCPP INNOVATION LLC) 03 August 2023 (2023-08-03) examples | 1-15, 17-18 |
| E, A | entire text | 16 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 August 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/027887**

| Patent document cited in search report | Publication date (day/month/year) | Patent family member(s) | Publication date (day/month/year) |
| --- | --- | --- | --- |
| WO 2022/163787 A1 | 04 August 2022 | TW 202248258 A | |
| JP 55-92306 A | 12 July 1980 | (Family: none) | |
| WO 2023/145927 A1 | 03 August 2023 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019529688 A
- JP 2012502135 A
- JP 2012502136 A
- JP 2011132298 A